(19) Europäisches Patentamt
European Patent Office
Office européen des brevets

(11) **EP 4 572 499 A1**

(12) **EUROPEAN PATENT APPLICATION**
published in accordance with Art. 153(4) EPC

(43) Date of publication:
**18.06.2025 Bulletin 2025/25**

(21) Application number: **23870228.6**

(22) Date of filing: **06.09.2023**

(51) International Patent Classification (IPC):
*H04W 72/40* (2023.01)

(52) Cooperative Patent Classification (CPC):
**H04L 5/00; H04W 72/0446; H04W 72/0453;
H04W 72/20; H04W 72/25; H04W 72/40**

(86) International application number:
**PCT/CN2023/117292**

(87) International publication number:
**WO 2024/066989 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 30.09.2022  CN 202211214201
12.05.2023  CN 202310540923

(71) Applicant: **Huawei Technologies Co., Ltd.
Shenzhen, Guangdong 518129 (CN)**

(72) Inventors:
• LI, Junyao
  Shenzhen, Guangdong 518129 (CN)
• YANG, Fan
  Shenzhen, Guangdong 518129 (CN)
• ZHANG, Tianhong
  Shenzhen, Guangdong 518129 (CN)
• HUANG, Haining
  Shenzhen, Guangdong 518129 (CN)

(74) Representative: **Pfenning, Meinig & Partner mbB
Patent- und Rechtsanwälte
Theresienhöhe 11a
80339 München (DE)**

(54) **SIDELINK COMMUNICATION METHOD AND APPARATUS**

(57)    A sidelink communication method and an apparatus are disclosed, and are applicable to fields such as V2X, vehicle-to-everything, assisted driving, or autonomous driving. The communication method includes: A first terminal device determines a resource pool corresponding to each of at least two carriers in a first carrier set, where a sidelink synchronization signal block S-SSB resource is configured on each carrier in the first carrier set, and any resource in a resource pool corresponding to any carrier in the first carrier set does not overlap, in time domain, an S-SSB resource on any carrier in a second carrier set, where the second carrier set includes at least one carrier in the first carrier set, or a resource pool corresponding to any carrier in the first carrier set does not include an S-SSB resource on the carrier; and the first terminal device selects at least one first resource from the resource pool to send data. According to the foregoing method, a terminal device performs data and S-SSB transmission, to reduce a conflict between an S-SSB and data on a multi-carrier.

200

First terminal device

Second terminal device

S210: Determine a resource pool corresponding to each of at least two carriers in a first carrier set

S220: Send first indication information

S230: Select a first resource from the resource pool

S240: Send data on the first resource

FIG. 8

EP 4 572 499 A1

## Description

This application claims priorities to Chinese Invention Patent Application No. 202211214201.2, filed on September 30, 2022 and entitled "SIDELINK COMMUNICATION METHOD AND APPARATUS", and to Chinese Invention Patent Application No. 202310540923.5, filed on May 12, 2023 and entitled "SIDELINK COMMUNICATION METHOD AND APPARATUS", both of which are incorporated herein by reference in their entireties.

## TECHNICAL FIELD

This application relates to the communication field, and more specifically, to a sidelink communication method and an apparatus.

## BACKGROUND

In long term evolution-vehicle (long term evolution-vehicle, LTE-V) carrier aggregation (carrier aggregation, CA), time domain locations and numbers of sidelink synchronization signal and physical sidelink broadcast channel blocks (S-SSBs) of all component carriers (component carriers, CCs) are restricted to be consistent. To be specific, when an S-SSB slot is excluded from a resource pool of each CC, a same number of subframes at a same location are excluded. Such a restriction supports, using LTE-V, implementation of only a subcarrier spacing (SubCarrier Spacing, SCS) of 15 kHz. Because each subframe has a same length, alignment can be implemented. Therefore, only a subframe in which an S-SSB is located is excluded from a resource pool of each CC, to avoid interference between different CCs. However, new radio vehicle (new radio vehicle, NR-V) supports a plurality of different SCSs, and correspondingly has different slot lengths. CA in an NR-V system is applicable to different requirement scenarios, and SCSs of all CCs may be different. Therefore, a manner in which synchronization resources of all CCs are restricted to be aligned in LTE-V is not applicable to NR-V CA. When synchronization resources of different CCs cannot be aligned in time domain, a conflict between a synchronization signal and data transmission may occur.

## SUMMARY

This application provides a sidelink communication method and an apparatus. A terminal device configures a resource pool and selects a resource, to reduce a possible conflict between an S-SSB and data during multi-carrier transmission.

According to a first aspect, a sidelink information transmission method is provided. The method includes: A first terminal device determines a resource pool corresponding to each of at least two carriers in a first carrier set, where a sidelink synchronization signal block S-SSB resource is configured on each carrier in the first carrier set, the S-SSB resource is for sending and/or receiving an S-SSB, and any resource in a resource pool corresponding to any carrier in the first carrier set does not overlap, in time domain, an S-SSB resource on any carrier in a second carrier set, where the second carrier set includes at least one carrier in the first carrier set, or a resource pool corresponding to any carrier in the first carrier set does not include an S-SSB resource on the carrier; and the first terminal device selects at least one first resource from the resource pool to send data.

The first terminal device includes a device that can perform inter-device communication.

Optionally, the inter-device communication includes vehicle to everything V2X communication.

The resource pool may be a resource for sidelink (sidelink) control information and data transmission. Optionally, the resource pool may be further for transmitting a physical sidelink feedback channel PSFCH, a reference signal, and the like.

Optionally, a resource in the resource pool includes at least one of a time domain resource, a frequency domain resource, and a time-frequency domain resource.

Optionally, resource pools corresponding to all carriers may be different.

Optionally, resources of a plurality of carriers may be configured in one resource pool. For example, one resource pool includes resources on a plurality of carriers. For example, the resource may include a resource block RB.

For another example, on a sidelink, a resource may include a sub-channel including a plurality of contiguous RBs, where the sub-channel may be a minimum unit for scheduling/data transmission on the sidelink.

The S-SSB includes a sidelink primary synchronization signal S-PSS, a sidelink secondary synchronization signal S-SSS, and a physical secondary broadcast channel PSBCH.

The first carrier set may be a carrier set for sidelink carrier aggregation CA.

Optionally, subcarrier spacings SCSs of component carriers CCs in the first carrier set may be the same or may be different.

Optionally, no limitation may be imposed on the first carrier set for the first terminal device. To be specific, the first terminal directly determines the resource pool corresponding to each of the at least two carriers.

Optionally, each carrier in the first carrier set may be used for transmission, or a resource on which carrier (or which carriers) to be used for transmission may be determined according to a rule. This is not limited in this application.

The second carrier set is a general description for ease of describing the at least one carrier in the first carrier set. In the solution of this application, the second carrier set may alternatively be the at least one carrier in the first carrier set, or may alternatively be at least one carrier in the at least two carriers.

The configuration may be (pre)configuration, and is performed based on at least one of an RRC configuration, a DCI indication, an SCI indication, a MAC CE indication, or a predefinition.

Optionally, configuring a resource pool further includes configuring a time-frequency resource for sending or receiving a sidelink synchronization signal block S-SSB on each carrier.

Optionally, time-frequency resources of S-SSBs may be configured on all CCs in the CA, or time-frequency resources of S-SSBs may be configured on some CCs in the CA.

That the first terminal device selects a resource includes: The UE performs selection based on an indication of a base station or according to a specific rule.

The data may be a physical sidelink control channel PSSCH.

Optionally, the data may further include a physical sidelink control channel PSCCH corresponding to the PSSCH.

Optionally, the data may carry a data packet, a medium access control-control element MAC CE, and radio resource control PC5 RRC. This is not limited in this application.

In this embodiment of this application, the first terminal device may determine an S-SSB resource on each carrier and a resource in a resource pool, and select, from the resource pool, a resource for sending data, so that a conflict between an S-SSB and data between carriers can be reduced.

With reference to the first aspect, in some implementations of the first aspect, any resource in the resource pool corresponding to any carrier in the first carrier set does not overlap, in time domain, a first resource on any carrier in the second carrier set, where the second carrier set includes all carriers in the first carrier set. The first terminal device selects at least one first resource from the resource pool to send data.

Optionally, SCSs corresponding to different carriers may be configured to be the same.

Further, optionally, time-domain locations and numbers of S-SSB resources on different carriers are the same.

Therefore, according to the solution of this application, a conflict between an S-SSB and data between carriers can be reduced.

With reference to the first aspect, in some implementations of the first aspect, any resource in the resource pool corresponding to any carrier in the first carrier set does not overlap, in time domain, a first resource on any carrier in the second carrier set, where the second carrier set includes at least one carrier whose subcarrier spacing SCS is a first SCS in the first carrier set. The first terminal device selects at least one resource from at least one resource pool to send data.

The first SCS may be (pre)configured.

Optionally, the first terminal sends and/or receives an S-SSB only on the at least one carrier whose SCS is the first SCS. In other words, the first terminal device does not send and/or receive an S-SSB on a carrier other than the at least one carrier whose SCS is the first SCS.

Optionally, the first terminal device is prohibited from sending and/or receiving an S-SSB on a carrier, in the first carrier set, other than the at least one carrier whose SCS is the first SCS.

Therefore, according to the solution of this application, a conflict between an S-SSB and data between carriers is reduced, and a resource waste caused by excluding all S-SSB slots on all carriers can be reduced.

With reference to the first aspect, in some implementations of the first aspect, any resource in the resource pool corresponding to any carrier in the first carrier set does not overlap, in time domain, a first resource on any carrier in the second carrier set, where the second carrier set includes at least one carrier with a smallest SCS in the first carrier set. The first terminal device selects at least one resource from at least one resource pool to send data.

Optionally, a start location and an end location of an S-SSB resource on each carrier in the first carrier set in time domain are within a first range, where the first range is a time domain range corresponding to an S-SSB resource on the at least one carrier with the smallest SCS in the first carrier set.

Optionally, start locations of S-SSB resources on all carriers in the first carrier set are aligned in time domain. To be specific, absolute time offsets (in units of second or millisecond) of first S-SSB resources on all the carriers in the first carrier set relative to a system frame number SFN or a direct frame number DFN are the same. In other words, start locations of slots in which the first S-SSB resources on all the carriers in the first carrier set are located are aligned.

Optionally, end locations of S-SSB resources on all carriers in the first carrier set are aligned in time domain. To be specific, absolute time offsets (in units of second or millisecond) of last S-SSB resources on all the carriers in the first carrier set relative to a system frame number SFN or a direct frame number DFN are the same. In other words, end locations of slots in which the first S-SSB resources on all the carriers in the first carrier set are located are aligned.

Therefore, according to the solution of this application, a conflict between an S-SSB and data between carriers is reduced, and a resource waste caused by excluding all S-SSB slots on all carriers can be reduced.

It should be understood that any resource in the resource pool in the foregoing several implementations is a resource that can be selected by the first terminal device. In other words, no conflict occurs between an S-SSB and data on any resources in the resource pool.

With reference to the first aspect, in some implementations of the first aspect, a resource pool corresponding to any carrier in the first carrier set does not include an S-SSB resource on the carrier; and the first terminal device selects at least one first resource from the resource pool to send data.

It should be understood that, in this case, a resource pool of each carrier excludes only an S-SSB resource on the carrier from the resource pool.

Optionally, the method includes: the first resource and a second resource do not overlap in time domain, where the second resource includes a resource on which the first terminal device receives an S-SSB; and/or the first resource and a third resource do not overlap in time domain, where a sum of a number of carriers corresponding to the third resource and a number of carriers for simultaneously sending data and an S-SSB is greater than a maximum number of concurrently-transmitting carriers supported by the first terminal device.

Optionally, the method further includes: The first terminal device determines a fourth resource and/or a fifth resource based on first indication information, where the fourth resource is a resource used by a second terminal to send data and/or an S-SSB, the fifth resource is a resource used by the second terminal device to receive data and/or an S-SSB, and a sum of a number of carriers corresponding to the fifth resource and a number of carriers used by the second terminal device to simultaneously receive data and an S-SSB is greater than a maximum number of concurrently-receiving carriers of the second terminal device, where the first resource and the fourth resource do not overlap in time domain; and/or the first resource and the fifth resource do not overlap in time domain.

In this embodiment of this application, non-overlapping may be embedded in a resource selection process and/or a resource exclusion process.

For example, the first terminal device excludes an overlapping candidate resource when performing resource exclusion at a physical layer.

The maximum number of concurrently-transmitting carriers and the maximum number of concurrently-receiving carriers are determined by a capability of a terminal device.

Optionally, the maximum number of concurrently-transmitting carriers may be a maximum transmitting capability, a transmitting capability limitation, a maximum concurrently-transmitting carrier number, a maximum number of concurrently-transmitted data packets, a maximum number of concurrently-transmitted services, a maximum number of concurrently-transmitted streams, or a maximum number of concurrently-transmitting links. Correspondingly, resource selection may also be performed based on the number of data packets, the number of services, the number of streams, or the number of links described above.

Optionally, the maximum number of concurrently-receiving carriers may be a maximum receiving capability, a receiving capability limitation, a maximum concurrently-receiving carrier number, a maximum number of concurrently-received data packets, a maximum number of concurrently-received services, a maximum number of concurrently-received streams, or a maximum number of concurrently-receiving links. Correspondingly, resource selection may also be performed based on the number of data packets, the number of services, the number of streams, or the number of links described above.

The foregoing descriptions of the maximum number of concurrently-transmitting carriers and the maximum number of concurrently-receiving carriers are applicable to subsequent embodiments. Details are not described below.

Therefore, according to the solution of this application, a conflict between an S-SSB and data between carriers is reduced, and a resource waste caused by excluding all S-SSB slots on all carriers can be reduced.

According to a second aspect, a sidelink information transmission method is provided. The method includes: A second terminal device receives data on a first resource, where the first resource is a resource for sending data by a first terminal device.

With reference to the second aspect, in some implementations of the second aspect, the second terminal device determines a fourth resource and/or a fifth resource, where the fourth resource is a resource used by the second terminal to send data and/or an S-SSB, the fifth resource is a resource used by the second terminal device to receive data and/or an S-SSB, and a sum of a number of carriers corresponding to the fifth resource and a number of carriers used by the second terminal device to simultaneously receive data and an S-SSB is greater than a maximum number of concurrently-receiving carriers of the second terminal device. The second terminal device sends first indication information, where the first indication information indicates locations/a location of the fourth resource and/or the fifth resource, and the first resource does not overlap the fourth resource and/or the fifth resource in time domain.

Optionally, the second terminal device may be a terminal device that supports only a single carrier. A third terminal device sends transmissions to different terminal devices on a plurality of carriers, and the second terminal device may receive the transmissions still on the single carrier supported by the second terminal device.

The second terminal device may send the first indication information through any one of multicast (multicast), broadcast (broadcast), and unicast (unicast).

During unicast, the first indication information may be sent by using at least one of first-stage SCI, second-stage SCI, PC5-RRC, or a MAC CE.

In this embodiment of this application, before the first terminal device selects a resource, the second terminal device may specifically indicate, by sending the first indication information, a specific location of a resource used by the second terminal device, so that the first terminal device can select a non-overlapping resource when selecting a resource to send data, thereby ensuring that no transmission conflict occurs.

According to a third aspect, a sidelink information transmission method is provided. The method includes: A first terminal device determines a resource pool corresponding to each of at least two carriers in a first carrier set, where a sidelink synchronization signal block S-SSB resource is configured on each carrier in the first carrier set, the S-SSB resource is for sending and/or receiving an S-SSB, and any resource in a resource pool corresponding to any carrier in the first carrier set does not overlap, in time domain, an S-SSB resource on any carrier in a second carrier set, where the second carrier set includes at least one carrier in the first carrier set, or a resource pool corresponding to any carrier in the first carrier set does not include an S-SSB resource on the carrier; and the first terminal device selects at least one first resource from the resource pool to send data.

The first terminal device includes a device that can perform inter-device communication.

Optionally, the inter-device communication includes vehicle to everything V2X communication.

The resource pool may be a resource for sidelink (sidelink) control information and data transmission. Optionally, the resource pool may be further for transmitting a physical sidelink feedback channel PSFCH, a reference signal, and the like.

Optionally, a resource in the resource pool includes at least one of a time domain resource, a frequency domain resource, and a time-frequency domain resource.

Optionally, resource pools corresponding to all carriers may be different.

Optionally, resources of a plurality of carriers may be configured in one resource pool. For example, one resource pool includes resources on a plurality of carriers.

For example, the resource may include a resource block RB.

For another example, on a sidelink, a resource may include a sub-channel including a plurality of contiguous RBs, where the sub-channel may be a minimum unit for scheduling/data transmission on the sidelink.

The S-SSB includes a sidelink primary synchronization signal S-PSS, a sidelink secondary synchronization signal S-SSS, and a physical secondary broadcast channel PSBCH.

The first carrier set may be a carrier set for sidelink carrier aggregation CA.

Optionally, subcarrier spacings SCSs of component carriers CCs in the carrier set may be the same or may be different.

Optionally, no limitation may be imposed on the first carrier set for the first terminal device. To be specific, the first terminal directly determines the resource pool corresponding to each of the at least two carriers.

The second carrier set is a general description for ease of describing the at least one carrier in the first carrier set. In the solution of this application, the second carrier set may alternatively be the at least one carrier in the first carrier set, or may alternatively be at least one carrier in the at least two carriers.

The configuration may be (pre)configuration, and is performed based on at least one of an RRC configuration, a DCI indication, an SCI indication, a MAC CE indication, or a predefinition.

Optionally, configuring a resource pool further includes configuring a time-frequency resource for sending or receiving a sidelink synchronization signal block S-SSB on each carrier.

Optionally, time-frequency resources of S-SSBs may be configured on all CCs in the CA, or time-frequency resources of S-SSBs may be configured on some CCs in the CA.

That the first terminal device selects a resource includes: The first terminal device performs selection based on an indication of a base station or according to a specific rule.

The data may be a physical sidelink control channel PSSCH.

Optionally, the data may further include a physical sidelink control channel PSCCH corresponding to the PSSCH.

Optionally, the data may carry a data packet, a medium access control-control element MAC CE, and radio resource control PC5 RRC. This is not limited in this application.

In this embodiment of this application, the first terminal device may determine an S-SSB resource on each carrier and a resource in a resource pool, and select, from the resource pool, a resource for sending data, so that a conflict between an S-SSB and data between carriers can be reduced.

With reference to the third aspect, in some implementations of the third aspect, any resource in the resource pool corresponding to any carrier in the first carrier set does not overlap, in time domain, a first resource on any carrier in the second carrier set, where the second carrier set includes all carriers in the first carrier set. The first terminal device selects at least one first resource from the resource pool to send data.

Optionally, SCSs corresponding to different component carriers may be configured to be the same.

Further, optionally, time-domain locations and numbers of S-SSB resources on different carriers are the same.

Therefore, according to the solution of this application, a conflict between an S-SSB and data between carriers can be reduced.

With reference to the third aspect, in some implementations of the third aspect, any resource in the resource pool corresponding to any carrier in the first carrier set does not overlap, in time domain, a first resource on any carrier in the second carrier set, where the second carrier set includes at least one carrier whose subcarrier spacing SCS is a first SCS in the first carrier set. The first terminal device selects at least one resource from at least one resource pool to send data.

The first SCS may be (pre)configured.

Optionally, the first terminal sends and/or receives an S-SSB only on the at least one carrier whose SCS is the first SCS. In other words, the first terminal device does not send and/or receive an S-SSB on a carrier other than the at least one carrier whose SCS is the first SCS.

Optionally, the first terminal device is prohibited from sending and/or receiving an S-SSB on a carrier, in the first carrier set, other than the at least one carrier whose SCS is the first SCS.

Therefore, according to the solution of this application, a conflict between an S-SSB and data between carriers is reduced, and a resource waste caused by excluding all S-SSB slots on all carriers can be reduced.

With reference to the third aspect, in some implementations of the third aspect, any resource in the resource pool corresponding to any carrier in the first carrier set does not overlap, in time domain, a first resource on any carrier in the second carrier set, where the second carrier set includes at least one carrier with a smallest SCS in the first carrier set. The first terminal device selects at least one resource from at least one resource pool to send data.

Optionally, a start location and an end location of an S-SSB resource on each carrier in the first carrier set in time domain are within a first range, where the first range is a time domain range corresponding to an S-SSB resource on the at least one carrier with the smallest SCS in the first carrier set.

Optionally, start locations of S-SSB resources on all carriers in the first carrier set are aligned in time domain. To be specific, absolute time offsets (in units of second or millisecond) of first S-SSB resources on all the carriers in the first carrier set relative to a system frame number SFN or a direct frame number DFN are the same. In other words, start locations of slots in which the first S-SSB resources on all the carriers in the first carrier set are located are aligned.

Optionally, end locations of S-SSB resources on all carriers in the first carrier set are aligned in time domain. To be specific, absolute time offsets (in units of second or millisecond) of last S-SSB resources on all the carriers in the first carrier set relative to a system frame number SFN or a direct frame number DFN are the same. In other words, end locations of slots in which the first S-SSB resources on all the carriers in the first carrier set are located are aligned.

Therefore, according to the solution of this application, a conflict between an S-SSB and data between carriers is reduced, and a resource waste caused by excluding all S-SSB slots on all carriers can be reduced.

It should be understood that any resource in the resource pool in the foregoing several implementations is a resource that can be selected by the first terminal device. In other words, no conflict occurs between an S-SSB and data on any resources in the resource pool.

With reference to the third aspect, in some implementations of the third aspect, a resource pool corresponding to any carrier in the first carrier set does not include an S-SSB resource on the carrier; and the first terminal device selects at least one first resource from the resource pool to send data.

It should be understood that, in this case, a resource pool of each carrier excludes only an S-SSB resource on the carrier from the resource pool.

Optionally, the method includes: the first resource and a second resource do not overlap in time domain, where the second resource includes a resource on which the first terminal device receives an S-SSB; and/or the first resource and a third resource do not overlap in time domain, where a sum of a number of carriers corresponding to the third resource and a number of carriers for simultaneously sending data and an S-SSB is greater than a maximum number of concurrently-transmitting carriers supported by the first terminal device.

Optionally, the method includes: The first terminal device sends first reservation information, where the first reservation information indicates a location of a sixth resource, and the first resource is a resource that is reserved by the first terminal device for sending data to a second terminal device.

Optionally, the method includes: The first terminal device re-selects at least one first resource from the resource pool based on conflict indication information, where the sixth resource and the first resource do not overlap in time domain; and the first terminal device sends data on the at least one re-selected first resource.

In this embodiment of this application, non-overlapping may be embedded in a resource selection process and/or a resource exclusion process.

For example, the first terminal device excludes an overlapping candidate resource when performing resource exclusion at a physical layer.

Therefore, according to the solution of this application, a conflict between an S-SSB and data between carriers is avoided, and a resource waste caused by excluding all S-SSB slots on all carriers can be reduced.

According to a fourth aspect, a sidelink information transmission method is provided. The method includes: A second terminal device receives data on a first resource, where the first resource is a resource for sending data by a first terminal device.

With reference to the fourth aspect, in some implementations of the fourth aspect, the second terminal device determines a fourth resource and/or a fifth resource, where the fourth resource is a resource used by the second terminal to send data and/or an S-SSB, the fifth resource is a resource used by the second terminal device to receive data and/or an S-SSB, and a sum of a number of carriers corresponding to the fifth resource and a number of carriers used by the second terminal device to simultaneously receive data and an S-SSB is greater than a maximum number of concurrently-receiving carriers of the second terminal device. The second terminal device receives first reservation information, where the first reservation information indicates a location of a sixth resource, and the sixth resource is a resource that is reserved by the first terminal device for sending data to the second terminal device. When the sixth resource overlaps the fourth resource and/or the fifth resource in time domain, the second terminal device sends conflict indication information, where the conflict indication information indicates the first terminal device to re-select a resource to send data to the second terminal device, and the first resource and the sixth resource do not overlap in time domain.

Optionally, the conflict indication may include a specific location of a conflict resource, or only one bit may indicate that a conflict occurs.

In this embodiment of this application, the first terminal device has selected a resource, and has reserved a resource. The second terminal device determines, based on resource reservation information, whether a conflict occurs, and notifies, by using the conflict indication information, the terminal device that a conflict occurs. The first terminal device re-selects a resource based on the conflict indication information, and ensures that the resource does not overlap the reserved resource during resource re-selection.

According to a fifth aspect, a sidelink information transmission method is provided. The method includes: A first terminal device determines a resource pool corresponding to each of at least two carriers in a first carrier set, where a sidelink synchronization signal block S-SSB resource is configured on each carrier in the first carrier set, the S-SSB resource is for sending and/or receiving an S-SSB; the first terminal device determines at least one seventh resource on at least one of the at least two carriers, where the seventh resource is for sending or receiving at least one piece of data; and when determining that the seventh resource overlaps the S-SSB resource in time domain, the first terminal device stops sending or receiving the at least one piece of data, and/or stops sending or receiving an S-SSB on the at least one carrier.

In this embodiment of this application, the first terminal device discards and selects transmission of an S-SSB and data, so that a problem of a conflict between an S-SSB and data between carriers can be resolved, and transmission of an important S-SSB and important data can be ensured.

With reference to the fifth aspect, in some implementations of the fifth aspect, when determining that the seventh resource and the S-SSB resource for S-SSB sending overlap in time domain, and that a sum of a number of carriers corresponding to the seventh resource and a number of carriers corresponding to the S-SSB resource for S-SSB sending is greater than a maximum number of concurrently-transmitting carriers of the first terminal device, the first terminal device stops sending the at least one piece of data, and/or stops sending the S-SSB on the at least one carrier.

Optionally, the method further includes: When determining that the seventh resource for data receiving and the S-SSB resource for S-SSB receiving overlap in time domain, and that a sum of a number of carriers corresponding to the seventh resource for data receiving and a number of carriers corresponding to the S-SSB resource for S-SSB receiving is greater than a maximum number of concurrently-receiving carriers of the first terminal device, the first terminal device stops sending or receiving the at least one piece of data, and/or stops sending or receiving the S-SSB on the at least one carrier.

Optionally, the method further includes: Until a number of carriers for sending or receiving the at least one piece of data and/or the at least one S-SSB is less than and/or equal to the maximum number of concurrently-transmitting carriers of the first terminal device.

Therefore, according to the solution of this application, a problem that a sending-sending conflict and a reception-reception conflict occur between an S-SSB and data between carriers can be resolved, and transmission of an important S-SSB and important data can be ensured.

With reference to the fifth aspect, in some implementations of the fifth aspect, a priority of each piece of data and a priority of an S-SSB on each carrier are determined; and based on the priority of each piece of data and the priority of the S-SSB on each carrier, sending or receiving the at least one piece of data is stopped, and/or sending or receiving the S-SSB on the at least one carrier is stopped.

The priority may be understood as a service priority, which may also be referred to as an L1 priority (L1 priority), a physical layer priority, a priority carried in SCI, a priority corresponding to a PSSCH associated with SCI, a transmission priority, a priority of sending a PSSCH, a priority of resource selection, a priority of a logical channel, or a highest-level priority of a logical channel.

Optionally, the method further includes: in ascending order of priority, stopping sending or receiving the at least one piece of data, and/or stopping sending or receiving the S-SSB on the at least one carrier.

Optionally, the method further includes: for the at least one piece of data and/or the S-SSB on the at least one carrier that have/has a same priority, preferentially stopping sending or receiving of the data.

Optionally, for the at least one piece of data and/or the S-SSB on the at least one carrier that have/has a same priority, sending or receiving of data and/or an S-SSB whose remaining packet delay budget remaining PDB is greater than and/or equal to a first threshold is preferentially stopped.

Optionally, for the at least one piece of data and/or an S-SSB on the at least one carrier with a same priority, sending or receiving of data and/or an S-SSB on a carrier with a smaller SCS is preferentially stopped.

Therefore, according to the solution of this application, a problem that a sending-sending conflict occurs between an S-SSB and data between carriers can be resolved, and transmission of an important S-SSB and important data can be ensured.

With reference to the fifth aspect, in some implementations of the fifth aspect, sending or receiving the S-SSB on the at least one carrier is stopped in ascending order of priorities until sending or receiving is stopped on all S-SSBs except an S-SSB with a highest priority; and then sending or receiving of data on the at least one carrier and/or the S-SSB with the highest priority is stopped in ascending order of priorities.

Optionally, sending or receiving the S-SSB on the at least one carrier is stopped in ascending order of priorities until sending or receiving is stopped on all S-SSBs except an S-SSB with a highest priority; and then sending or receiving of data on the at least one carrier is stopped in ascending order of priorities.

With reference to the fifth aspect, in some implementations of the fifth aspect, sending or receiving of the at least one piece of data is stopped based on a remaining PDB of each piece of data.

Optionally, the method further includes: stopping sending or receiving the at least one piece of data in descending order of remaining PDBs.

Optionally, the method further includes: preferentially stopping sending or receiving of the at least one piece of data whose remaining PDB is less than and/or equal to a threshold.

Optionally, for the at least one piece of data whose remaining PDB is the same, sending or receiving of data with a lower priority is preferentially stopped.

Optionally, for the at least one piece of data whose remaining PDB is the same, sending or receiving of data on a carrier with a smaller SCS is preferentially stopped.

With reference to the fifth aspect, in some implementations of the fifth aspect, based on an SCS of the data and an SCS of the carrier on which the S-SSB is located, sending or receiving the at least one piece of data is stopped, and/or sending or receiving the S-SSB on the at least one carrier is stopped.

Optionally, the method further includes: in ascending order of SCSs, stopping sending or receiving the at least one piece of data, and/or stopping sending or receiving the S-SSB on the at least one carrier.

Optionally, the method further includes: for the at least one piece of data and/or the S-SSB on the at least one carrier that have/has a same SCS, preferentially stopping sending or receiving of the data.

Optionally, for the at least one piece of data and/or an S-SSB on the at least one carrier with a same SCS, sending or receiving of data and/or an S-SSB that have/has a lower priority is preferentially stopped.

Optionally, for the at least one piece of data and/or the S-SSB on the at least one carrier that have/has a same SCS, sending or receiving of data and/or an S-SSB whose remaining PDB is greater than and/or equal to a first threshold is preferentially stopped.

Therefore, according to the solution of this application, a problem that a conflict occurs between an S-SSB and data between carriers can be resolved, and transmission of an important S-SSB and important data can be ensured.

With reference to the fifth aspect, in some implementations of the fifth aspect, when determining that the seventh resource overlaps the first resource in time domain, the first terminal device stops sending or receiving one of the data and the S-SSB: determining a priority of each piece of data and a priority of an S-SSB on each carrier; and based on the priority of each piece of data and the priority of the S-SSB on each carrier, stopping sending or receiving the data, or stopping sending or receiving the S-SSB on the carrier, including stopping sending or receiving, by the first terminal device, the data or the S-SSB corresponding to a lower one of a highest priority of data and a highest priority of an S-SSB on a carrier.

It should be understood that, in this case, all data is received, all S-SSBs are sent, or all data is sent, and all S-SSBs are received.

Optionally, the method includes: when priorities of S-SSBs on the carrier are equal, determining a ratio of an amount of data whose priority is higher than the priority of the S-SSBs on the carrier to all the data; and when the ratio is less than and/or equal to a second threshold, stopping sending or receiving the data on the carrier by the terminal device; or when the ratio is greater than and/or equal to the second threshold, stopping sending or receiving the S-SSBs on the carrier by the terminal device.

With reference to the fifth aspect, in some implementations of the fifth aspect, when determining that the seventh resource overlaps the S-SSB resource in time domain, the first terminal device stops sending the data and/or the S-SSB, or stops receiving the data and/or the S-SSB; and determines a priority of each piece of data and a priority of an S-SSB on each carrier; based on a priority of each piece of data and a priority of an S-SSB on each carrier, stopping sending the data and/or the S-SSB, or stopping receiving the data and/or the S-SSB; the method includes: The first terminal device stops sending the S-SSB and/or the data, where a highest priority of the S-SSB and/or the data to be sent is lower than a highest priority of the S-SSB and/or the data to be received; or the first terminal device stops receiving the S-SSB and the data, where a highest priority of the S-SSB and/or the data to be received is lower than a highest priority of the S-SSB and/or the data to be sent.

It should be understood that, in this case, a received transmission includes data and/or an S-SSB, and a received transmission also includes data and/or an S-SSB.

Therefore, according to the solution of this application, a problem that a transmission-reception conflict occurs between an S-SSB and data between carriers can be resolved, and transmission of an important S-SSB and important data can be ensured.

According to a sixth aspect, a sidelink information transmission method is provided. The method includes: A second terminal device determines a sidelink synchronization signal block S-SSB resource configured on a used carrier, where the S-SSB resource is for sending and/or receiving an S-SSB; and the second terminal device sends and/or receives, on a seventh resource, data sent by a first terminal device; and sends and/or receives an S-SSB on the S-SSB resource.

Optionally, the second terminal device may be a terminal device that supports only a single carrier. The first terminal device sends transmissions to different terminal devices on a plurality of carriers, and the second terminal device may receive the transmissions still on the single carrier supported by the second terminal device.

According to a seventh aspect, a sidelink information transmission method is provided. The method includes: A first terminal device determines a resource pool corresponding to each of at least two carriers in a first carrier set; the first terminal device selects at least one seventh resource in the first carrier set, where the seventh resource is for sending or receiving at least one piece of data; and determines a priority of each piece of data when a number of carriers corresponding to the seventh resource is greater than a maximum number of concurrently-transmitting carriers of the first terminal device; and the first terminal device stops sending or receiving the data of the at least one service in ascending order of priorities until the number of carriers corresponding to the seventh resource for sending or receiving the at least one piece of data is less than and/or equal to the maximum number of concurrently-transmitting carriers.

With reference to the seventh aspect, in some implementations of the seventh aspect, for the at least one piece of data with a same priority, sending or receiving of data whose remaining PDB is greater than and/or equal to a third threshold is preferentially stopped.

Optionally, the method includes: for the at least one piece of data with a same priority, sending or receiving of data on a carrier with a smaller SCS is preferentially stopped.

Therefore, according to the solution of this application, a problem that a sending-sending conflict occurs between data and data between carriers can be resolved, and transmission of important data can be ensured.

According to an eighth aspect, a sidelink information transmission method is provided. The method includes: A second terminal device determines a resource pool corresponding to a carrier used for sidelink transmission; and the second terminal device receives, on a seventh resource, data sent by a first terminal device.

Optionally, the second terminal device may be a terminal device that supports only a single carrier. The first terminal device sends transmissions to different terminal devices on a plurality of carriers, and the second terminal device may receive the transmissions still on the single carrier supported by the second terminal device.

According to a ninth aspect, a sidelink information transmission method is provided. The method includes: A first terminal device determines a resource pool corresponding to each of at least two carriers in a first carrier set, where a sidelink synchronization signal block S-SSB resource is configured on each carrier in the first carrier set, the S-SSB resource is for sending and/or receiving an S-SSB; the first terminal device determines at least one eighth resource and/or at least one ninth resource in a first resource, where the eighth resource is for sending an S-SSB on a carrier on which the eighth resource is located, the ninth resource is for receiving an S-SSB on a carrier on which the ninth resource is located, and the eighth resource and the ninth resource are located on different carriers; and when the eighth resource overlaps the ninth resource in time domain, the first terminal device stops sending or receiving the S-SSB on the carrier on which the eighth resource or the ninth resource is located.

With reference to the ninth aspect, in some implementations of the ninth aspect, at least one first priority corresponding to the S-SSB on the eighth resource is determined, at least one second priority corresponding to the S-SSB on the ninth resource is determined, and the first terminal device stops sending or receiving an S-SSB on the eighth resource and/or the ninth resource corresponding to a lower one of a highest first priority and a highest second priority.

Optionally, the method includes: The first terminal device stops sending the S-SSB on the eighth resource.

Therefore, according to the solution of this application, a problem that a transmission-reception conflict occurs between S-SSBs between carriers can be resolved, and transmission of an important S-SSB can be ensured.

According to a tenth aspect, a sidelink information transmission method is provided. The method includes: A second terminal device determines a sidelink synchronization signal block S-SSB resource configured on a carrier used for sidelink transmission, where the S-SSB resource is for sending and/or receiving an S-SSB; and the second terminal device receives, on an eighth resource, an S-SSB sent by a first terminal device, or the second terminal device sends an S-SSB on a ninth resource.

Optionally, the second terminal device may be a terminal device that supports only a single carrier. The first terminal device sends transmissions to different terminal devices on a plurality of carriers, and the second terminal device may receive the transmissions still on the single carrier supported by the second terminal device.

According to an eleventh aspect, a sidelink information transmission method is provided. The method includes: A first terminal device determines a resource pool corresponding to each of at least two carriers in a first carrier set, where a sidelink synchronization signal block S-SSB resource is configured on each carrier in the first carrier set, the S-SSB resource is for sending and/or receiving an S-SSB; the first terminal device selects at least one tenth resource on at least one of the at least two carriers, where the tenth resource is for sending at least one piece of data; and when determining that the tenth resource overlaps in time domain the S-SSB resource for sending an S-SSB, and a concurrent transmit power of the data and the S-SSB exceeds a maximum transmit power of the first terminal device, the first terminal device determines a priority of each piece of data and a priority of an S-SSB on each carrier; and based on the priority of each piece of data and the priority of the S-SSB on each carrier, backs off a transmit power or stops sending the at least one piece of data, and/or backs off a transmit power or stops sending an S-SSB on the at least one carrier.

Optionally, the method includes: Until a concurrent transmit power of the at least one piece of data and/or the at least one S-SSB is less than and/or equal to a maximum transmit power of the first terminal device.

With reference to the eleventh aspect, in some implementations of the eleventh aspect, in ascending order of priorities, the transmit power is backed off or sending the at least one piece of data is stopped, and/or the transmit power is backed off or sending the S-SSB on the at least one carrier is stopped.

Optionally, the method includes: for the at least one piece of data and/or the S-SSB on the at least one carrier that have/has a same priority, preferentially stopping data sending on the tenth resource, and/or backing off a transmit power or stopping sending an S-SSB on the at least one carrier.

Optionally, the method further includes: preferentially stopping sending of data that is on the tenth resource and whose remaining packet delay budget remaining PDB is greater than and/or equal to a fourth threshold, and/or backing off a transmit power of data that is on the tenth resource and whose remaining packet delay budget remaining PDB is greater than and/or equal to the fourth threshold.

Optionally, the method further includes: preferentially stopping sending of data and/or an S-SSB on a carrier with a smaller SCS, and/or backing off a transmit power of data and/or an S-SSB on a carrier with a smaller SCS.

With reference to the eleventh aspect, in some implementations of the eleventh aspect, in ascending order of priorities, the transmit power is backed off or sending the S-SSB on the at least one carrier is stopped, until powers of all S-SSBs except an S-SSB with a highest priority are backed off or sending of all S-SSBs except an S-SSB with a highest priority is stopped; and in ascending order of priorities, the transmit power is backed off or sending data on the at least one carrier and/or the S-SSB with the highest priority is stopped, or in ascending order of priorities, the transmit power is backed off or sending the data on the at least one carrier is stopped.

With reference to the eleventh aspect, in some implementations of the eleventh aspect, based on a remaining PDB of each piece of data, sending the at least one piece of data is stopped, and/or the transmit power of the at least one piece of data is backed off.

Optionally, the method further includes: stopping sending the at least one piece of data in descending order of remaining PDBs, and/or backing off the transmit power of the at least one piece of data.

Optionally, the method further includes: preferentially stopping sending of the at least one piece of data whose remaining PDB is less than and/or equal to a threshold, and/or backing off the transmit power of the at least one piece of data.

Optionally, for the at least one piece of data whose remaining PDB is the same, sending of data with a lower priority is preferentially stopped, and/or the transmit power of the at least one piece of data is backed off.

Optionally, for the at least one piece of data whose remaining PDB is the same, sending of data on a carrier with a smaller SCS is preferentially stopped, and/or the transmit power of the at least one piece of data is backed off.

With reference to the eleventh aspect, in some implementations of the eleventh aspect, based on an SCS of the data and an SCS of the carrier on which the S-SSB is located, the transmit power is backed off or sending the at least one piece of data is stopped, and/or the transmit power is backed off or sending the S-SSB on the at least one carrier is stopped.

Optionally, the method further includes: in ascending order of SCSs, backing off a transmit power or stopping sending the at least one piece of data, and/or backing off a transmit power or stopping sending the S-SSB on the at least one carrier.

Optionally, the method further includes: for the at least one piece of data and/or the S-SSB on the at least one carrier that have/has a same SCS, preferentially backing off a transmit power or stopping sending the data.

Optionally, for the at least one piece of data and/or the S-SSB on the at least one carrier that have/has a same SCS, a transmit power is preferentially backed off or sending of data and/or an S-SSB with a lower priority is stopped.

Optionally, for the at least one piece of data and/or the S-SSB on the at least one carrier that have/has a same SCS, a transmit power is preferentially backed off or sending of data whose remaining PDB is greater than and/or equal to a first threshold is stopped.

Therefore, according to the solution of this application, a problem of a transmission-transmission conflict caused by a concurrent transmit power limitation on data and an S-SSB between carriers can be resolved, and transmission of an important S-SSB and important data can be ensured.

According to a twelfth aspect, a sidelink information transmission method is provided. The method includes: A second terminal device determines a sidelink synchronization signal block S-SSB resource configured on a carrier used for sidelink transmission, where the S-SSB resource is for sending and/or receiving an S-SSB; and the second terminal device receives, on a tenth resource, data sent by a first terminal device; and/or receives an S-SSB on the S-SSB resource.

Optionally, the second terminal device may be a terminal device that supports only a single carrier. The first terminal device sends transmissions to different terminal devices on a plurality of carriers, and the second terminal device may receive the transmissions still on the single carrier supported by the second terminal device.

According to a thirteenth aspect, a sidelink unlicensed spectrum information transmission method is provided. The method includes: A first terminal device determines a first resource pool; the first terminal device determines, from the first resource pool, at least two contiguous resource sets RB sets for transmitting a first message; the first terminal device determines a sub-channel index that corresponds to each of the at least two contiguous RB sets and that is for transmitting the first message; the first terminal device determines, based on the sub-channel index and/or a guard band, an eleventh resource for transmitting the first message in each RB set, where the guard band is an RB resource set located between the RB sets; the first terminal device determines a twelfth resource, where the twelfth resource is a set of first resources that are for transmitting the first message and that correspond to each RB set; and the first terminal device transmits the first message on the twelfth resource.

The resource pool may be a resource for sidelink control information and data transmission.

Optionally, a resource in the resource pool includes at least one of a time domain resource, a frequency domain resource, and a time-frequency domain resource.

Optionally, resource pools corresponding to all carriers may be different.

For example, the resource may include a resource block RB.

For another example, on a sidelink, a resource may include a sub-channel including a plurality of contiguous RBs, where the sub-channel may be a minimum unit for scheduling/data transmission on the sidelink.

Optionally, the method includes: the at least two contiguous RB sets include a first RB set and a second RB set, and the eleventh resource corresponding to the first RB set includes an RB included in a sub-channel that is in the first RB set and that is for transmitting the first message, an interlace (interlace) corresponding to the sub-channel that is in the first RB set and that is for transmitting the first message, and an RB included in an intersection set that is in a guard band between the first RB set and the second RB set and that belongs to RBs of the first RB set.

It should be understood that the first RB set and the second RB set each are any RB set in the at least two contiguous RB sets.

The interlace includes common resource blocks (common resource block, CRB) {m, M+m, 2M+m, 3M+m, ...}. M is a number of interlaces, and m∈{0, 1, ..., M-1}.

Optionally, a value of M is related to an SCS.

For example, when $\mu$=0 (that is, the sub-carrier spacing is 15 kHz), the value of M is 10.

For another example, when $\mu$=1 (that is, the sub-carrier spacing is 30 kHz), the value of M is 5.

In embodiments of this application, transmitting, sending, or receiving in an interlace manner may also be understood as "mapping in an interlace manner" or "decoding in an interlace manner".

It should be understood that, transmission of one UE on a channel may be performed in an interlace manner, or may be performed in a non-interlace manner.

The "non-interlace manner" may also be referred to as a contiguous transmission manner, a channel manner, a sub-channel manner, or a manner of fully occupying a channel.

With reference to the thirteenth aspect, in some implementations of the thirteenth aspect, RBs in the guard band between the first RB set and the second RB set are equally divided into a first part and a second part based on a number, and one RB that is of the first part or the second part and that is adjacent to the first RB set in frequency domain belongs to the first RB set.

It should be understood that, if the number of RBs is an odd number, the RB located in a division center does not belong to any RB set, belongs to an RB set with a lower frequency, or belongs to an RB set with a higher frequency.

With reference to the thirteenth aspect, in some implementations of the thirteenth aspect, RBs in the guard band between the first RB set and the second RB set are divided into a third part and a fourth part based on a first fixed bandwidth, the first fixed bandwidth is a configurable frequency range, and one RB that is of the third part or the fourth part and that is adjacent to the first RB set in frequency domain belongs to the first RB set.

It should be understood that, if a division point is located in the middle of an RB in a case of division based on a fixed bandwidth, the RB located in the division center does not belong to any RB set, belongs to an RB set with a lower frequency, or belongs to an RB set with a higher frequency.

A frequency width of the fixed bandwidth may be (pre)configured.

For example, the fixed bandwidth is 20 MHz.

With reference to the thirteenth aspect, in some implementations of the thirteenth aspect, RBs in the guard band between the first RB set and the second RB set are divided into a fifth part and a sixth part based on configuration information, where the configuration information is an absolute index of a resource block at a division point or a relative index of a resource block in the guard band.

The configuration information is (pre)configuration, and is performed based on at least one of an RRC configuration, a DCI indication, an SCI indication, a MAC CE indication, or a predefinition.

With reference to the thirteenth aspect, in some implementations of the thirteenth aspect, all RBs in the guard band between the first RB set and the second RB set belong to the first RB set and the second RB set.

It should be understood that, in this case, RBs in the guard band and adjacent RB sets may be used.

Therefore, according to the solution of this application, the first terminal device may perform transmission by using different sub-channels or interlaces in different RB sets. In addition, resource utilization flexibility is improved.

According to a fourteenth aspect, a sidelink unlicensed spectrum information transmission method is provided. The method includes: A second terminal device determines a first resource pool, and the second terminal device receives a first message on a twelfth resource.

According to a fifteenth aspect, a sidelink unlicensed spectrum information transmission method is provided. The method includes: A first terminal device determines at least one RB set, where the at least one RB set is all RB sets in a resource pool, the at least one RB set for transmitting a PSSCH corresponding to a first physical sidelink feedback channel PSFCH, or at least one (pre)configured RB set. The first terminal device determines a thirteenth resource in the at least one RB set, where the thirteenth resource is for carrying the first PSFCH. The first terminal device sends the first PSFCH on the thirteenth resource.

It should be understood that, in sidelink communication, the PSFCH is for transmitting feedback information and/or conflict information.

For example, for one PSSCH transmission, if a transmitting end adds hybrid automatic repeat request acknowledgment (hybrid automatic repeat request acknowledgment, HARQ-ACK) feedback enabling information to control information, a receiving end may feed back corresponding acknowledgement (acknowledgement, ACK) or negative (negative acknowledgement, NACK) information based on a decoding result of the PSSCH.

The ACK or NACK information is transmitted through the PSFCH.

For example, one PSFCH occupies two contiguous orthogonal frequency division multiplexing (orthogonal frequency division multiplexing, OFDM symbols) in time domain and one physical resource block (physical resource block, PRB) in frequency domain, where the 1st symbol is an automatic gain control AGC symbol.

Optionally, the method includes: The thirteenth resource includes a first interlace (interlace).

Optionally, the method further includes: The thirteenth resource includes a second interlace and a first resource block RB.

Optionally, the method further includes: The thirteenth resource includes a fourteenth resource and a second resource block RB, where the fourteenth resource includes at least two RBs.

The second interlace and/or the fourteenth resource are/is determined based on a predefinition or a configuration.

With reference to the fifteenth aspect, in some implementations of the fifteenth aspect, the first terminal device determines the at least one RB set, where the at least one RB set is all the RB sets in the resource pool. The first terminal device determines the thirteenth resource in the at least one RB set.

Optionally, the method includes: the first interlace is located in all RB sets in the at least one RB set.

Optionally, the method includes: the second interlace is located in all RB sets in the at least one RB set, and the first resource block RB is determined from RBs other than the first interlace in the at least one RB set.

Optionally, the method includes: the second resource is located in all RB sets in the at least one RB set, and the second resource block RB is determined from RBs other than the second resource in the at least one RB set.

With reference to the fifteenth aspect, in some implementations of the fifteenth aspect, the first terminal device determines the at least one RB set, where the at least one RB set is the at least one RB set for transmitting the PSSCH corresponding to the first physical sidelink feedback channel PSFCH. The first terminal device determines the thirteenth resource in the at least one RB set.

Optionally, the method includes: the first interlace is located in all RB sets in the at least one RB set.

Optionally, the method includes: the second interlace is located in all RB sets in the at least one RB set, and the first resource block RB is determined from RBs in a first RB set in the at least one RB set.

Optionally, the method further includes: the fourteenth resource is located in all RB sets in the at least one RB set, and the second resource block RB is determined from the RBs in the first RB set in the at least one RB set.

With reference to the fifteenth aspect, in some implementations of the fifteenth aspect, the first terminal device determines the at least one RB set, where the at least one RB set is at least one (pre)configured RB set. The first terminal device determines the thirteenth resource in the at least one RB set.

Optionally, the method includes: the first interlace is located in the first RB set in the at least one RB set.

Optionally, the method includes: the second interlace is located in a first RB set in the at least one RB set, and the first resource block RB is determined from RBs in the first RB set.

Optionally, the method further includes: the fourteenth resource is located in a first RB set in the at least one RB set, and the second resource block RB is determined from RBs in the first RB set.

Optionally, the method further includes: determining the first RB set based on at least one of an ID pair, a UE ID, a zone ID, a service priority, a channel access priority CAPC, or a time domain resource and/or a frequency domain resource carrying data corresponding to the first PSFCH.

Therefore, according to the solution of this application, a capacity of a PSFCH on a same time-frequency domain resource can be increased, and it is ensured that a PSFCH is transmitted on each RB set, thereby avoiding COT interruption.

According to a sixteenth aspect, a sidelink unlicensed spectrum information transmission method is provided. The method includes: A second terminal device receives a first PSFCH on a thirteenth resource; or a second terminal device receives a first PSFCH on a first interlace, a first resource block RB, or a second resource block RB.

According to a seventeenth aspect, a sidelink unlicensed spectrum information transmission method is provided. The method includes: A first terminal device determines a first resource pool and a fifteenth resource, where the fifteenth resource is for sending and/or receiving a sidelink synchronization signal block S-SSB; the first terminal device selects at least one resource in the first resource pool to send data; and the first terminal device creates a channel occupancy time COT based on the at least one selected resource.

Optionally, the first terminal device determines the first resource pool and/or the fifteenth resource, where the fifteenth resource is for sending and/or receiving a sidelink synchronization signal block S-SSB; and/or the first terminal device selects the at least one resource in the first resource pool to send data; and the first terminal device creates a channel occupancy time COT based on the at least one selected resource.

With reference to the seventeenth aspect, in some implementations of the seventeenth aspect, the first terminal device selects a plurality of resources contiguous in time domain to send data, where the plurality of resources contiguous in time domain do not overlap the fifteenth resource in time domain, or the COT does not overlap the fifteenth resource in time domain, and the first resource pool includes a slot in which the fifteenth resource is located.

Optionally, the method includes: the COT does not overlap the fifteenth resource in time domain, and the first resource pool does not include a slot in which the fifteenth resource is located.

Optionally, the method includes: The first terminal device performs at least one of sending or receiving an S-SSB on the fifteenth resource.

Optionally, the method includes: the at least one resource does not overlap the fifteenth resource in time domain.

Optionally, the method further includes: the at least one resource does not overlap the fifteenth resource in time domain and frequency domain.

With reference to the seventeenth aspect, in some implementations of the seventeenth aspect, the first terminal device sends an S-SSB on a first channel and/or at least one second channel on a first transmission occasion, where the first channel is determined based on a preconfigured frequency, the at least one second channel includes a channel in a first COT and/or a channel in a second COT, and the second COT is created by a second terminal device, or the at least one second channel includes a channel other than the first channel in the first resource pool.

With reference to the seventeenth aspect, in some implementations of the seventeenth aspect, the first terminal device sends an S-SSB on at least one of a first sub-resource, a second sub-resource, and a third sub-resource. The first sub-resource is determined based on the preconfigured frequency, the second sub-resource is a resource that is other than the first sub-resource on the first channel determined based on the preconfigured frequency and that is for S-SSB transmission, the third sub-resource is a resource that is on the second channel and that is for S-SSB transmission, the second channel includes at least one channel in the first COT and the second COT, and the second COT is created by the second terminal device.

With reference to the seventeenth aspect, in some implementations of the seventeenth aspect, the first terminal device sends N S-SSBs, where the N S-SSBs are sent by using a first power or a second power, the first power is a maximum transmit power of the first terminal device, and the second power is determined based on a number of resource blocks RBs used for the N S-SSBs.

With reference to the seventeenth aspect, in some implementations of the seventeenth aspect, the first terminal device sends N S-SSBs, where an S-SSB on each of the first channel and/or the at least one second channel is sent by using a third power or a fourth power. The third power is determined based on a maximum transmit power of the first terminal device, the third power is determined based on a maximum transmit power of the first terminal device and a first offset value, or the third power is determined based on a maximum transmit power of the first terminal device and Y, where Y is a sum of a channel number of the first channel and/or a channel number of the at least one second channel, and the fourth power is determined based on a number of RBs used for each S-SSB.

With reference to the seventeenth aspect, in some implementations of the seventeenth aspect, the first terminal device sends N S-SSBs, where each of the N S-SSBs is sent by using a fifth power or a fourth power, the fifth power is determined based on a maximum transmit power of the first terminal device and N, and the fourth power is determined based on a number of RBs used for each S-SSB.

With reference to the seventeenth aspect, in some implementations of the seventeenth aspect, the first terminal device sends an S-SSB on the first sub-resource by using a first power or a sixth power, where the first power is a maximum transmit power of the first terminal device, and the sixth power is determined based on a number of RBs used for each S-SSB and a second offset value; and the first terminal device sends an S-SSB on the second sub-resource and the third sub-resource by using the first power or a seventh power, where the seventh power is determined based on a number of RBs used for each S-SSB and a third offset value; or the first terminal device sends an S-SSB on the first sub-resource and the second sub-resource by using a first power or a sixth power, where the first power is a maximum transmit power of the first terminal device, and the sixth power is determined based on a number of RBs used for each S-SSB and a second offset value; and the first terminal device sends an S-SSB on the third sub-resource by using the first power or a seventh power, where the sixth power is determined based on a number of RBs used for each S-SSB and a third offset value.

With reference to the seventeenth aspect, in some implementations of the seventeenth aspect, the first terminal device sends an S-SSB on the first sub-resource by using a first power or a sixth power, where the first power is a maximum transmit power of the first terminal device, and the sixth power is determined based on a number of resource blocks RBs used for each S-SSB and a second offset value; and the first terminal device sends an S-SSB on the second sub-resource and the third sub-resource by using an eighth power, where the eighth power is determined based on an energy detection threshold EDT and/or a fourth offset value, or is configured, or preconfigured, or predefined by the network device; or the first terminal device sends an S-SSB on the first sub-resource and the second sub-resource by using a first power or a sixth power, where the first power is a maximum transmit power of the first terminal device, and the sixth power is determined based on a number of RBs used for each S-SSB and a second offset value; and the first terminal device sends an S-SSB on the third sub-resource by using the first power or an eighth power, where the eighth power is determined based on an energy detection threshold EDT and/or a fourth offset value, or is configured, or preconfigured, or predefined by the network device.

With reference to the seventeenth aspect, in some implementations of the seventeenth aspect, the first terminal device sends an S-SSB on the first sub-resource by using a ninth power or a fourth power, where the ninth power is determined based on a maximum transmit power of the first terminal device and a fifth offset value, and the fourth power is determined based on a number of RBs used for each S-SSB; and the first terminal device sends an S-SSB on the second sub-resource and the third sub-resource by using a tenth power or the fourth power, where the tenth power is determined based on the maximum transmit power of the first terminal device and a sixth offset value; or Alternatively, the first terminal device sends an S-SSB on the first sub-resource and the second sub-resource by using a ninth power or a fourth power, where the ninth power is determined based on a maximum transmit power of the first terminal device and a fifth offset value, and the fourth power is determined based on a number of RBs used for each S-SSB; and the first terminal device sends an S-SSB on the third sub-resource by using a tenth power or the fourth power, where the tenth power is determined based on the maximum transmit power of the first terminal device and a sixth offset value.

Optionally, the fifth offset value is configured, preconfigured, or predefined by a network device, and the sixth offset value is determined based on the fifth offset value; the sixth offset value is configured, preconfigured, or predefined by a network device, and the fifth offset value is determined based on the sixth offset value; or the fifth offset value is configured, preconfigured, or predefined by a network device, and the sixth offset value is configured, preconfigured, or predefined by the network device.

With reference to the seventeenth aspect, in some implementations of the seventeenth aspect, the first terminal device sends N S-SSBs. When a total transmit power of the N S-SSBs is greater than a first power, each of the N S-SSBs is adjusted to be sent by using a fifth power, where the first power is a maximum transmit power of the first terminal device, and the fifth power is determined based on the first power and N.

With reference to the seventeenth aspect, in some implementations of the seventeenth aspect, the first terminal device sends N S-SSBs; and when a total transmit power of the N S-SSBs is greater than a first power, allocates a transmit power in descending order of the following priorities, so that the total transmit power is not greater than the first power, where the first power is the maximum transmit power of the first terminal device: an S-SSB located on the first sub-resource, and an S-SSB located on the second sub-resource and/or the third sub-resource.

With reference to the seventeenth aspect, in some implementations of the seventeenth aspect, the first terminal device sends the N S-SSBs, where the transmit power of each of the N S-SSBs is not less than a minimum power value, and the minimum power value is the EDT, is determined based on the EDT, or is configured, preconfigured, or predefined by the network device.

With reference to the seventeenth aspect, in some implementations of the seventeenth aspect, the first terminal device sends the N S-SSBs, where the transmit power of each of the N S-SSBs is not greater than a maximum power value, and the maximum power value is determined based on a regulatory power or power spectral density PSD, or is configured, preconfigured, or predefined by the network device.

With reference to the seventeenth aspect, in some implementations of the seventeenth aspect, that the first terminal device selects at least one resource in the first resource pool to send data includes: The first terminal device selects a plurality of resources contiguous in time domain to send data. The first terminal device uses a gap GAP symbol of a resource other than a last resource in time domain in the plurality of resources for sidelink transmission. The sidelink transmission includes one or more of the following: a physical sidelink shared channel PSSCH, a physical sidelink control channel PSCCH, an S-SSB, and a physical sidelink broadcast channel PSBCH.

Optionally, that the first terminal device uses a gap GAP symbol of a resource other than the last resource in time domain in the plurality of resources for sidelink transmission includes: The first terminal device transmits the PSSCH on the GAP symbol in a rate matching manner, the first terminal device transmits, on the GAP symbol, a transmission copy of a previous sideline symbol or a next sideline symbol, or the first terminal device transmits a cyclic prefix extension CPE on the GAP symbol.

Optionally, the method further includes: The first terminal device indicates, in first-stage sidelink control information SCI, second-stage SCI, or a medium access control-control element MAC CE, whether a GAP symbol of the resource is used for sidelink transmission.

According to the method in this application, a power and coverage of an S-SSB indicated by an ARFCN or an S-SSB on an RB set indicated by an ARFCN can be ensured, and impact of a PAPR is reduced, to meet a synchronization requirement.

According to an eighteenth aspect, a sidelink unlicensed spectrum information transmission method is provided. The method includes: A second terminal device receives data on at least one resource in a first resource pool, and/or sends and/or receives a sidelink synchronization signal block S-SSB on a fifteenth resource, where the first resource pool and the fifteenth resource are determined by a first terminal device.

With reference to the eighteenth aspect, in some implementations of the eighteenth aspect, a third terminal device receives an S-SSB on a first channel and/or at least one second channel on a first transmission occasion, where the first channel is determined based on a preconfigured frequency, the at least one second channel includes a channel in a first channel occupancy time COT and/or a channel in a second COT, the first COT is created by the first terminal device based on at least one selected resource, and the second COT is created by the second terminal device, or the at least one second channel includes a channel other than the first channel in the first resource pool.

With reference to the eighteenth aspect, in some implementations of the eighteenth aspect, the third terminal device receives an S-SSB on at least one of a first sub-resource, a second sub-resource, and a third sub-resource, where the first sub-resource is determined based on the preconfigured frequency, the second sub-resource is a resource that is other than the first sub-resource on the first channel determined based on the preconfigured frequency and that is for S-SSB transmission, the third sub-resource is a resource that is on the second channel and that is for S-SSB transmission, the second channel includes at least one channel in the first COT and the second COT, the first COT is created by the first terminal device based on the at least one selected resource, and the second COT is created by the second terminal device.

According to a nineteenth aspect, a sidelink unlicensed spectrum information transmission method is provided. The method includes: A first terminal device determines a first resource pool; the first terminal device determines a sixteenth resource in the first resource pool; and the first terminal device sends a sidelink synchronization signal block S-SSB on the sixteenth resource.

With reference to the nineteenth aspect, in some implementations of the nineteenth aspect, the first terminal device sends second indication information, where the second indication information includes reservation information of the sixteenth resource, and/or includes indication information of a resource used for S-SSB transmission.

Optionally, the method includes: After the first terminal device successfully performs listen before talk LBT before the sixteenth resource, the first terminal device sends a sidelink synchronization signal block S-SSB on the sixteenth resource.

Optionally, the method further includes: The first terminal device determines at least one of a number of times of sending an S-SSB in a synchronization period, a maximum time domain gap between sending two adjacent S-SSBs in the synchronization period, and a minimum time domain gap between sending two adjacent S-SSBs in the synchronization period.

According to a twentieth aspect, a sidelink unlicensed spectrum information transmission method is provided. The method includes: A second terminal device receives a sidelink synchronization signal block S-SSB on a sixteenth resource.

According to a twenty-first aspect, a sidelink unlicensed spectrum information transmission method is provided. The method includes: After successfully performing listen before talk LBT, a first terminal device determines a seventeenth resource, where the seventeenth resource is a resource in the 1st slot after the listen before talk succeeds; and the first terminal device sends a sidelink synchronization signal block S-SSB on the seventeenth resource.

Therefore, according to the solution of this application, a problem of COT interruption in S-SSB transmission can be avoided, S-SSB transmission is ensured, and data transmission is not interrupted.

According to a twenty-second aspect, a sidelink unlicensed spectrum information transmission method is provided. The method includes: A second terminal device receives a sidelink synchronization signal block S-SSB on a seventeenth resource.

According to a twenty-third aspect, a wireless communication apparatus is provided, and includes: a processing unit, configured to determine a resource pool corresponding to each of at least two carriers in a first carrier set, where a sidelink synchronization signal block S-SSB resource is configured on each carrier in the first carrier set, and any resource in a resource pool corresponding to any carrier in the first carrier set does not overlap, in time domain, an S-SSB resource on any carrier in a second carrier set, where the second carrier set includes at least one carrier in the first carrier set, or a resource pool corresponding to any carrier in the first carrier set does not include an S-SSB resource on the carrier; and further configured to select at least one first resource from the resource pool;

a receiving unit, configured to receive first indication information, where the first indication information indicates locations/a location of a fourth resource and/or a fifth resource, where the fourth resource is a resource used by a second terminal to send data and/or an S-SSB, the fifth resource is a resource used by the second terminal device to receive data and/or an S-SSB, and a sum of a number of carriers corresponding to the fifth resource and a number of carriers used by the second terminal device to simultaneously receive data and an S-SSB is greater than a maximum number of concurrently-receiving carriers of the second terminal device; and
a sending unit, configured to send data on the at least one first resource.

Optionally, the second carrier set includes all carriers in the first carrier set; the second carrier set includes at least one carrier whose subcarrier spacing SCS is a first SCS in the first carrier set; or the second carrier set includes at least one carrier with a smallest SCS in the first carrier set.

Optionally, when the second carrier set includes the at least one carrier whose SCS is the first SCS in the first carrier set, S-SSB sending and/or receiving are/is performed only on a carrier in the second carrier set.

Optionally, when the second carrier set includes the at least one carrier with the smallest SCS in the first carrier set, a start location and an end location of an S-SSB resource on each carrier in the first carrier set in time domain are within a first range, where the first range is a time domain range corresponding to an S-SSB resource on the at least one carrier with the smallest SCS in the first carrier set.

Further, optionally, start locations of S-SSB resources on all carriers in the first carrier set are aligned in time domain, or end locations of S-SSB resources on all carriers in the first carrier set are aligned in time domain.

Optionally, the first resource and a second resource do not overlap in time domain, where the second resource includes a resource on which the first terminal device receives an S-SSB; and/or the first resource and a third resource do not overlap in time domain, where a sum of a number of carriers corresponding to the third resource and a number of carriers for simultaneously sending data and an S-SSB is greater than a maximum number of concurrently-transmitting carriers supported by the first terminal device.

Optionally, the processing unit selects the first resource based on the first indication information, where the first resource and the fourth resource do not overlap in time domain; and/or the first resource and the fifth resource do not overlap in time domain.

The apparatus is configured in or the apparatus itself is the first terminal device or the second terminal.

According to the solution of this application, the terminal device is enabled to configure resource pools on different carriers and resource selection rules, so that a conflict between an S-SSB and data between different carriers can be reduced, and transmission of the S-SSB and the data can be ensured.

Units in the apparatus are respectively configured to perform steps of the communication method in the first aspect or the second aspect and the implementations of the first aspect or the second aspect.

In a design, the apparatus is a communication chip, and the communication chip may include an input circuit or interface configured to send information or data, and an output circuit or interface configured to receive information or data.

In another design, the apparatus is a communication device, and the communication device may include a transmitter configured to send information or data, and a receiver configured to receive information or data.

According to a twenty-fourth aspect, a wireless communication apparatus is provided, and includes: a receiving unit, configured to receive data on a first resource, where the first resource is a resource used by a first terminal device to send data.

With reference to the twenty-fourth aspect, in some implementations of the twenty-fourth aspect, the apparatus further includes: a processing unit, configured to determine a fourth resource and/or a fifth resource, where the fourth resource is a resource used by the second terminal to send data and/or an S-SSB, the fifth resource is a resource used by the second terminal device to receive data and/or an S-SSB, and a sum of a number of carriers corresponding to the fifth resource and a number of carriers used by the second terminal device to simultaneously receive data and an S-SSB is greater than a maximum number of concurrently-receiving carriers of the second terminal device; and a sending unit, configured to send first indication information, where the first indication information indicates locations/a location of the fourth resource and/or the fifth resource.

Units in the apparatus are respectively configured to perform steps of the communication method in the first aspect or the second aspect and the implementations of the first aspect or the second aspect.

According to a twenty-fifth aspect, a wireless communication apparatus is provided, and includes: a processing unit, configured to determine a resource pool corresponding to each of at least two carriers in a first carrier set, where a sidelink synchronization signal block S-SSB resource is configured on each carrier in the first carrier set, and any resource in a resource pool corresponding to any carrier in the first carrier set does not overlap, in time domain, an S-SSB resource on any carrier in a second carrier set, where the second carrier set includes at least one carrier in the first carrier set, or a resource pool corresponding to any carrier in the first carrier set does not include an S-SSB resource on the carrier; and further configured to select at least one first resource from the resource pool;

a receiving unit, configured to receive conflict indication information and first reservation information, where the first reservation information indicates a location of a sixth resource, and the first resource is a resource that is reserved by a first terminal device for sending data to a second terminal device, and the conflict indication information indicates the first terminal device to re-select a resource to send data to the second terminal device; and

a sending unit, configured to send the first reservation information, where the first reservation information indicates the location of the sixth resource, and the first resource is a resource that is reserved by the first terminal device for sending data to the second terminal device; and further configured to send data on the at least one first resource.

Optionally, the second carrier set includes all carriers in the first carrier set; the second carrier set includes at least one carrier whose subcarrier spacing SCS is a first SCS in the first carrier set; or the second carrier set includes at least one carrier with a smallest SCS in the first carrier set.

Optionally, when the second carrier set includes the at least one carrier whose SCS is the first SCS in the first carrier set, S-SSB sending and/or receiving are/is performed only on a carrier in the second carrier set.

Optionally, when the second carrier set includes the at least one carrier with the smallest SCS in the first carrier set, a start location and an end location of an S-SSB resource on each carrier in the first carrier set in time domain are within a first range, where the first range is a time domain range corresponding to an S-SSB resource on the at least one carrier with the smallest SCS in the first carrier set.

Further, optionally, start locations of S-SSB resources on all carriers in the first carrier set are aligned in time domain, or end locations of S-SSB resources on all carriers in the first carrier set are aligned in time domain.

Optionally, the first resource and a second resource do not overlap in time domain, where the second resource includes a resource on which the first terminal device receives an S-SSB; and/or the first resource and a third resource do not overlap in time domain, where a sum of a number of carriers corresponding to the third resource and a number of carriers for simultaneously sending data and an S-SSB is greater than a maximum number of concurrently-transmitting carriers supported by the first terminal device.

Optionally, the processing unit re-selects at least one first resource from the resource pool based on conflict indication information, where the sixth resource and the first resource do not overlap in time domain; and the sending unit sends data on the at least one re-selected first resource.

The apparatus is configured in or the apparatus itself is the first terminal device or the second terminal.

According to the solution of this application, the terminal device is enabled to configure resource pools on different carriers and resource selection rules, so that a conflict between an S-SSB and data between different carriers can be reduced, and transmission of the S-SSB and the data can be ensured.

Units in the apparatus are respectively configured to perform steps of the communication method in the third aspect or the fourth aspect and the implementations of the third aspect or the fourth aspect.

In a design, the apparatus is a communication chip, and the communication chip may include an input circuit or interface configured to send information or data, and an output circuit or interface configured to receive information or data.

In another design, the apparatus is a communication device, and the communication device may include a transmitter configured to send information or data, and a receiver configured to receive information or data.

According to a twenty-sixth aspect, a wireless communication apparatus is provided, and includes: a receiving unit, configured to receive data on a first resource, where the first resource is a resource used by a first terminal device to send data.

With reference to the twenty-sixth aspect, in some implementations of the twenty-sixth aspect, the apparatus further includes a processing unit, configured to determine that a sixth resource overlaps a fourth resource and/or a fifth resource in time domain; and a sending unit, where the sending unit sends conflict indication information, where the conflict indication information indicates the first terminal device to re-select a resource to send data to a second terminal device.

Units in the apparatus are respectively configured to perform steps of the communication method in the third aspect or the fourth aspect and the implementations of the third aspect or the fourth aspect.

According to a twenty-seventh aspect, a wireless communication apparatus is provided, and includes: a transceiver unit, configured to send or receive at least one piece of data on at least one seventh resource on at least one carrier in at least two carriers; and

a processing unit, configured to determine a resource pool corresponding to each of at least two carriers in a first carrier set, where a sidelink synchronization signal block S-SSB resource is configured on each carrier in the first carrier set, the S-SSB resource is for sending and/or receiving an S-SSB; and further configured to: when the seventh resource overlaps the S-SSB resource in time domain, based on at least one of a priority, a data type, a remaining PDB, and an SCS, stop sending or receiving the at least one piece of data, and/or stop sending or receiving an S-SSB on the at least one carrier.

The apparatus is configured in or the apparatus itself is the first terminal device.

According to the solution of this application, the terminal device discards the data and/or the S-SSB based on at least one of the priority, the data type, the remaining PDB, and the SCS, so that a problem of a conflict between an S-SSB and data between different carriers can be resolved, and transmission of an important S-SSB and important data can be ensured.

Units in the apparatus are respectively configured to perform steps of the communication method in the fifth aspect or the sixth aspect and the implementations of the fifth aspect or the sixth aspect.

In a design, the apparatus is a communication chip, and the communication chip may include an input circuit or interface configured to send information or data, and an output circuit or interface configured to receive information or data.

In another design, the apparatus is a communication device, and the communication device may include a transmitter configured to send information or data, and a receiver configured to receive information or data.

According to a twenty-eighth aspect, a wireless communication apparatus is provided, and includes: a transceiver unit, configured to send or receive at least one piece of data on at least one seventh resource on at least one carrier in at least two carriers.

Units in the apparatus are respectively configured to perform steps of the communication method in the fifth aspect or the sixth aspect and the implementations of the fifth aspect or the sixth aspect.

According to a twenty-ninth aspect, a wireless communication apparatus is provided, and includes: a transceiver unit, configured to send or receive at least one piece of data on at least one seventh resource in a first carrier set; and

a processing unit, configured to: determine a resource pool corresponding to each of at least two carriers in a first carrier set; determine a priority of each piece of data when a number of carriers corresponding to the seventh resource is greater than a maximum number of concurrently-transmitting carriers of the first terminal device; stop sending or receiving the data of the at least one service in ascending order of priorities until the number of carriers corresponding to the seventh resource for sending or receiving the at least one piece of data is less than and/or equal to the maximum number of concurrently-transmitting carriers; and for the at least one piece of data with a same priority, preferentially stop sending or receiving of data whose remaining PDB is greater than and/or equal to a third threshold, or preferentially stop sending or receiving of data on a carrier with a smaller SCS.

The apparatus is configured in or the apparatus itself is the first terminal device.

According to the solution of this application, the terminal device discards the data and/or the S-SSB based on at least one of the priority, the data type, the remaining PDB, and the SCS, so that a problem of a conflict between data and data between different carriers can be resolved, and transmission of important data can be ensured.

Units in the apparatus are respectively configured to perform steps of the communication method in the seventh aspect or the eighth aspect and the implementations of the seventh aspect or the eighth aspect.

In a design, the apparatus is a communication chip, and the communication chip may include an input circuit or interface configured to send information or data, and an output circuit or interface configured to receive information or data.

In another design, the apparatus is a communication device, and the communication device may include a transmitter configured to send information or data, and a receiver configured to receive information or data.

According to a thirtieth aspect, a wireless communication apparatus is provided, and includes: a transceiver unit, configured to send or receive at least one piece of data on at least one seventh resource in a first carrier set.

Units in the apparatus are respectively configured to perform steps of the communication method in the seventh aspect or the eighth aspect and the implementations of the seventh aspect or the eighth aspect.

According to a thirty-first aspect, a wireless communication apparatus is provided, and includes: a transceiver unit, configured to configure a sidelink synchronization signal block S-SSB resource on each carrier in a first carrier set to send and/or receive an S-SSB; and

a processing unit, configured to: determine a resource pool corresponding to each of at least two carriers in a first carrier set, where a sidelink synchronization signal block S-SSB resource is configured on each carrier in the first carrier set, the S-SSB resource is for sending and/or receiving an S-SSB; determine at least one eighth resource and at least one ninth resource in a first resource, where the eighth resource is for sending an S-SSB on a carrier on which the eighth resource is located, the ninth resource is for receiving an S-SSB on a carrier on which the ninth resource is located, and the eighth resource and the ninth resource are located on different carriers; and when the eighth resource overlaps the ninth resource in time domain, stop sending or receiving the S-SSB on the carrier on which the eighth resource or the ninth resource is located.

The processing unit is further configured to: determine at least one first priority corresponding to the S-SSB on the eighth resource, determine at least one second priority corresponding to the S-SSB on the ninth resource, where the first terminal device stops sending or receiving an S-SSB on the eighth resource and/or the ninth resource corresponding to a lower one of a highest first priority and a highest second priority.

The apparatus is configured in or the apparatus itself is the first terminal device.

According to the solution of this application, the terminal device discards an S-SSB transmission based on a priority, so that a problem of a conflict between S-SSBs between different carriers can be resolved, and transmission of an important S-SSB can be ensured.

Units in the apparatus are respectively configured to perform steps of the communication method in the ninth aspect or the tenth aspect and the implementations of the ninth aspect or the tenth aspect.

In a design, the apparatus is a communication chip, and the communication chip may include an input circuit or interface configured to send information or data, and an output circuit or interface configured to receive information or data.

In another design, the apparatus is a communication device, and the communication device may include a transmitter configured to send information or data, and a receiver configured to receive information or data.

According to a thirty-second aspect, a wireless communication apparatus is provided, and includes: a transceiver unit, configured to configure a sidelink synchronization signal block S-SSB resource on each carrier in a first carrier set to send and/or receive an S-SSB.

Units in the apparatus are respectively configured to perform steps of the communication method in the ninth aspect or the tenth aspect and the implementations of the ninth aspect or the tenth aspect.

According to a thirty-third aspect, a wireless communication apparatus is provided, and includes: a transceiver unit, configured to configure a sidelink synchronization signal block S-SSB resource on each carrier in a first carrier set to send and/or receive an S-SSB; and further configured to send at least one piece of data on a tenth resource; and a processing unit, configured to: determine a resource pool corresponding to each of at least two carriers in a first carrier set, where a sidelink synchronization signal block S-SSB resource is configured on each carrier in the first carrier set; and further configured to: select at least one tenth resource on at least one of the at least two carriers; when determining that the tenth resource overlaps in time domain the S-SSB resource for sending an S-SSB, and a concurrent transmit power of the data and the S-SSB exceeds a maximum transmit power of the first terminal device, determine a priority of each piece of data and a priority of an S-SSB on each carrier; based on the priority of each piece of data and the priority of the S-SSB on each carrier, back off a transmit power or stop sending the at least one piece of data, and/or back off a transmit power or stop sending the S-SSB on the at least one carrier; in ascending order of priorities, back off a transmit power or stop sending the at least one piece of data, and/or back off a transmit power or stop sending the S-SSB on the at least one carrier; for the at least one piece of data and/or the S-SSB on the at least one carrier that have/has a same priority, preferentially stop data sending on the tenth resource, and/or back off a transmit power or stop sending an S-SSB on the at least one carrier; preferentially stop sending of data that is on the tenth resource and whose remaining packet delay budget remaining PDB is greater than and/or equal to a fourth threshold, and/or back off a transmit power of data that is on the tenth resource and whose remaining packet delay budget remaining PDB is greater than and/or equal to the fourth threshold; or preferentially stop sending of data and/or an S-SSB on a carrier with a smaller SCS, and/or back off a transmit power of data and/or an S-SSB on a carrier with a smaller SCS.

The processing unit is further configured to: in ascending order of priorities, back off the transmit power or stop sending the S-SSB on the at least one carrier, until powers of all S-SSBs except an S-SSB with a highest priority are backed off or sending of all S-SSBs except an S-SSB with a highest priority is stopped; and in ascending order of priorities, back off the transmit power or stop sending data on the at least one carrier and/or the S-SSB with the highest priority, or in ascending order of priorities, back off the transmit power or stop sending the data on the at least one carrier.

The apparatus is configured in or the apparatus itself is the first terminal device.

According to the solution of this application, the terminal device discards or performs power back-off on the data and/or the S-SSB based on at least one of the priority, the data type, the remaining PDB, and the SCS, so that a problem of a conflict between an S-SSB and data between different carriers can be resolved, and transmission of important data can be ensured.

Units in the apparatus are respectively configured to perform steps of the communication method in the eleventh aspect or the twelfth aspect and the implementations of the eleventh aspect or the twelfth aspect.

In a design, the apparatus is a communication chip, and the communication chip may include an input circuit or interface configured to send information or data, and an output circuit or interface configured to receive information or data.

In another design, the apparatus is a communication device, and the communication device may include a transmitter configured to send information or data, and a receiver configured to receive information or data.

According to a thirty-fourth aspect, a wireless communication apparatus is provided, and includes: a transceiver unit, configured to configure a sidelink synchronization signal block S-SSB resource on each carrier in a first carrier set to send and/or receive an S-SSB; and further configured to send at least one piece of data on a tenth resource.

Units in the apparatus are respectively configured to perform steps of the communication method in the eleventh aspect or the twelfth aspect and the implementations of the eleventh aspect or the twelfth aspect.

According to a thirty-fifth aspect, a wireless communication apparatus is provided, and includes: a transceiver unit, configured to transmit a first message on a twelfth resource; and

a processing unit, configured to: determine a first resource pool, and determine, from the first resource pool, at least two contiguous resource sets RB sets for transmitting the first message; determine a sub-channel index that is of each of at least two contiguous RB sets and that is for transmitting the first message; determine, based on the sub-channel index and/or a guard band, an eleventh resource for transmitting the first message in each RB set, where the guard band is an RB resource set located between the RB sets; and determine a twelfth resource, where the twelfth resource is a set of first resources that are for transmitting the first message and that correspond to each RB set.

The processing unit is further configured to determine a home of the guard band RB, where RBs in a guard band between a first RB set and a second RB set are equally divided into a first part and a second part based on a number, and one RB that is of the first part or the second part and that is adjacent to the first RB set in frequency domain belongs to the first RB set; RBs in a guard band between a first RB set and a second RB set are divided into a third part and a fourth part based on a first fixed bandwidth, the first fixed bandwidth is a configurable frequency range, and one RB that is of the third part or the fourth part and that is adjacent to the first RB set in frequency domain belongs to the first RB set; RBs in a guard band between a first RB set and a second RB set are divided into a fifth part and a sixth part based on configuration information, where the configuration information is an absolute index of a resource block at a division point or a relative index of a resource block in the guard band; or all RBs in a guard band between a first RB set and a second RB set belong to the first RB set and the second RB set.

The apparatus is configured in or the apparatus itself is the first terminal device.

According to the solution of this application, a UE may perform transmission by using different sub-channels or interlaces in different RB sets. In addition, resource utilization flexibility is improved.

Units in the apparatus are respectively configured to perform steps of the communication method in the thirteenth aspect or the fourteenth aspect and the implementations of the thirteenth aspect or the fourteenth aspect.

In a design, the apparatus is a communication chip, and the communication chip may include an input circuit or interface configured to send information or data, and an output circuit or interface configured to receive information or data.

In another design, the apparatus is a communication device, and the communication device may include a transmitter configured to send information or data, and a receiver configured to receive information or data.

According to a thirty-sixth aspect, a wireless communication apparatus is provided, and includes: a transceiver unit, configured to transmit a first message on a twelfth resource.

Units in the apparatus are respectively configured to perform steps of the communication method in the thirteenth aspect or the fourteenth aspect and the implementations of the thirteenth aspect or the fourteenth aspect.

According to a thirty-seventh aspect, a wireless communication apparatus is provided, and includes: a transceiver unit, configured to receive or send a first PSFCH on a thirteenth resource; and

a processing unit, configured to determine at least one RB set, where the at least one RB set is all RB sets in a resource pool, at least one RB set for transmitting a PSSCH corresponding to a first physical sidelink feedback channel PSFCH, or at least one (pre)configured RB set; and further configured to determine a thirteenth resource in the at least one RB set, where the thirteenth resource is for carrying the first PSFCH, and the thirteenth resource includes a first interlace (interlace), the thirteenth resource includes a second interlace and a first resource block RB, or the thirteenth resource includes a fourteenth resource and a second resource block RB, where the fourteenth resource includes at least two RBs.

The apparatus is configured in or the apparatus itself is the first terminal device.

Therefore, according to the solution of this application, a capacity of a PSFCH on a same time-frequency domain resource can be increased, and it is ensured that a PSFCH is transmitted on each RB set, thereby avoiding COT interruption.

Units in the apparatus are respectively configured to perform steps of the communication method in the fifteenth aspect or the sixteenth aspect and the implementations of the fifteenth aspect or the sixteenth aspect.

In a design, the apparatus is a communication chip, and the communication chip may include an input circuit or interface configured to send information or data, and an output circuit or interface configured to receive information or data.

In another design, the apparatus is a communication device, and the communication device may include a transmitter configured to send information or data, and a receiver configured to receive information or data.

According to a thirty-eighth aspect, a wireless communication apparatus is provided, and includes: a transceiver unit, configured to receive or send a first PSFCH on a thirteenth resource.

Units in the apparatus are respectively configured to perform steps of the communication method in the fifteenth aspect or the sixteenth aspect and the implementations of the fifteenth aspect or the sixteenth aspect.

According to a thirty-ninth aspect, a wireless communication apparatus is provided, and includes: a transceiver unit, configured to: send and/or receive a sidelink synchronization signal block S-SSB on a fifteenth resource; and send data on at least one resource in a first resource pool.

Optionally, the sending unit is further configured to send an S-SSB on a first channel and/or at least one second channel on a first transmission occasion, where the first channel is determined based on a preconfigured frequency, and the at least one second channel includes a channel in the first COT and/or a channel in a second COT, where the second COT is created by a second terminal device, or the at least one second channel includes a channel other than the first channel in the first resource pool.

Optionally, the transceiver unit is further configured to send an S-SSB on at least one of a first sub-resource, a second sub-resource, and a third sub-resource, where the first sub-resource is determined based on the preconfigured frequency, the second sub-resource is a resource that is other than the first sub-resource on the first channel determined based on the preconfigured frequency and that is for S-SSB transmission, the third sub-resource is a resource that is on the second channel and that is for S-SSB transmission, the second channel includes at least one channel in the first COT and the second COT, and the second COT is created by the second terminal device.

Optionally, the transceiver unit is configured to: send an S-SSB on the first sub-resource by using a ninth power or a fourth power, where the ninth power is determined based on a maximum transmit power of the apparatus and a fifth offset value, and the fourth power is determined based on a number of RBs used for each S-SSB; and send an S-SSB on the second sub-resource and the third sub-resource by using a tenth power or the fourth power, where the tenth power is determined based on the maximum transmit power of the apparatus and a sixth offset value; or send an S-SSB on the first sub-resource and the second sub-resource by using a ninth power or a fourth power, where the ninth power is determined based on a maximum transmit power of the apparatus and a fifth offset value, and the fourth power is determined based on a number of RBs used for each S-SSB; and send an S-SSB on the third sub-resource by using a tenth power or the fourth power, where the tenth power is determined based on the maximum transmit power of the apparatus and a sixth offset value.

Optionally, the transceiver unit is configured to send N S-SSBs.

Optionally, the transceiver unit is configured to send N S-SSBs, where the N S-SSBs are sent by using a first power or a second power, the first power is a maximum transmit power of the apparatus, and the second power is determined according to a number of resource blocks RBs used by the N S-SSBs.

Optionally, the transceiver unit is configured to send N S-SSBs, where an S-SSB on each of the first channel and/or the at least one second channel is sent by using a third power or a fourth power. The third power is determined based on a maximum transmit power of the apparatus, the third power is determined based on a maximum transmit power of the apparatus and a first offset value, or the third power is determined based on a maximum transmit power of the apparatus and Y, where Y is a sum of a channel number of the first channel and/or a channel number of the at least one second channel, and the fourth power is determined based on a number of RBs used for each S-SSB.

Optionally, the transceiver unit is configured to send N S-SSBs, where each of the N S-SSBs is sent by using a fifth power or a fourth power, the fifth power is determined based on a maximum transmit power of the apparatus and N, and the fourth power is determined based on a number of RBs used for each S-SSB.

Optionally, the transceiver unit is configured to: send an S-SSB on the first sub-resource by using a first power or a sixth power, where the first power is a maximum transmit power of the apparatus, and the sixth power is determined based on a number of RBs used for each S-SSB and a second offset value; and send an S-SSB on the second sub-resource and the third sub-resource by using the first power or a seventh power, where the seventh power is determined based on a number of RBs used for each S-SSB and a third offset value; or send an S-SSB on the first sub-resource and the second sub-resource by using a first power or a sixth power, where the first power is a maximum transmit power of the apparatus, and the sixth power is determined based on a number of RBs used for each S-SSB and a second offset value; and send an S-SSB on the third sub-resource by using the first power or a seventh power, where the sixth power is determined based on a number of RBs used for each S-SSB and a third offset value.

Optionally, the transceiver unit is configured to: send an S-SSB on the first sub-resource by using a first power or a sixth power, where the first power is a maximum transmit power of the apparatus, and the sixth power is determined based on a number of resource blocks RBs used for each S-SSB and a second offset value; and send an S-SSB on the second sub-resource and the third sub-resource by using an eighth power, where the eighth power is determined based on an energy detection threshold EDT and/or a fourth offset value, or is configured, or preconfigured, or predefined by a network device; or send an S-SSB on the first sub-resource and the second sub-resource by using a first power or a sixth power, where the first power is a maximum transmit power of the apparatus, and the sixth power is determined based on a number of RBs used for each S-SSB and a second offset value; and send an S-SSB on the third sub-resource by using the first power or an eighth power, where the eighth power is determined based on an energy detection threshold EDT and/or a fourth offset value, or is configured, or preconfigured, or predefined by the network device.

Optionally, the transceiver unit is configured to: send an S-SSB on the first sub-resource by using a ninth power or a fourth power, where the ninth power is determined based on a maximum transmit power of the apparatus and a fifth offset value, and the fourth power is determined based on a number of RBs used for each S-SSB; and send an S-SSB on the second sub-resource and the third sub-resource by using a tenth power or the fourth power, where the tenth power is determined based on the maximum transmit power of the apparatus and a sixth offset value; or send an S-SSB on the first sub-resource and the second sub-resource by using a ninth power or a fourth power, where the ninth power is determined based on a maximum transmit power of the apparatus and a fifth offset value, and the fourth power is determined based on a number of RBs used for each S-SSB; and send an S-SSB on the third sub-resource by using a tenth power or the fourth power, where the tenth power is determined based on the maximum transmit power of the apparatus and a sixth offset value.

Optionally, the fifth offset value is configured, preconfigured, or predefined by a network device, and the sixth offset value is determined based on the fifth offset value; the sixth offset value is configured, preconfigured, or predefined by a network device, and the fifth offset value is determined based on the sixth offset value; or the fifth offset value is configured, preconfigured, or predefined by a network device, and the sixth offset value is configured, preconfigured, or predefined by the network device.

Optionally, the transceiver unit is configured to: send N S-SSBs; and when a total transmit power of the N S-SSBs is greater than a first power, adjust each of the N S-SSBs to be sent by using a fifth power, where the first power is a maximum transmit power of the apparatus, and the fifth power is determined based on the first power and N.

Optionally, the transceiver unit is configured to: send N S-SSBs; and when a total transmit power of the N S-SSBs is greater than a first power, allocate a transmit power in descending order of the following priorities, so that the total transmit power is not greater than the first power, where the first power is the maximum transmit power of the apparatus: an S-SSB located on the first sub-resource, and an S-SSB located on the second sub-resource and/or the third sub-resource.

Optionally, the transceiver unit is configured to send the N S-SSBs, where the transmit power of each of the N S-SSBs is not less than a minimum power value, and the minimum power value is the EDT, is determined based on the EDT, or is configured, preconfigured, or predefined by the network device.

Optionally, the transceiver unit is configured to send N S-SSBs, where the transmit power of each of the N S-SSBs is not greater than a maximum power value, and the maximum power value is determined based on a regulatory power or power spectral density PSD, or is configured, preconfigured, or predefined by the network device.

Optionally, the processing unit is configured to select a plurality of contiguous resources in time domain to send the data. The transceiver unit is configured to use a gap GAP symbol of a resource other than a last resource in time domain in the plurality of resources for sidelink transmission. The sidelink transmission includes one or more of the following: a physical sidelink shared channel PSSCH, a physical sidelink control channel PSCCH, an S-SSB, and a physical sidelink broadcast channel PSBCH.

Optionally, the transceiver unit is configured to: transmit the PSSCH on the GAP symbol in a rate matching manner, transmit, on the GAP symbol, a transmission copy of a previous sideline symbol or a next sideline symbol, or transmit a cyclic prefix extension CPE on the GAP symbol.

Optionally, the processing unit is configured to indicate, in first-stage sidelink control information SCI, second-stage SCI, or a medium access control-control element MAC CE, whether a GAP symbol of the resource is used for sidelink transmission.

The processing unit is configured to: determine a first resource pool and a fifteenth resource, select at least one resource from the first resource pool, and create a channel occupancy time COT based on the at least one selected resource; and further configured to select a plurality of resources contiguous in time domain that do not overlap the fifteenth resource in time domain, where the COT does not overlap the fifteenth resource in time domain, and the first resource pool does not include a slot in which the fifteenth resource is located.

Optionally, the processing unit is configured to: when a total transmit power of the N S-SSBs is greater than a first power, allocate a transmit power in descending order of the following priorities, so that the total transmit power is not greater than the first power, where the first power is the maximum transmit power of the apparatus: an S-SSB located on the first sub-resource, and an S-SSB located on the second sub-resource and/or the third sub-resource.

The apparatus is configured in or the apparatus itself is the first terminal device.

Therefore, according to the solution of this application, a problem of COT interruption in S-SSB transmission can be avoided, so that S-SSB transmission is ensured, and data transmission is not interrupted.

Units in the apparatus are respectively configured to perform steps of the communication method in the seventeenth aspect and the implementations of the seventeenth aspect.

In a design, the apparatus is a communication chip, and the communication chip may include an input circuit or interface configured to send information or data, and an output circuit or interface configured to receive information or data.

In another design, the apparatus is a communication device, and the communication device may include a transmitter configured to send information or data, and a receiver configured to receive information or data.

According to a fortieth aspect, a wireless communication apparatus is provided, and includes a transceiver unit, configured to: send and/or receive a sidelink synchronization signal block S-SSB on a fifteenth resource; and send data on at least one resource in a first resource pool, where the first resource pool and the fifteenth resource are determined by a first terminal device.

Optionally, the transceiver unit is configured to receive an S-SSB on a first channel and/or at least one second channel on a first transmission occasion, where the first channel is determined based on a preconfigured frequency, and the at least one second channel includes a channel in a first channel occupancy time COT and/or a channel in a second COT, where the first COT is created by the apparatus based on at least one selected resource, and the second COT is created by a second apparatus, or the at least one second channel includes a channel other than the first channel in the first resource pool.

Optionally, the receiving unit is configured to receive an S-SSB on at least one of a first sub-resource, a second sub-resource, and a third sub-resource, where the first sub-resource is determined based on the preconfigured frequency, the second sub-resource is a resource that is other than the first sub-resource on the first channel determined based on the preconfigured frequency and that is for S-SSB transmission, the third sub-resource is a resource that is on the second channel and that is for S-SSB transmission, the second channel includes at least one channel in the first COT and the second COT, the first COT is created by the apparatus based on the at least one selected resource, and the second COT is created by the second apparatus, or the at least one second channel includes the channel other than the first channel in the first resource pool.

Units in the apparatus are respectively configured to perform steps of the communication method in the eighteenth aspect and the implementations of the eighteenth aspect.

According to a forty-first aspect, a wireless communication apparatus is provided, and includes: a transceiver unit, configured to send or receive a sidelink synchronization signal block S-SSB on a sixteenth resource; and a processing unit, configured to determine a first resource pool, where a first terminal device determines a sixteenth resource in the first resource pool; configured to determine the sixteenth resource after listen before talk LBT succeeds before the sixteenth resource; and further configured to determine at least one of a number of times of sending an S-SSB in a synchronization period, a maximum time domain gap between sending two adjacent S-SSBs in the synchronization period, and a minimum time domain gap between sending two adjacent S-SSBs in the synchronization period.

The apparatus is configured in or the apparatus itself is the first terminal device.

Therefore, according to the solution of this application, a problem of COT interruption in S-SSB transmission can be avoided, so that S-SSB transmission is ensured, and data transmission is not interrupted.

Units in the apparatus are respectively configured to perform steps of the communication method in the nineteenth aspect or the twentieth aspect and the implementations of the nineteenth aspect or the twentieth aspect.

In a design, the apparatus is a communication chip, and the communication chip may include an input circuit or interface configured to send information or data, and an output circuit or interface configured to receive information or data.

In another design, the apparatus is a communication device, and the communication device may include a transmitter configured to send information or data, and a receiver configured to receive information or data.

According to a forty-second aspect, a wireless communication apparatus is provided, and includes: a transceiver unit, configured to send or receive a sidelink synchronization signal block S-SSB on a sixteenth resource.

Units in the apparatus are respectively configured to perform steps of the communication method in the nineteenth aspect or the twentieth aspect and the implementations of the nineteenth aspect or the twentieth aspect.

According to a forty-third aspect, a wireless communication apparatus is provided, and includes: a transceiver unit, configured to send or receive a sidelink synchronization signal block S-SSB on a seventeenth resource; and a processing unit, configured to: determine a seventeenth resource after successfully performing listen before talk LBT, where the seventeenth resource is a resource in the 1st slot after the listen before talk succeeds.

The apparatus is configured in or the apparatus itself is the first terminal device.

Therefore, according to the solution of this application, a problem of COT interruption in S-SSB transmission can be avoided, so that S-SSB transmission is ensured, and data transmission is not interrupted.

Units in the apparatus are respectively configured to perform steps of the communication method in the twenty-first aspect or the twenty-second aspect and the implementations of the twenty-first aspect or the twenty-second aspect.

In a design, the apparatus is a communication chip, and the communication chip may include an input circuit or interface configured to send information or data, and an output circuit or interface configured to receive information or data.

In another design, the apparatus is a communication device, and the communication device may include a transmitter configured to send information or data, and a receiver configured to receive information or data.

According to a forty-fourth aspect, a wireless communication apparatus is provided, and includes: a transceiver unit, configured to send or receive a sidelink synchronization signal block S-SSB on a seventeenth resource.

Units in the apparatus are respectively configured to perform steps of the communication method in the twenty-first aspect or the twenty-second aspect and the implementations of the twenty-first aspect or the twenty-second aspect.

According to a forty-fifth aspect, a communication device is provided, and includes a processor and a memory. The memory is configured to store a computer program, and the processor is configured to invoke the computer program from the memory and run the computer program, to enable the communication device to perform the communication method according to any one of the first aspect to the twenty-second aspect and the implementations thereof.

Optionally, there are one or more processors, and there are one or more memories.

Optionally, the memory may be integrated with the processor, or the memory and the processor are separately disposed.

Optionally, the terminal device further includes a transmitter (transmitter) and a receiver (receiver).

According to a forty-sixth aspect, a communication system is provided, and includes the communication device provided in the forty-fifth aspect.

In a possible design, the communication system may further include another device that interacts with the communication device in the solutions provided in embodiments of this application.

According to a forty-seventh aspect, a communication system is provided, and includes a first terminal device and a second terminal device.

Optionally, the communication system is a vehicle to everything V2X system.

In a possible design, the communication system may further include another device that interacts with the communication device in the solutions provided in embodiments of this application.

According to a forty-eighth aspect, a computer program product is provided. The computer program product includes a computer program (which may also be referred to as code or instructions). When the computer program is run, a computer is enabled to perform the method according to any one of the first aspect to the twenty-second aspect and the possible implementations thereof.

According to a forty-ninth aspect, a computer-readable medium is provided. The computer-readable medium stores a computer program (which may also be referred to as code or instructions). When the computer program is run on a computer, the computer is enabled to perform the method according to any one of the first aspect to the twenty-second aspect and the possible implementations thereof.

According to a fiftieth aspect, a chip system is provided, and includes a memory and a processor. The memory is configured to store a computer program, and the processor is configured to invoke the computer program from the memory and run the computer program, to enable a communication device in which the chip system is installed to perform the method according to any one of the first aspect to the twenty-second aspect and the possible implementations thereof.

The chip system may include an input circuit or interface configured to send information or data, and an output circuit or interface configured to receive information or data.

## BRIEF DESCRIPTION OF DRAWINGS

FIG. 1 is a diagram of a communication system to which an information transmission method is applicable according to an embodiment of this application;

FIG. 2 is a diagram of another communication system to which an information transmission method is applicable according to an embodiment of this application;

FIG. 3 is a diagram of another communication system to which an information transmission method is applicable according to an embodiment of this application;

FIG. 4 is a diagram of a specific time-frequency structure of an S-SSB according to an embodiment of this application;

FIG. 5 is a diagram of interlaces according to an embodiment of this application;

FIG. 6 is a diagram of RB sets and guard bands according to an embodiment of this application;

FIG. 7 is a schematic flowchart of an information transmission method according to an embodiment of this application;

FIG. 8 is a schematic flowchart of another information transmission method according to an embodiment of this application;

FIG. 9 is a schematic flowchart of another information transmission method according to an embodiment of this application;

FIG. 10 is a diagram of a method for excluding an S-SSB and a resource pool on a multi-carrier according to an embodiment of this application;

FIG. 11 is a diagram of a method for configuring an S-SSB and a resource pool on a multi-carrier according to an embodiment of this application;

FIG. 12 is a diagram of another method for configuring an S-SSB and a resource pool on a multi-carrier according to an embodiment of this application;

FIG. 13 is a diagram of another method for configuring an S-SSB and a resource pool on a multi-carrier according to an embodiment of this application;

FIG. 14 is a diagram of another method for configuring an S-SSB and a resource pool on a multi-carrier according to an embodiment of this application;

FIG. 15 is a diagram of another method for configuring an S-SSB and a resource pool on a multi-carrier according to an embodiment of this application;

FIG. 16 is a diagram of another method for configuring an S-SSB and a resource pool on a multi-carrier according to an embodiment of this application;

FIG. 17 is a schematic flowchart of another information transmission method according to an embodiment of this application;

FIG. 18 is a diagram of RB sets and RB division in a guard band according to an embodiment of this application;

FIG. 19 is a diagram of a method for configuring a resource occupied for sending a PSFCH according to an embodiment of this application;

FIG. 20 is a diagram of another method for configuring a resource occupied for sending a PSFCH according to an embodiment of this application;

FIG. 21 is a diagram of another method for configuring a resource occupied for sending a PSFCH according to an embodiment of this application;

FIG. 22 is a diagram of another method for configuring a resource occupied for sending a PSFCH according to an embodiment of this application;

FIG. 23 is a diagram of another method for configuring a resource occupied for sending a PSFCH according to an embodiment of this application;

FIG. 24 is a diagram of another method for configuring a resource occupied for sending a PSFCH according to an embodiment of this application;

FIG. 25 is a diagram of a method for configuring a corresponding RB set for sending a PSFCH according to an embodiment of this application;

FIG. 26 is a block diagram of an example of a wireless communication apparatus according to this application; and

FIG. 27 is a diagram of a structure of an example of a terminal device according to this application.

## DESCRIPTION OF EMBODIMENTS

The following describes technical solutions of this application with reference to accompanying drawings.

The technical solutions in embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), an LTE system, an LTE frequency division duplex (frequency division duplex, FDD) system, LTE time division duplex (time division duplex, TDD), a universal mobile telecommunication system (universal mobile telecommunication system, UMTS), a worldwide interoperability for microwave access (worldwide interoperability for microwave access, WiMAX) communication system, a 5th generation (5th generation, 5G) system or a evolved communication system such as new radio (new radio, NR), vehicle-to-everything (vehicle-to-X V2X), where V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like, long term evolution-vehicle (long term evolution-vehicle, LTE-V), an internet of vehicles, machine type communication (machine type communication, MTC), an internet of things (internet of things, IoT), long term evolution-machine (long term evolution-machine, LTE-M), machine-to-machine (machine to machine, M2M), device-to-device (device to device, D2D), and the like.

A terminal device in embodiments of this application may be a user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in an evolved public land mobile network (public land mobile network, PLMN), or the like. This is not limited in embodiments of this application. For example, the terminal device may be a vehicle-mounted device, an entire vehicle device, a vehicle-mounted module, a vehicle, an onboard unit (on board unit, OBU), a roadside unit (roadside unit, RSU), a telematics box (telematics box, T-box), a chip, a system on chip (system on chip, SoC), or the like. The chip or the SoC may be installed in a vehicle, an OBU, an RSU, or a T-box.

The terminal device in embodiments of this application further includes at least any one of a user equipment, an augmented reality (augmented reality, AR)/virtual reality (virtual reality, VR)/extended reality (extended reality, XR) device, a wearable device, a smart home appliance terminal, a terminal device and a communication module of the terminal device, a mobile phone and a communication module of the mobile phone, a vehicle and a communication module of the vehicle, an information processing device, a display device, a network apparatus, a base station, a TRP, customer premise equipment (customer premise equipment, CPE), a router, a network access device, and the like. In terms of Uu (UTRAN-to-UE) air interface transmission, both parties of wireless communication include a network apparatus and a user communication device. In terms of SL air interface transmission, a receiving end and a transmitting end of wireless communication are both user communication devices. In a system architecture diagram, the network apparatus may be a conventional macro base station eNB in a conventional UMTS/LTE wireless communication system, may be a micro base station eNB in a heterogeneous network (heterogeneous network, HetNet) scenario, may be a baseband unit (base band unit, BBU) and a remote radio unit (remote radio unit, RRU) in a distributed base station scenario, may be a baseband pool BBU pool and a radio unit RRU in a CRAN scenario, or may be a gNB in a wireless communication system. The user communication device may be a vehicle-mounted communication module or another embedded communication module, or may be a handheld communication device of a user, including a mobile phone, a tablet computer, and the like. A network element in this application is mainly a V terminal device (vehicle user equipment).

The network apparatus in embodiments of this application may be a device configured to communicate with a terminal device. The network apparatus may be a base transceiver station (base transceiver station, BTS) in a global system for mobile communications (global system for mobile communications, GSM) or code division multiple access (code division multiple access, CDMA), may be a NodeB (NodeB, NB) in a wideband code division multiple access (wideband code division multiple access, WCDMA) system, may be an evolved NodeB (evolved NodeB, eNB or eNodeB) in an LTE system, or may be a radio controller in a cloud radio access network (cloud radio access network, CRAN) scenario. Alternatively, the network apparatus may be a relay station, an access point, a vehicle-mounted device, a wearable device, a network apparatus in a 5G network, a network apparatus in an evolved PLMN, or the like. This is not limited in embodiments of this application.

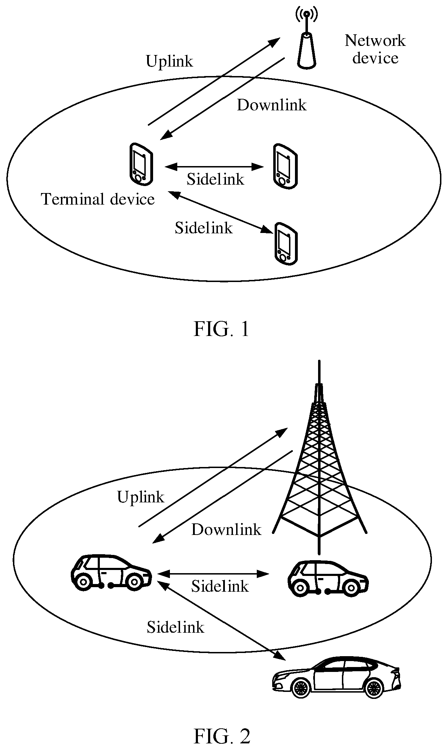

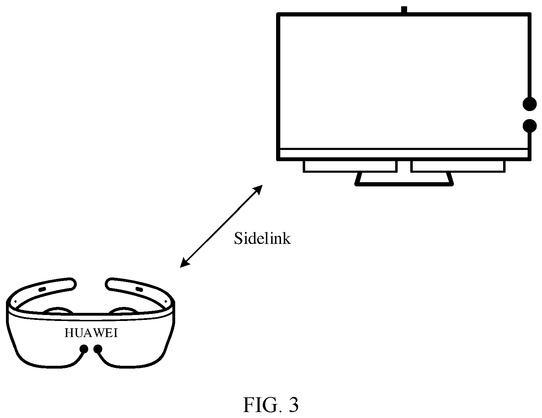

FIG. 1 to FIG. 3 are diagrams of communication systems to which embodiments of this application are applicable.

As shown in FIG. 1 to FIG. 3, an information transmission method provided in embodiments of this application may be applied to direct terminal communication (sidelink communication), vehicle-to-everything, cellular communication (including 5G NR communication and LTE), and a Wi-Fi communication system. A terminal device may perform communication through a sidelink when there is no network coverage. Alternatively, the terminal device may be in a coverage area of a network apparatus, and the terminal device in the coverage area may perform direct communication (sidelink communication) with a terminal device outside the coverage area.

It should be understood that a number of terminal devices and a number of network devices shown in FIG. 1 to FIG. 3 are merely examples, and the number of terminal devices and the number of network devices in the communication system are not limited in this application.

For ease of understanding embodiments of this application, concepts and technologies involved in embodiments of this application are briefly introduced first.

It should be understood that related terms and explanations below are universal in all embodiments in this specification. Different embodiments may be used independently, or may be used in combination based on some internal or external relationships. Different implementations in embodiments may be used independently or in combination.

1. Carrier aggregation (carrier aggregation, CA)

CA aggregates two or more component carriers (component carrier, CC) to support a larger transmission bandwidth. To efficiently utilize fragmented spectra, carrier aggregation supports aggregation of different CCs. Carrier aggregation may include: intra-band aggregation (intra-band CA) or inter-band aggregation (inter-band CA). Intra-band aggregation means that aggregated CCs belong to different bands. For intra-band aggregation, aggregated CCs belong to a same band, and intra-band aggregation may be further classified into intra-band adjacent or non-adjacent CC aggregation, and the like.

2. Resource

Specifically, the resource may be a time domain resource, a frequency domain resource, or a time-frequency resource. According to the standard NR protocol Rel-16/Rel-17, a scheduling granularity of a physical sidelink control channel PSCCH (physical sidelink control channel, PSCCH) or a physical sidelink shared channel (physical sidelink shared channel, PSSCH) is measured in a unit of one slot in time domain, and is measured in a unit of one or more contiguous sub-channels in frequency domain. A sending terminal device may send sidelink information on the resource. One resource may carry three types of channels, namely, a PSCCH, a PSSCH, and a physical sidelink feedback channel (physical sidelink feedback channel, PSFCH), and signals such as a demodulation reference signal (demodulation reference signal, DM-RS) and a channel state information reference signal (channel state information reference signal, CSI-RS). The PSCCH carries first-order sidelink control information (sidelink control information, SCI), the PSSCH carries second-order SCI and/or data, and the PSFCH carries feedback information. A PSCCH/PSSCH includes the PSCCH and/or the PSSCH.

3. Time unit and frequency domain unit

The time domain resource includes a symbol (symbol), a slot (slot), a mini-slot (mini-slot), a partial slot (partial slot), a subframe (sub-frame), a radio frame (frame), a sensing slot (sensing slot), and the like.

The frequency domain resource includes a resource element (resource element, RE), a resource block (resource block, RB), an RB set (RB set), a sub-channel (sub-channel), a resource pool (resource pool), a bandwidth part (bandwidth part, BWP), a carrier (carrier), a channel (channel), an interlace (interlace), and the like.

4. Resource pool (resource pool)

The resource pool is a time-frequency resource set. For example, the resource pool is a set of time-frequency resources that are on a sidelink (sidelink, SL) and that are used by a terminal device to transmit or receive a physical sidelink shared channel PSSCH and/or a physical sidelink control channel PSCCH. Different resource pools are distinguished by radio resource control (reference signal received power, RRC) signaling. The terminal device performs reception in a receiving resource pool, and performs sending in a sending resource pool. If resource pools have a same resource pool index, it may be considered that time-frequency resources in the resource pools completely overlap. For an SL mode 1, a base station schedules, for a UE, a resource for transmission. For an SL mode 2, the UE selects a resource from a resource pool according to a specific rule.

In SL-U, a band is shared by terminal devices in a plurality of forms. For example, an SL terminal device, a Wi-Fi terminal device, and a Bluetooth terminal device perform transmission in a same band. Therefore, a concept of SL dedicated resource pool does not necessarily exist. An SL resource pool may also be understood as a set of resources that may be used for SL transmission. In this embodiment, the resource pool may also be referred to as an RB set (RB set), a channel (channel), an operating channel (operating channel), and a nominal channel (nominal channel) bandwidth (bandwidth). Meanings of the channel and the RB set may be interchanged. In other words, the resource pool, the channel, the bandwidth, and the RB set all represent the set of resources used for SL transmission.

A bandwidth of the resource pool may be at least one of the {5, 10, 15, 20, 25, 30, 40, 50, 60, 70, 80, 90, 100} MHz.

The following describes a relationship between a resource pool and a channel. A bandwidth of a resource pool is C*20 MHz, where C is a positive integer, for example, C={1, 2, 3, 4, 5}. There is at least one channel in the resource pool. For example, the resource pool includes one channel, a channel bandwidth is 20 MHz, and a resource pool bandwidth is 20 MHz. For another example, the resource pool includes two channels, a channel bandwidth is 20 MHz, and a resource pool bandwidth is 40 MHz. For another example, the resource pool includes five channels, a channel bandwidth is 20 MHz, and a resource pool bandwidth is 100 MHz.

Similarly, a relationship between a resource pool and an RB set is explained. A frequency domain bandwidth of an RB set is 20 MHz. A bandwidth of a resource pool is C*20 MHz or C*20+C2 MHz, where C is a positive integer, for example, C={1, 2, 3, 4, 5}. For example, the bandwidth of the resource pool is 20 MHz, and the resource pool includes one RB set. For another example, the bandwidth of the resource pool is 50 MHz, the resource pool includes two RB sets, and the two RB sets may be adjacent or not adjacent in frequency domain. In some cases, one channel may be equal to or corresponding to one RB set.

5. Priority

A service priority of a terminal device is specifically a transmission priority (transmission priority) of the terminal device. Because the terminal device may send a plurality of services, priorities of the plurality of services may be different. Therefore, if a priority of the terminal device is merely described, it is not very accurate.

The service priority may also be referred to as an L1 priority (L1 priority), a physical layer priority, a priority carried in SCI, a priority corresponding to a PSSCH associated with SCI, a transmission priority, a priority of sending a PSSCH, a priority of resource selection, a priority of a logical channel, or a highest-level priority of a logical channel.

There is a specific correspondence between a priority level and a priority value. For example, a higher priority level corresponds to a lower priority value, or a lower priority level corresponds to a lower priority value. For example, a higher priority level corresponds to a lower priority value, and a priority value may be an integer ranging from 1 to 8 or an integer ranging from 0 to 7. If the priority value ranges from 1 to 8, the priority value 1 indicates a highest-level priority.

6. Sidelink synchronization signal and physical sidelink broadcast channel block (S-SSB)

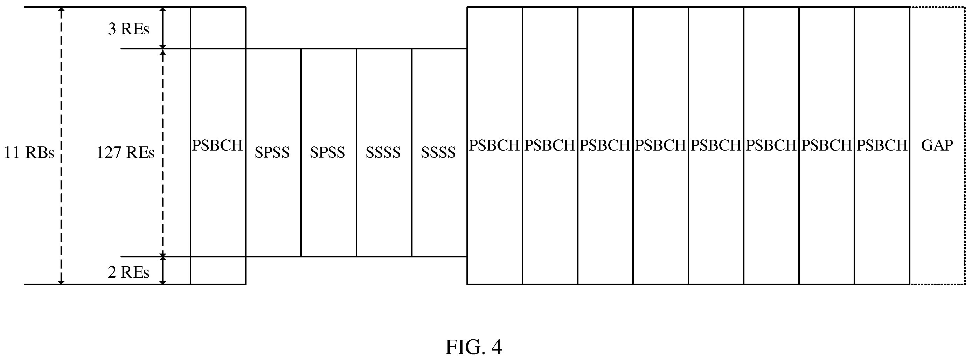

As shown in FIG. 4, in a new radio vehicle (new radio vehicle, NR-V) system, a time-frequency structure of an S-SSB is a structure of 13 symbols or 11 symbols, which are sequentially a physical sidelink broadcast channel (physical sidelink broadcast channel, PSBCH), a sidelink primary synchronization signal (sidelink primary synchronization signal, S-PSS), an SPSS, a sidelink secondary synchronization signal (sidelink secondary synchronization signal, S-SSS), an S-SSS, and PSBCHs. The PSBCHs occupy 11 resource blocks (resource blocks, RBs), and the S-PSS/S-SSS occupies 127 resource elements (resource element, REs). Table 1 lists resource occupancy.

Table 1: Resources occupied by an S-PSS, an S-SSS, a PSBCH, and a DM-RS in an S-SSB

| Channel or signal | Start location of a number $l$ of OFDM symbols relative to an S-SSB/PSBCH block | Start location of a number $k$ of subcarriers relative to an S-SSB/PSBCH block |
|---|---|---|
| S-PSS | 1, 2 | 2, 3, ..., 127, 128 |
| S-SSS | 3, 4 | 2, 3, ..., 127, 128 |
| Set to 0 | 1, 2, 3, 4 | 0, 1, 129, 130, 131 |
| PSBCH | $0, 5, 6, ..., N_{\text{symb}}^{\text{S-SSB}} - 1$ | 0, 1, ..., 131 |
| DM-RS for PSBCH | $0, 5, 6, ..., N_{\text{symb}}^{\text{S-SSB}} - 1$ | 0, 4, 8, ..., 128 |

A synchronization period is fixed to 160 ms, and two sets of synchronization resources (resource 1 and resource 2) or three sets of synchronization resources (resource 1, resource 2, and resource 3) may be (pre)configured in each period.

A number of S-SSBs included in each set of synchronization resources in each synchronization period may be (pre)configured. A method for (pre)configuring a specific location of each resource is as follows: An offset of the 1st S-SSB resource in a period relative to a start location of the period may be (pre)configured, and a spacing between a location of a subsequent S-SSB resource and the 1st S-SSB resource may be (pre)configured. Each S-SSB resource can send only one S-SSB. There is no design of a plurality of candidate resources in a window.

7. Physical sidelink feedback channel (physical sidelink feedback channel, PSFCH)

In sidelink communication, the PSFCH may be for transmitting feedback information. For example, for one PSSCH transmission, if a transmitting end adds hybrid automatic repeat request acknowledgment (hybrid automatic repeat request acknowledgment, HARQ-ACK) feedback enabling information to control information, a receiving end may feed back corresponding acknowledgement (acknowledgement, ACK) or negative (negative acknowledgement, NACK) information based on a decoding result of the PSSCH. The ACK or NACK information is transmitted through the PSFCH.

For example, one PSFCH occupies two contiguous orthogonal frequency division multiplexing (orthogonal frequency division multiplexing, OFDM) symbols in time domain and one physical resource block (physical resource block, PRB) in frequency domain.

A manner of determining an index of a PSFCH resource is $(P_{\text{ID}} + M_{\text{ID}}) mod R_{\text{PRB, CS}}^{\text{PSFCH}}$, where $P_{\text{ID}}$ is a physical layer source ID in an SCI received for scheduling a PSSCH; $R_{\text{PRB, CS}}^{\text{PSFCH}}$ is a total number of available frequency domain and code domain resources that are fed back; for a unicast PSSCH and a PSSCH of multicast Option2 (an ACK or a NACK needs to be fed back), $M_{\text{ID}}$ is 0; and for a PSSCH of multicast Option1 (only a NACK needs to be fed back, and feedback does not need to be performed in a case of an ACK), $M_{\text{ID}}$ is an ID, configured by a higher layer, of a UE that receives a PSSCH. After the index of the PSFCH resource is determined, a PSFCH transmission resource is determined from available frequency domain resources and code domain resources first in ascending order of frequency domain resources and then in ascending order of cyclic shift (cyclic shift, CS) resources.

8. Licensed spectrum and unlicensed spectrum

According to the Regulations on Radio Frequency Division of the People's Republic of China, bands are divided to fully, reasonably, and effectively use radio spectrum resources, ensure normal operation of radio services, and prevent mutual interference between radio services, radio stations, and systems. 2G/3G/4G technologies use licensed spectra, which need to be applied by telecom operators. This ensures low interference and security.

Spectra used in a wireless communication system are classified into two types: a licensed spectrum (licensed spectrum) and an unlicensed spectrum (unlicensed spectrum). In the licensed spectrum, a UE may use a spectrum resource based on scheduling performed by a network device. The following mainly describes the unlicensed spectrum. According to the Regulations on Radio Frequency Division of the People's Republic of China, bands are divided to fully, reasonably, and effectively use radio spectrum resources, ensure normal operation of radio services, and prevent mutual interference between radio services, radio stations, and systems. 2G/3G/4G technologies use licensed spectra, which need to be applied by telecom operators. This ensures low interference and security.

Technologies such as Wi-Fi, Bluetooth, and ZigBee use unlicensed spectra to serve as supplementary tools for operators to enhance their services. The licensed spectrum can be used for communication without application and are free of charge. Communication on the unlicensed spectrum needs to comply with some regulations, for example, listen before talk (listen before talk, LBT) and OCB (occupied channel bandwidth, OCB) requirements, to ensure access fairness between various terminal devices running on the spectrum.

9. Occupied channel bandwidth (occupied channel bandwidth)

According to a regulation requirement, when a channel is occupied on an unlicensed spectrum, the following requirement needs to be met: Simply speaking, when a channel is occupied on the unlicensed spectrum, an occupied channel bandwidth needs to reach 80% or more of an entire channel bandwidth. Usually, the channel bandwidth is 20 MHz. Temporary occupancy of less than 80% of the channel bandwidth is allowed, but a minimum bandwidth is 2 MHz. Occupancy is not required to be contiguous. For example, it is also considered that an OCB requirement is met when non-contiguous frequency domain resources are occupied, but a span between first and last occupied frequency domain resources meets a requirement of 80% or more of the channel bandwidth.

10. Received signal strength indicator (received signal strength indicator, RSSI) and reference signal received power (reference signal received power, RSRP) measurement

The received signal strength indicator (received signal strength indicator, RSSI) is defined as a linear average of a total received power of OFDM symbols, configured for a PSCCH and a PSSCH, starting from the 2nd OFDM symbol (in other words, not including an AGC symbol) in a slot on a configured sub-channel. The RSSI is not measured in a symbol in which a PSFCH is located.

In an actual measurement process, measurement energy of a resource of one symbol multiplied by one sub-channel is used to linearly average energy of symbols in a slot, to obtain one RSSI measurement value for a resource of one slot multiplied by one sub-channel. In symbols without a PSFCH, an average of energy values of 12 symbols from the 2nd to the 13th symbols is measured. In symbols with a PSFCH, an average of energy values of 9 symbols from the 2nd to the 10th symbols is measured.

In NR, an RSSI is one RSSI measurement value for a resource of one slot multiplied by one sub-channel. In other words, if a PSCCH/PSSCH occupies three sub-channels, three RSSI measurement values of the three sub-channels are obtained separately.

A PSSCH-RSRP is defined as an average of a power (a power of a CP part is not calculated) of useful signals (namely, PSSCH-DMRSs) on all REs carrying the PSSCH-DMRSs in linear domain. APSCCH-RSRP is defined as an average of a power (a power of a CP part is not calculated) of useful signals (namely, PCSCH-DMRSs) on all REs carrying the PSCCH-DMRSs in linear domain. The RSRP is not measured in a symbol in which a PSFCH is located.

In NR, the RSRP is one RSRP measurement value of resources of total sub-channels for one slot multiplied by a PSSCH or a PSCCH. In other words, if a PSSCH occupies three sub-channels, one RSRP measurement value of the three sub-channels is obtained.

11. Listen before talk (listen before talk, LBT)

The LBT mechanism is a channel access rule based on random back-off (random back-off). To be specific, before accessing a channel and starting to send data, a terminal needs to sense whether the channel is idle (idle). If the terminal senses that the channel is idle for a specific period of time, the terminal may occupy the channel. If the terminal senses that the channel is not idle, the terminal may occupy the channel only after the channel is restored to idle again. The LBT mechanism is a mandatory feature for using an unlicensed band because there are regulation (regulation) requirements for using unlicensed bands in various regions around the world. Various forms of terminal devices working based on different communication protocols can use the unlicensed bands only when regulations are met, thereby relatively fairly and efficiently using spectrum resources. To comply with regulations, the 3GPP organization classifies an LBT mechanism in an NR system into the following types:

Category 1 LBT (category 1 LBT): After obtaining a COT, a communication device sends data immediately after a short switching gap (switching gap) from a reception state. This is referred to as Cat 1 LBT for short. The COT refers to a time period in which the communication device is allowed to occupy a channel after successfully accessing the channel, where a time period of the switching gap cannot be greater than 16 us.
Category 2 LBT (category 2 LBT) is LBT without random back-off, and is referred to as Cat 2 LBT for short. To be specific, after sensing that a channel is in an idle state for a fixed period of time, a communication device may send data without performing random back-off.

Category 3 LBT (category 3 LBT) is random back-off LBT with a fixed size of a contention window (contention window), and is referred to as Cat 3 LBT for short. To be specific, a communication device generates a random number N based on a contention window of a fixed size, and may send data after sensing that a channel is in an idle state for a period of time determined based on the random number N. The size of the contention window is related to a minimum value and a maximum value of N.

Category 4 LBT (category 4 LBT) is random back-off LBT with a variable size of a contention window, and is referred to as Cat 4 LBT for short. To be specific, a communication device generates a random number N based on a contention window of a variable size, and may send data after sensing that a channel is in an idle state for a period of time determined based on the random number N. The size of the contention window is related to a minimum value and a maximum value of N, and the communication device may change the size of the contention window.

An NR-U device complies with the 3GPP protocol, and uses an LBT mechanism as a channel access method. Specifically, the NR-U device uses the following types of LBT.

Type 1 LBT: Cat 4 LBT. The NR-U device can access a channel and send data only after performing random back-off. Specifically, a network device or a terminal device may initiate transmission after the network device or the terminal device first senses that a channel is idle in a sensing slot duration (sensing slot duration) of a period of extended duration time (defer sensing) (the time is denoted as Td) and after a counter N in the following step 4 is zero. Specifically, according to the following steps, the counter N is adjusted by sensing a channel to obtain an additional sensing slot duration.

Step 1: Set N=$N_{init}$ and perform step 4. $N_{init}$ is a random number ranging from 0 to $CW_p$, and $CW_p$ is a contention window (contention window).

Step 2: If N>0, the network device or the terminal device chooses to decrease a counter value, for example, sets N=N-1.

Step 3: Sense the channel to obtain the additional sensing slot duration; and if the channel in the additional sensing slot duration is idle, perform step 4; otherwise, perform step 5.

Step 4: If N=0, stop; otherwise, perform step 2.

Step 5: Listen to the channel, until it is sensed, in another $T_d$, that the channel is busy, or it is sensed that the channel is detected to be idle in all sensing slots in another $T_d$.

Step 6: If the channel is detected to be idle in all sensing slots in another $T_d$, perform step 4; otherwise, perform step 5.

$T_d$ includes $T_f$=16 us and subsequent $m_p$ contiguous sensing slot durations (denoted as $T_{sl}$).

Type 2A LBT: Cat 2 LBT with a gap of 25 us. After sensing that a channel is idle for 25 us, the NR-U device may access the channel and send data.

Type 2B LBT: Cat 2 LBT with a gap of 16 us. After sensing that a channel is idle for 16 us, the NR-U device may access the channel and send data.

Type 2C LBT: Cat 1 LBT with a gap of a maximum of 16 us. The NR-U device does not need to perform channel listening, and may directly access a channel and send data after a switching gap of a maximum of 16 us in a COT.

12. Channel occupancy (channel occupancy, CO) and channel occupancy time (channel occupancy time, COT)

Channel occupancy (CO, channel occupancy) refers to transmission on one or more channels after a terminal device performs a channel access process. After performing Type 1 channel access, the terminal device occupies a channel for transmission in a contiguous period of time, which is referred to as a channel occupancy time (channel occupancy time, COT). A frequency domain unit of the COT is a channel, and a time domain unit is ms or a slot. In embodiments of this application, the COT may be a time concept, that is, a time of SL transmission, or may be a resource concept, that is, a time-frequency resource occupied for SL transmission. In embodiments of this application, if no further differentiation is made, the COT and the CO are a same concept. The terminal device may perform transmission on a plurality of adjacent or non-adjacent channels. In embodiments of this application, that the terminal device performs transmission on a plurality of channels may be understood as follows: Transmission of the terminal device occupies one COT, and the COT occupies a plurality of channels in frequency domain; or transmission of the terminal device occupies a plurality of COTs, and each COT occupies one channel in frequency domain.

The COT can be shared for transmission between terminal devices (COT sharing). The terminal device initializing a COT may share the COT with another terminal device. In other words, the COT is used for SL transmission of the another terminal device. The terminal device initializing the COT and the terminal device that shares the COT occupy a channel for transmission in a period of contiguous time. The COT sharing needs to meet a corresponding condition. For example, the terminal device initializing the COT is a receiving terminal device or a sending terminal device of the terminal device that shares the COT. For another example, the terminal device initializing the COT and the terminal device that shares the COT are members in a same group.

Transmission between terminal devices cannot exceed a maximum channel occupancy time (maximum channel occupancy time, MCOT), which is denoted as $T_{cot,\,p}$. For different CAPCs, values of $T_{cot,\,p}$ are different. For one terminal device that accesses a channel and performs transmission in a COT, a transmission time period does not exceed the maximum channel occupancy time $T_{cot,\,p}$. For transmission performed by a plurality of terminal devices in a COT, transmission times of a terminal device initializing a COT and a terminal device that shares the COT do not exceed the maximum channel occupancy time $T_{cot,\,p}$. P is a CAPC of the terminal device initializing the COT; or P is a CAPC with a smallest CAPC value of a terminal device that performs transmission in the COT.

COT interruption/COT continuity: The COT has a specific length. On an unlicensed spectrum, use of a resource is based on LBT. If a UE does not perform transmission within a specific duration (for example, on an S-SSB occasion) after accessing a channel for transmission, another SL-U, Wi-Fi, or NR-U device may access the channel through LBT and use the channel. In this case, a COT of the original UE is interrupted, which is also referred to as that COT continuity is not maintained, or referred to as a COT loss. As a result, the terminal initializing the COT cannot continue to perform transmission or share the COT with another terminal after the interruption.

In a possible implementation, an S-SSB is sent only once on each S-SSB occasion, and a frequency domain resource of the S-SSB is determined based on preconfiguration. However, in a scenario in which a resource pool or a BWP includes a plurality of RB sets, an S-SSB occasion is located in a COT in time domain. If an S-SSB is still sent only at a preconfigured frequency domain location, a COT in another RB set in which no S-SSB is sent may be interrupted. In this case, the terminal may need to send an additional S-SSB in the another RB set, to ensure COT continuity.

## 13. Interlace (interlace or interlaced resource blocks)

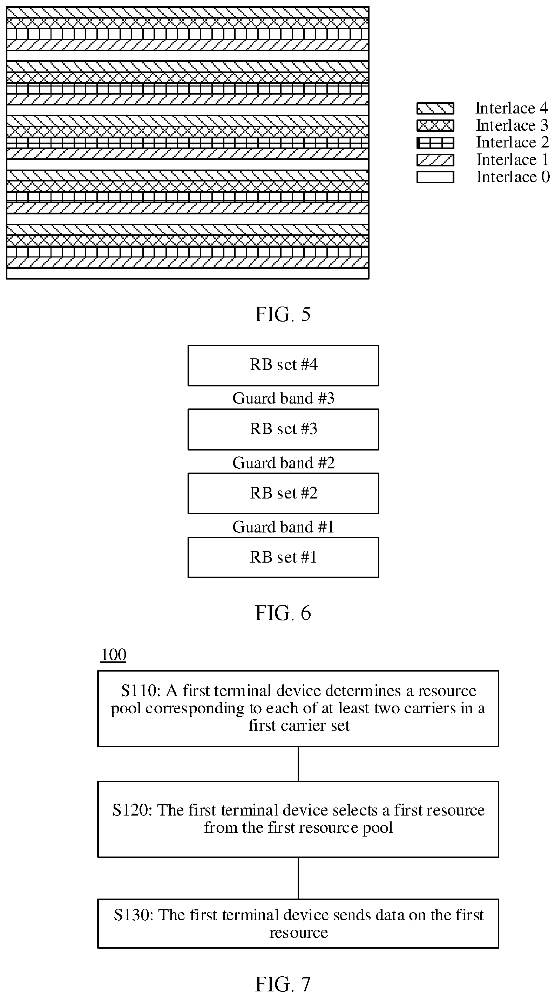

As shown in FIG. 5, a protocol defines multiple interlaces of resource blocks (multiple interlaces of resource blocks), which are referred to as interlaces for short below. Interlace m is formed by common resource blocks (common resource blocks, CRBs) {m, M + m, 2M + m, 3M + m, ... }, where M is a number of interlaces, and $m \in \{0,1, ..., M - 1\}$. Optionally, a value of M is related to an SCS. For example, for a 20 MHz channel bandwidth or an RB set, when $\mu=0$ (that is, the subcarrier spacing is 15 kHz), the value of M is 10. For another example, when $\mu = 1$ (that is, the subcarrier spacing is 30 kHz), the value of M is 5. When there are a plurality of RB sets, one interlace crosses the plurality of RB sets. For example, for two contiguous RB sets, for the given $\mu$, the value of M remains unchanged, but RBs included in each interlace are twice of original RBs.

A relationship between $\mathrm{CRB}\,n_{\mathrm{CRB}}^{\mu}$ and interlaced resource blocks, BWP i, and interlace m meet:

$$n_{\mathrm{CRB}}^{\mu} = M \times n_{\mathrm{IRB},m}^{\mu} + N_{\mathrm{BWP},i}^{\mathrm{start},\mu} + \left( \left( m - N_{\mathrm{BWP},i}^{\mathrm{start},\mu} \right) \bmod M \right)$$

, where $N_{\mathrm{BWP},i}^{\mathrm{start},\mu}$ represents a start common resource block of the BWP, and is a number of CBRs relative to common resource block 0. When there is no risk of confusion, index $\mu$ can be omitted. The terminal device expects that a number of common resource blocks in an interlace included in BWP i be not less than 10. For ease of description, the common resource block CRB may be understood as an RB.

A resource allocation manner includes two manners: contiguous allocation and interlaced allocation. The interlace may also be denoted as interleaving, interlacing, row-by-row, or combing. One interlace includes N contiguous RBs, and a transmission bandwidth includes M interlaces. Optionally, spacings between RBs in the interlace may be the same or different. For example, in one interlace, an RB spacing may be M RBs. In addition, the RB may also be referred to as a physical resource block (physical resource block, PRB).

In embodiments of this application, transmitting, sending, or receiving in an interlace manner may also be understood as "mapping in an interlace manner" or "decoding in an interlace manner".

In addition, transmission of one UE on a channel may be performed in an interlace manner, or may be performed in a non-interlace manner. The "non-interlace manner" may also be referred to as a channel manner, a sub-channel manner, or a manner of fully occupying a channel.

Granularities of frequency domain resource allocation and resource selection for sidelink transmission on an unlicensed spectrum are still a sub-channel (sub-channel). For contiguous resource occupancy, one sub-channel includes contiguous RBs. For resource occupancy on an interlace, a relationship between a sub-channel and an interlace needs to be determined. There are two types of definitions of a sub-channel: The sub-channel is defined within an RB set (within an RB set), or the sub-channel is defined across RB sets (across RB sets). For the former, one sub-channel may include RBs of one or more interlaces in one RB set. For the latter, one sub-channel may include RBs of one or more interlaces in a plurality of RB sets.

## 14. Guard band (guard band, GB)

As shown in FIG. 6, because a UE may allocate resources of only one or more RB sets during transmission, to reduce interference between different RB sets, a guard band (guard band) with a configurable start RB and a configurable number of RBs is introduced between RB sets. Usually, an RB in a guard band cannot be used for transmission. Unless the UE uses a plurality of contiguous RB sets for transmission, guard bands RBs between the plurality of RB sets may be used for transmission. For example, if RB set #2 and RB set #3 are used for transmission, guard band #2 is available, and the other guard bands are unavailable.

15. Conflict

In embodiments of this application, a sending-reception conflict is a transmission conflict caused by a limitation of half-duplex on a UE. The half-duplex means that data may be transmitted in two directions of a signal carrier, but at a moment, data is allowed to be transmitted in only one direction. A sending-sending conflict is a conflict caused when a sum of a number of carriers carrying sent data and a number of carriers carrying an S-SSB at a same moment exceeds a number of supported carriers limited by a sending capability of the UE, or a conflict caused when a total concurrent transmit power on a plurality of CCs exceeds a maximum transmit power Pcmax of the UE.

16. Back-off power

Peak powers of most systems are limited. To ensure efficiency, a power obtained under a specific output power back-off condition is used. When a power peak-to-average ratio of an uplink signal is high, a power needs to be backed off to a linear area of an amplifier. A larger number of RBs indicates a higher modulation scheme and a larger required power back-off value. In an NR system, a terminal is allowed to properly back off a maximum transmit power in a specific modulation scheme and RB allocation mechanism, to alleviate a problem of a transmit indicator exceeding a threshold or an occupied bandwidth exceeding a threshold caused by high-order modulation. In this application, power back-off is performed based on a current transmit power or a calculated transmit power, to reduce a transmit power, so that a total concurrent transmit power does not exceed a maximum transmit power limit of a device.

17. Channel

The channel may also be referred to as an RB set. In an RB set, because an S-SSB includes only 11 PRBs in frequency domain, an OCB requirement cannot be met. In a possible implementation, frequency domain repetition is used to meet the OCB requirement. To be specific, on an S-SSB occasion, in an RB set, a UE sends one S-SSB or repeatedly sends a plurality of S-SSBs in frequency domain. Optionally, a typical bandwidth of an RB set is 20 MHz. The S-SSB occasion is a transmission occasion for transmitting an S-SSB, and may also be referred to as an S-SSB slot.

FIG. 7 is a schematic flowchart of an information transmission method according to an embodiment of this application. As shown in the figure:

S110: A first terminal device determines a resource pool corresponding to each of at least two carriers in a first carrier set.

The first carrier set is carrier aggregation CA. A component carrier CC is a carrier for transmission in CA transmission, and subcarrier spacings SCSs of component carrier CCs may be the same or may be different.

The resource pool is a set of time-frequency resources used by a device to receive and/or send data. The resource pool is independent. In other words, resource pools corresponding to carriers may be different.

It should be understood that a same resource pool may be configured for a plurality of carriers.

It should be understood that determining the resource pool further includes configuring a time-frequency resource for sending or receiving a sidelink synchronization signal block S-SSB on each carrier, where the S-SSB resource is for sending and/or receiving an S-SSB, and the S-SSB includes a sidelink primary synchronization signal S-PSS, a sidelink secondary synchronization signal S-SSS, and a physical sidelink broadcast channel PSBCH. Time-frequency resources of S-SSBs may be configured on all CCs in the CA, or time-frequency resources of S-SSBs may be configured on some CCs in the CA. This is not limited in this application.

It should be understood that, in this embodiment of this application, configuration or (pre)configuration may be configuration performed based on at least one of an RRC configuration, a DCI indication, an SCI indication, a MAC CE indication, or a predefinition.

It should be understood that, in an LTE-V CA system, a terminal device may perform synchronous reception and periodic obtaining of an S-SSB on each CC. However, to avoid mutual conflict and interference between transmission of the terminal device on a plurality of CCs, another manner may be used. One CC is selected from an available CC set as a synchronization carrier for synchronization, and timing synchronization information is applied to all CCs. This helps ensure timing alignment on each CC, so that boundaries of subframes are aligned.

It should be understood that the terminal device may send an S-SSB on a carrier used for S-SSB receiving, or the terminal device may send an S-SSB on each CC and some CCs. Specific CCs on which an S-SSB is sent are determined by the UE based on a transmit capability of the terminal.

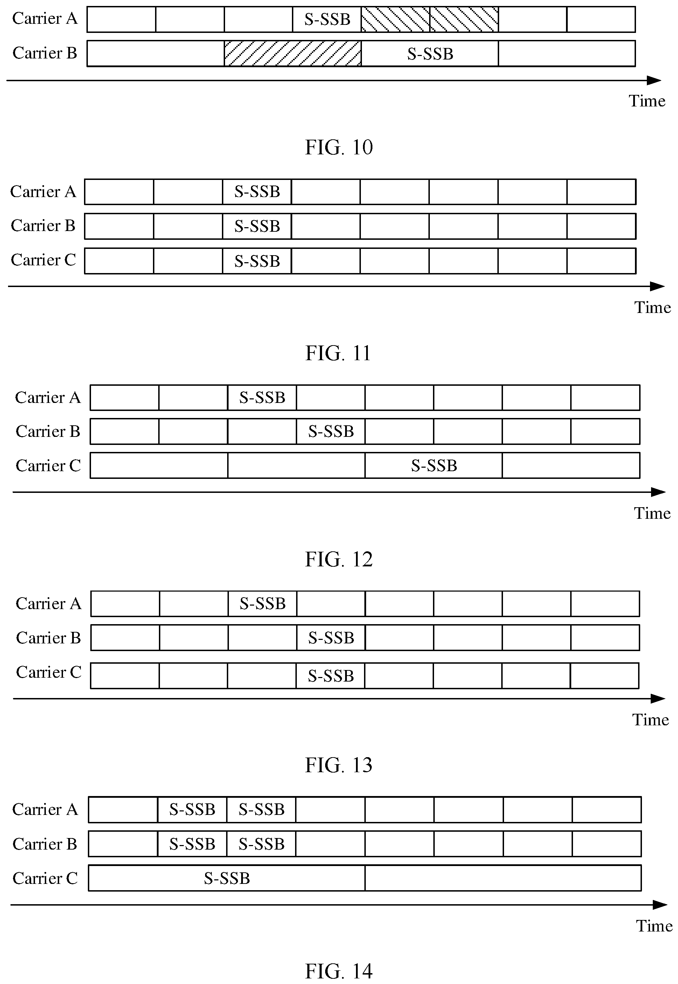

In a possible implementation, as shown in FIG. 11, in an LTE-V CA system, because only a 15 kHz SCS is supported, lengths of all subframes are the same, and it is restricted that time domain locations and numbers of S-SSB resources on all CCs are consistent. Therefore, when the resource pool is determined and an S-SSB resource is excluded from each CC, a same number of subframes at same locations are excluded.

It should be understood that, in an NR-V system, different requirement scenarios are applicable, and SCSs of all CCs may be different. Therefore, the foregoing implementation of determining the resource pool is not applicable to the NR-V CA system.

In a possible implementation, any resource in the resource pool corresponding to any carrier in the first carrier set does not overlap, in time domain, an S-SSB resource on any carrier in a second carrier set, where the second carrier set includes all carriers in the first carrier set. In other words, the resource pool excludes all resources in slots in which S-SSB resources on all carriers are located.

In another possible implementation, any resource in the resource pool corresponding to any carrier in the first carrier set does not overlap, in time domain, an S-SSB resource on any carrier in a second carrier set, where the second carrier set includes at least one carrier whose subcarrier spacing SCS is a first SCS in the first carrier set. In other words, the resource pool excludes resources in slots in which S-SSB resources on carriers having a same SCS are located.

Optionally, in this implementation, the first terminal device sends and/or receives an S-SSB only on a carrier in the second carrier set. In other words, the first terminal device does not send and/or receive an S-SSB on a carrier other than the second carrier set.

In another possible implementation, any resource in the resource pool corresponding to any carrier in the first carrier set does not overlap, in time domain, an S-SSB resource on any carrier in a second carrier set, where the second carrier set includes at least one carrier with a smallest SCS in the first carrier set. In other words, the resource pool excludes resources in slots in which S-SSB resources on carriers with the smallest SCS are located.

Optionally, in this implementation, a start location and an end location of an S-SSB resource on each carrier in the first carrier set in time domain are within a first range, where the first range is a time domain range corresponding to an S-SSB resource on the at least one carrier with the smallest SCS in the first carrier set.

Further, optionally, start locations of S-SSB resources on all carriers in the first carrier set are aligned in time domain, or end locations of S-SSB resources on all carriers in the first carrier set are aligned in time domain.

In the NR-V system, a location relationship between S-SSB resources on CCs of different SCSs may be constrained in the following manner.

Optionally, time-domain start locations of S-SSB resources on CCs of different SCSs may be aligned in this manner.

Therefore, on different CCs, values of $N_{\mathrm{period}}^{\mathrm{S-SSB}}$ may be limited to be the same. In other words, numbers of S-SSB resources in periods on all carriers are equal. A relationship between $N_{\mathrm{interval}}^{\mathrm{S-SSB}}$ of CCs of different SCSs is:

$$N_{\mathrm{interval}}^{\mathrm{S-SSB}}(SCS1)=N_{\mathrm{interval}}^{\mathrm{S-SSB}}(SCS2)*(SCS1/SCS2+1)$$, or may be converted into a relationship between $N_{\mathrm{interval}}^{\mathrm{S-SSB}}$ and $\mu$: $N_{\mathrm{interval}}^{\mathrm{S-SSB}}(\mu1)=N_{\mathrm{interval}}^{\mathrm{S-SSB}}(\mu2)*$ $(2^{\mu1}/2^{\mu2}+1)$.

In addition, a relationship between $N_{\mathrm{offset}}^{\mathrm{S-SSB}}$ of CCs of different SCSs is $N_{\mathrm{offset}}^{\mathrm{S-SSB}}(SCS1)=N_{\mathrm{offset}}^{\mathrm{S-SSB}}(SCS2)*SCS1/SCS2$, or may be converted into a relationship between $N_{\mathrm{interval}}^{\mathrm{S-SSB}}$ and $\mu$: $N_{\mathrm{offset}}^{\mathrm{S-SSB}}(\mu1)=N_{\mathrm{offset}}^{\mathrm{S-SSB}}(\mu2)*2^{\mu1}/2^{\mu2}$.

Table 2 Relationship between SCS and $\mu$

| $\mu$ | $\Delta f = 2^{\mu} \cdot 15$ [kHz] |
|---|---|
| 0 | 15 |
| 1 | 30 |
| 2 | 60 |
| 3 | 120 |

S120: The first terminal device selects a first resource from the resource pool.

The first resource is at least one resource in the resource pool.

It should be understood that, in the foregoing implementation, a conflict between an S-SSB and data has been avoided during resource pool configuration, and all resources in the resource pool are resources that can be selected by the first terminal device.

S130: The first terminal device sends data on the first resource.

In FIG. 11 to FIG. 16, because SCSs of different carriers may be different, lengths of slots are different. To better describe slot locations on different carriers, a slot location relative to carrier A is used for description. For example, in FIG. 12, a fifth slot and a sixth slot of carrier C are described relative to a location of carrier A, and actually represent a third slot of carrier C. This manner is used in subsequent descriptions.

It should be understood that, in FIG. 11 to FIG. 16, carrier A, carrier B, and carrier C are examples in the first carrier set.

It should be understood that slot lengths on carriers of different SCSs in the resource pool are different. It may be considered that an entire slot overlaps provided that there is overlapping in time domain in cases of different slot lengths. In other words, an entire slot, on a carrier, in which a transmission overlaps an S-SSB resource in time domain is excluded from the resource pool.

For example, as shown in FIG. 10, an S-SSB resource is configured in both a fourth slot of carrier A and a fifth slot and a sixth slot of carrier B. When a resource on a carrier with a smaller SCS is excluded because an S-SSB is transmitted on a carrier with a larger SCS, the entire overlapped slot is excluded. When a resource on a carrier with a larger SCS is excluded because an S-SSB is transmitted on a carrier with a smaller SCS, a plurality of corresponding slots are excluded. To be specific, the fifth slot and the sixth slot of carrier A are excluded together because the S-SSB resource on carrier B is excluded, and a third slot and a fourth slot of carrier B are excluded together because the S-SSB resource on carrier A is excluded.

In a possible embodiment, each carrier excludes a resource that overlaps, in terms of slots, S-SSB resources configured on all carriers and that is in a resource pool of the carrier.

By way of example but not limitation, as shown in FIG. 12, carrier A corresponds to resource pool #A, carrier B corresponds to resource pool #B, carrier C corresponds to resource pool #C, an S-SSB is separately transmitted in a third slot of carrier A, a fourth slot of carrier B, and a fifth slot and a sixth slot of carrier C, and SCSs of carrier A and carrier B are the same, and are different from an SCS of carrier C. When time-frequency resources in the resource pools are configured, resource pools #A, #B, and #C exclude resources that overlap the third slot, the fourth slot, the fifth slot, and the sixth slot in time domain.

In a possible embodiment, each carrier in the first carrier set excludes a resource that overlaps, in terms of slots, S-SSB resources configured on all carriers and that is in a resource pool of the carrier, and SCSs of the carriers are (pre) configured to be the same.

By way of example but not limitation, as shown in FIG. 13, carrier A corresponds to resource pool #A, carrier B corresponds to resource pool #B, carrier C corresponds to resource pool #C, an S-SSB is separately transmitted in a third slot of carrier A, a fourth slot of carrier B, and a fourth slot of carrier C, and SCSs of carriers A, B, and C are the same. When time-frequency resources in the resource pools are configured, resource pools #A, #B, and #C exclude resources that overlap the third slot and the fourth slot in time domain.

In a possible embodiment, each carrier in the first carrier set excludes, from a resource pool of the carrier, a resource that overlaps, in terms of slots, an S-SSB resource configured on a carrier having a first SCS. In this case, an S-SSB is sent and/or received only on the carrier having the first SCS. In other words, the first terminal device does not send and/or receive an S-SSB on a resource other than the S-SSB resource on the carrier having the first SCS.

Optionally, quantities and time domain locations of S-SSB resources on carriers having the first SCS are the same.

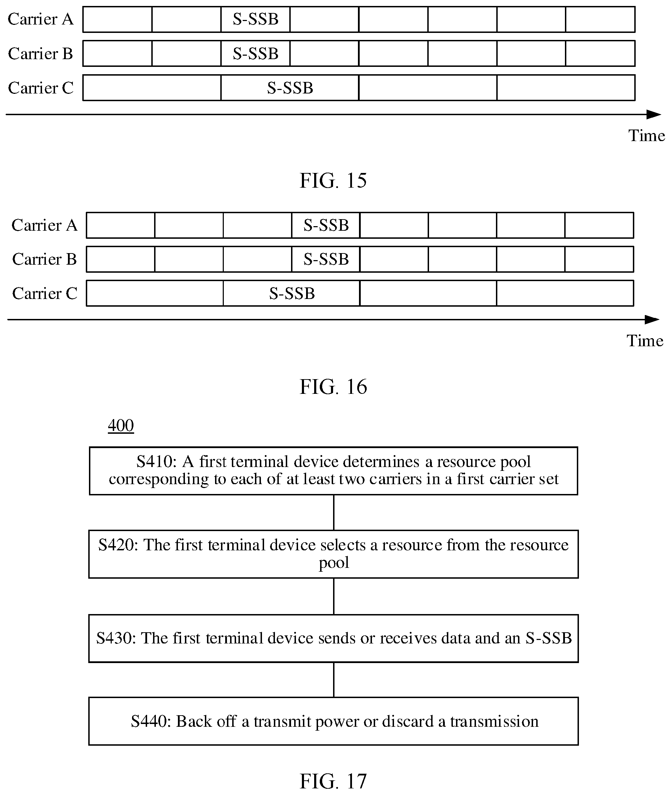

By way of example but not limitation, as shown in FIG. 15, carrier A corresponds to resource pool #A, carrier B corresponds to resource pool #B, carrier C corresponds to resource pool #C, an S-SSB resource is separately configured in a third slot of carrier A, a fourth slot of carrier B, and a fourth slot of carrier C, an S-SSB is not transmitted on the S-SSB resource of carrier C according to (pre)configuration, and SCSs of carrier A and carrier B are the same, and are different from an SCS of carrier C. When time-frequency resources in the resource pools are configured, resource pools #A, #B, and #C exclude resources that overlap the third slot in time domain.

In a possible embodiment, each carrier in the first carrier set excludes, from a resource pool of the carrier, a resource that overlaps, in terms of slots, an S-SSB resource configured on a carrier with the smallest SCS. In other words, any resource in a resource pool corresponding to any carrier does not overlap in time domain an S-SSB resource on any carrier in the second carrier set, where the second carrier set includes the at least one carrier with the smallest SCS in the first carrier set.

By way of example but not limitation, as shown in FIG. 14, carrier A corresponds to resource pool #A, carrier B corresponds to resource pool #B, carrier C corresponds to resource pool #C, an S-SSB resource is separately configured in a second slot and a third slot of carrier A, a second slot of carrier B, a second slot and a third slot of carrier B, and a first slot to a fourth slot of carrier C, and SCSs of carrier A and carrier B are the same, and are greater than an SCS of carrier C. In this case, the S-SSB resources on carrier A and carrier B are located in a slot of an S-SSB resource of carrier C in time domain. When time-frequency resources in the resource pools are configured, resource pools #A, #B, and #C exclude resources that overlap the first slot to the fourth slot in time domain.

Optionally, quantities and time domain locations of S-SSB resources on carriers having a same SCS are the same.

Further, optionally, start locations or end locations of S-SSB resources on different carriers are aligned.

Specifically, it may be determined based on the foregoing formula for restricting a location relationship between S-SSB resources on carriers having different SCSs.

By way of example but not limitation, as shown in FIG. 15, carrier A corresponds to resource pool #A, carrier B corresponds to resource pool #B, carrier C corresponds to resource pool #C, an S-SSB is separately transmitted in a third slot of carrier A, a third slot of carrier B, and a third slot and a fourth slot of carrier C, and SCSs of carrier A and carrier B are the same, and are greater than an SCS of carrier C. In this case, start locations of S-SSB slots on different carriers are aligned. Alternatively, as shown in FIG. 16, an S-SSB is separately transmitted in a fourth slot of carrier A and a fourth slot of carrier B. In this case, end locations of S-SSB slots on different carriers are aligned. When time-frequency resources in the resource pools are configured, resource pools #A, #B, and #C exclude resources that overlap the third slot and the fourth slot in time domain.

According to the information transmission method provided in this embodiment of this application, the foregoing resource pool configuration method can reduce a conflict of information transmission between different carriers, and reduce a resource waste caused by excluding all S-SSB slots on all carriers.

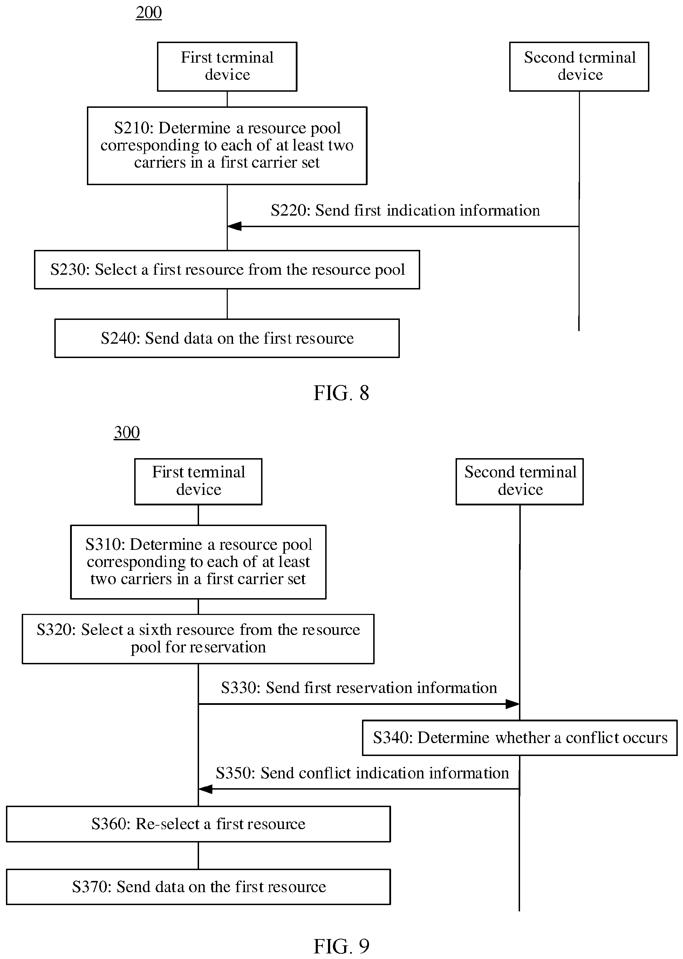

FIG. 8 is a schematic flowchart of another information transmission method according to an embodiment of this application. As shown in the figure:

S210: A first terminal device determines a resource pool corresponding to each of at least two carriers in a first carrier set.

The first carrier set is carrier aggregation CA, a component carrier CC is a carrier for transmission in CA transmission, and subcarrier spacings SCSs of component carrier CCs may be the same or may be different.

The resource pool is a set of time-frequency resources used by a device to receive and/or send data. The resource pool is independent. In other words, resource pools corresponding to carriers may be different.

It should be understood that a same resource pool may be configured for a plurality of carriers.

It should be understood that determining the resource pool further includes determining a time-frequency resource for sending or receiving a sidelink synchronization signal block S-SSB on each carrier, where the S-SSB resource is for sending and/or receiving an S-SSB, and the S-SSB includes a sidelink primary synchronization signal S-PSS, a sidelink secondary synchronization signal S-SSS, and a physical sidelink broadcast channel PSBCH. Time-frequency resources of S-SSBs may be configured on all CCs in the CA, or time-frequency resources of S-SSBs may be configured on some CCs in the CA. This is not limited in this application.

It should be understood that, in this embodiment of this application, configuration or (pre)configuration may be configuration performed based on at least one of an RRC configuration, a DCI indication, an SCI indication, a MAC CE indication, or a predefinition.

In a possible implementation, a resource pool corresponding to any carrier in the first carrier set does not include an S-SSB resource on the carrier, that is, the resource pool excludes only the S-SSB resource on the carrier.

In a possible embodiment, the resource pool excludes only the S-SSB resource on the carrier.

By way of example but not limitation, as shown in FIG. 12, carrier A corresponds to resource pool #A, carrier B corresponds to resource pool #B, carrier C corresponds to resource pool #C, an S-SSB is separately transmitted in a third slot of carrier A, a fourth slot of carrier B, and a fifth slot and a sixth slot of carrier C, and SCSs of carrier A and carrier B are the same, and are different from an SCS of carrier C. When time-frequency resources in the resource pools are configured, resource pool #A excludes the third slot, resource pool #B excludes the fourth slot, and resource pool #C excludes the fifth slot and the sixth slot.

S220: A second terminal device sends first indication information.

Optionally, the first indication information may be carried by at least one of PC5-RRC, a MAC CE, first-stage SCI, and second-stage SCI.

Optionally, the method is applicable to at least one of broadcast, multicast, and unicast scenarios.

The first indication information indicates locations/a location of a resource for sending data and/or an S-SSB and/or a resource for receiving data and/or an S-SSB by the second terminal device. Specifically, the first indication information includes a fourth resource and/or a fifth resource, where the fourth resource is a resource used by the second terminal to send data and/or an S-SSB, the fifth resource is a resource used by the second terminal device to receive data and/or an S-SSB, and a sum of a number of carriers corresponding to the fifth resource and a number of carriers used by the second terminal device to simultaneously receive data and an S-SSB is greater than a maximum number of concurrently-receiving carriers of the second terminal device, where a first resource and the fourth resource do not overlap in time domain; and/or the first resource and the fifth resource do not overlap in time domain. The first indication information is for notifying the first terminal device of a resource usage status of the first terminal device and specific location information, so that the first terminal device may select a resource based on the indication information.

S230: The first terminal device selects a first resource from the resource pool.

In a possible implementation, the first resource and a second resource do not overlap in time domain, where the second resource includes a resource on which the first terminal device receives an S-SSB; and/or the first resource and a third resource do not overlap in time domain, where a sum of a number of carriers corresponding to the third resource and a number of carriers for simultaneously sending data and an S-SSB is greater than a maximum number of concurrently-transmitting carriers supported by the first terminal device.

In another possible implementation, the first terminal device determines a fourth resource and/or a fifth resource based on the first indication information, where the fourth resource is a resource used by the second terminal to send data and/or an S-SSB, the fifth resource is a resource used by the second terminal device to receive data and/or an S-SSB, and a sum of a number of carriers corresponding to the fifth resource and a number of carriers used by the second terminal device to simultaneously receive data and an S-SSB is greater than a maximum number of concurrently-receiving carriers of the second terminal device, where the first resource and the fourth resource do not overlap in time domain; and/or the first resource and the fifth resource do not overlap in time domain.

It should be understood that, in a time domain range of the fifth resource, "simultaneous" means that a number of carriers for simultaneous receiving that needs to be performed by the second terminal device and the carriers of the fifth resource exceed a maximum capability. In other words, in the time domain range of the fifth resource, if the number of carriers for simultaneous receiving that needs to be performed by the second terminal device currently is already equal to the maximum capability, the second terminal may indicate, to the first terminal device, the time domain range or a frequency domain resource for which a number of carriers for simultaneous receiving is equal to the maximum capability. In this case, the first terminal does not select a resource that overlaps a resource of the first terminal in time domain.

In a possible embodiment, as shown in FIG. 12, carrier A corresponds to resource pool #A, carrier B corresponds to resource pool #B, carrier C corresponds to resource pool #C, an S-SSB is separately transmitted in a third slot of carrier A, a fourth slot of carrier B, and a fifth slot and a sixth slot of carrier C, and SCSs of carrier A and carrier B are the same, and are different from an SCS of carrier C. When time-frequency resources in the resource pools are configured, resource pool #A excludes the third slot, resource pool #B excludes the fourth slot, and resource pool #C excludes the fifth slot and the sixth slot. The first terminal device sends an S-SSB on the S-SSB resource in the third slot of carrier A, and receives an S-SSB on the S-SSB resource in the fourth slot of carrier B.

When selecting a resource, the first terminal device excludes a resource used by the first terminal device to receive an S-SSB from a selectable resource, and/or excludes a third resource from the selectable resource, where the third resource meets the following condition: If the first terminal device sends data on the third resource, a sum of a number of carriers used by the first terminal device to send data and a number of carriers used to send an S-SSB is greater than a maximum number of concurrently-transmitting carriers supported by the first terminal device.

Specifically, if a total number of carriers occupied for sending an S-SSB and data by the first terminal device in the third slot exceeds the maximum number of concurrently-transmitting carriers supported by the first terminal device, a resource in the third slot is excluded from the selectable resource, and a frequency domain resource corresponding to the fourth slot on carrier C is also excluded from a candidate resource, and/or a resource corresponding to the fourth slot is excluded from the selectable resource.

According to this embodiment of this application, a sending-sending conflict and/or a sending-reception conflict between an S-SSB and data of the first terminal device can be avoided.

In a possible embodiment, as shown in FIG. 12, carrier A corresponds to resource pool #A, carrier B corresponds to resource pool #B, carrier C corresponds to resource pool #C, an S-SSB is separately transmitted in a third slot of carrier A, a fourth slot of carrier B, and a fifth slot and a sixth slot of carrier C, and SCSs of carrier A and carrier B are the same, and are different from an SCS of carrier C. When time-frequency resources in the resource pools are configured, resource pool #A excludes the third slot, resource pool #B excludes the fourth slot, and resource pool #C excludes the fifth slot and the sixth slot. The second terminal device chooses to send data in a fifth slot of resource pool #A and receive data in a sixth slot.

Before selecting a resource, the first terminal device determines locations/a location of the fourth resource and/or the fifth resource based on the first indication information, where the fourth resource is a resource used by the second terminal to send data and/or an S-SSB, the fifth resource is a resource used by the second terminal device to receive data and/or an S-SSB, and the sum of the number of carriers corresponding to the fifth resource and the number of carriers used by the second terminal device to simultaneously receive data and an S-SSB is greater than the maximum number of concurrently-receiving carriers of the second terminal device. When selecting a resource, the first terminal device excludes the fourth resource from the selectable resource, and/or excludes the fifth resource from the selectable resource.

Specifically, if a total number of carriers occupied for receiving data by the second terminal device in time domain corresponding to the sixth slot exceeds the maximum number of concurrently-transmitting carriers supported by the second terminal device, the resource in the sixth slot is excluded from the available resource, and/or a resource corresponding to the fifth slot is excluded from the selectable resource.

According to this embodiment of this application, a reception-reception conflict and/or a sending-reception conflict between an S-SSB and data of the second terminal device can be avoided.

S240: The first terminal device sends data on the first resource.

It should be understood that the first terminal device performs transmission on a carrier, where the carrier may correspond to one or more carriers. This is not limited in this application.

According to the information transmission method provided in this embodiment of this application, the foregoing resource pool configuration method and/or resource selection method can reduce a conflict of information transmission between different carriers, and reduce a resource waste caused by excluding all S-SSB slots on all carriers.

FIG. 9 is a schematic flowchart of another information transmission method according to an embodiment of this application. As shown in the figure:

S310: A first terminal device determines a resource pool corresponding to each of at least two carriers in a first carrier set.

The first carrier set is carrier aggregation CA, a component carrier CC is a carrier for transmission in CA transmission, and subcarrier spacings SCSs of component carrier CCs may be the same or may be different.

The resource pool is a set of time-frequency resources used by a device to receive and/or send data. The resource pool is independent. In other words, resource pools corresponding to carriers may be different.

It should be understood that a same resource pool may be configured for a plurality of carriers.

It should be understood that determining the resource pool further includes configuring a time-frequency resource for sending or receiving a sidelink synchronization signal block S-SSB on each carrier, where the S-SSB resource is for sending and/or receiving an S-SSB, and the S-SSB includes a sidelink primary synchronization signal S-PSS, a sidelink secondary synchronization signal S-SSS, and a physical sidelink broadcast channel PSBCH. Time-frequency resources of S-SSBs may be configured on all CCs in the CA, or time-frequency resources of S-SSBs may be configured on some CCs in the CA. This is not limited in this application.

It should be understood that, in this embodiment of this application, configuration or (pre)configuration may be configuration performed based on at least one of an RRC configuration, a DCI indication, an SCI indication, a MAC CE indication, or a predefinition.

In a possible implementation, a resource pool corresponding to any carrier in the first carrier set does not include an S-SSB resource on the carrier, that is, the resource pool excludes only the S-SSB resource on the carrier.

S320: The first terminal device selects a sixth resource from the resource pool for reservation.

The sixth resource is a resource that is reserved by the first terminal device for sending data to a second terminal device.

S330: The first terminal device sends first reservation information.

The first reservation information indicates a location of the sixth resource, and the second terminal device may determine, based on the first reservation information, a location of a resource on which the first terminal device prepares to send data.

S340: The second terminal device determines whether a conflict occurs.

S350: The second terminal device sends conflict indication information.

It should be understood that the second terminal device may determine a fourth resource and/or a fifth resource based on the first reservation information, where the fourth resource is a resource used by the second terminal to send data and/or an S-SSB, the fifth resource is a resource used by the second terminal device to receive data and/or an S-SSB, and a sum of a number of carriers corresponding to the fifth resource and a number of carriers used by the second terminal device to simultaneously receive data and an S-SSB is greater than a maximum number of concurrently-receiving carriers of the second terminal device. When the sixth resource overlaps the fourth resource and/or the fifth resource in time domain:

When the sixth resource and the fourth resource overlap in time domain, a sending-reception conflict occurs on the second terminal device due to a half-duplex limitation.

When the sixth resource and the fifth resource overlap in time domain, a reception-reception conflict occurs on the second terminal device due to a limitation on the maximum number of concurrently-receiving carriers.

Optionally, the conflict indication information may be carried by at least one of PC5-RRC, a MAC CE, first-stage SCI, and second-stage SCI.

Optionally, the method is applicable to at least one of broadcast, multicast, and unicast scenarios.

The conflict indication information indicates the first terminal device to re-select a resource to send data to the second terminal device.

Optionally, the conflict indication information may include a specific location of a conflict resource, or only one bit may indicate that a conflict occurs.

S360: The first terminal device re-selects a first resource.

The first terminal device re-selects the first resource based on the conflict indication information, where the first resource and the sixth resource do not overlap in time domain.

S370: The first terminal device sends data on the first resource.

In a possible embodiment, as shown in FIG. 12, carrier A corresponds to resource pool #A, carrier B corresponds to resource pool #B, carrier C corresponds to resource pool #C, an S-SSB is separately transmitted in a third slot of carrier A, a fourth slot of carrier B, and a fifth slot and a sixth slot of carrier C, and SCSs of carrier A and carrier B are the same, and are different from an SCS of carrier C. When time-frequency resources in the resource pools are configured, resource pool #A excludes the third slot, resource pool #B excludes the fourth slot, and resource pool #C excludes the fifth slot and the sixth slot. The first terminal device selects a fifth slot of resource pool #A as a reserved resource to send data, and the second terminal device receives an S-SSB in the fifth slot of resource pool #C, and sends data in a fifth slot of resource pool #B.

After selecting the resource, the first terminal device sends first reservation information, the second terminal device determines a location of the reserved resource of the first terminal device based on the first reservation information, and the second terminal device determines the fourth resource and/or the fifth resource, where the fourth resource is a resource used by the second terminal to send data and/or an S-SSB, and the fifth resource is a resource used by the second terminal device to receive data and/or an S-SSB. The sum of the number of carriers corresponding to the fifth resource and the number of carriers used by the second terminal device to simultaneously receive data and an S-SSB is greater than the maximum number of concurrently-receiving carriers of the second terminal device. When the sixth resource overlaps the fourth resource and/or the fifth resource in time domain, the second terminal device determines that a conflict occurs, and sends conflict indication information, where the conflict indication information indicates the first terminal device to re-select a resource to send data to the second terminal device, and the first resource and the sixth resource do not overlap in time domain.

Specifically, if a number of carriers occupied for sending data by the first terminal device in a fifth slot and a number of carriers corresponding to a resource received by the second terminal device in the fifth slot exceed the maximum number of concurrently-receiving carriers of the second terminal device, and/or the first terminal device sends data in the fifth slot and the second terminal device sends data in the fifth slot, a sending-reception conflict occurs. The second terminal device sends the conflict indication information, and the first terminal device re-selects a resource that does not overlap with the fifth slot.

According to this embodiment of this application, a reception-reception conflict and/or a sending-reception conflict between an S-SSB and data of the second terminal device can be avoided.

According to the information transmission method provided in this embodiment of this application, the foregoing resource pool configuration method and/or resource selection method can reduce a conflict of information transmission between different carriers, and reduce a resource waste caused by excluding all S-SSB slots on all carriers.

FIG. 17 is a schematic flowchart of another information transmission method according to an embodiment of this application. As shown in the figure:

S410: A first terminal device determines a resource pool corresponding to each of at least two carriers in a first carrier set.

The first carrier set is carrier aggregation CA, a component carrier CC is a carrier for transmission in CA transmission, and subcarrier spacings SCSs of component carrier CCs may be the same or may be different.

The resource pool is a set of time-frequency resources used by a device to receive and/or send data. The resource pool is independent. In other words, resource pools corresponding to carriers may be different.

It should be understood that a same resource pool may be configured for a plurality of carriers.

It should be understood that determining the resource pool further includes configuring a time-frequency resource for sending or receiving a sidelink synchronization signal block S-SSB on each carrier, where the S-SSB resource is for sending and/or receiving an S-SSB, and the S-SSB includes a sidelink primary synchronization signal S-PSS, a sidelink secondary synchronization signal S-SSS, and a physical sidelink broadcast channel PSBCH. Time-frequency resources of S-SSBs may be configured on all CCs in the CA, or time-frequency resources of S-SSBs may be configured on some CCs in the CA. This is not limited in this application.

It should be understood that, in this embodiment of this application, configuration or (pre)configuration may be configuration performed based on at least one of an RRC configuration, a DCI indication, an SCI indication, a MAC CE indication, or a predefinition.

S420: The first terminal device selects a resource from the resource pool.

It should be understood that for an SL mode 1, the selected resource may be scheduled and configured by a base station for the first terminal device. For an SL mode 2, the first terminal device may select the resource from a time-frequency resource in the resource pool according to a specific rule. S330: The first terminal device sends data and/or an S-SSB.

S430: The first terminal device sends or receives data and/or an S-SSB.

S440: Back off a transmit power or discard a transmission.

Discarding the transmission may be stopping sending or receiving, or may be canceling sending or receiving. This is not limited in this application.

Backing off the power is power back-off performed based on a current transmit power or a calculated transmit power, to reduce the transmit power so that a total concurrent transmit power does not exceed a maximum transmit power limit of a device.

Step S440 may be performed after a sending-sending conflict or a sending-reception conflict occurs between an S-SSB and data.

It should be understood that the sending-sending conflict between an S-SSB and/or data is a conflict caused when a sum of a number of carriers carrying sent data and a number of carriers carrying an S-SSB at a same moment exceeds a number of supported carriers limited by a sending capability of the first terminal device.

It should be further understood that when a total concurrent transmit power on a plurality of carriers exceeds a limit of a maximum transmit power Pcmax of the first terminal device, step S440 is also performed, that is, the transmit power is backed off or a transmission is discarded.

The backed-off transmit power or specific discarded transmission is determined based on at least one of a priority, a remaining packet delay budget remaining PDB, and an SCS.

Specifically, when a sending-sending conflict occurs between an S-SSB on one or more carriers and data on one or more carriers, that is, a sum of a number of carriers carrying sent data and a number of carriers carrying an S-SSB exceeds a number of supported carriers limited by a sending capability of a terminal device, a transmission is discarded based on at least one of a priority, a remaining PDB, or an SCS.

According to the information transmission method 400 provided in this application, for a possible conflict between data on one or more CCs and an S-SSB on the one or more CCs, a plurality of transmission discarding orders and rules are defined, so that sending or receiving of important transmission can be ensured as much as possible.

In a possible implementation, transmission with a low priority is preferentially discarded.

Further, when a priority of data is the same as that of an S-SSB, data transmission is preferentially discarded.

By way of example but not limitation, when a priority of data is the same as that of an S-SSB, transmission with a larger remaining PDB is preferentially discarded.

By way of example but not limitation, when a priority of data is the same as that of an S-SSB, transmission with a remaining PDB greater than and/or equal to a threshold is preferentially discarded, where the threshold may be (pre) configured.

By way of example but not limitation, when a priority of data is the same as that of an S-SSB, transmission on a carrier corresponding to a smaller SCS is preferentially discarded.

In another possible implementation, transmission with a larger remaining PDB is preferentially discarded.

By way of example but not limitation, when data has a same remaining PDB, transmission with a lower priority is preferentially discarded.

By way of example but not limitation, when data has a same remaining PDB, transmission with a priority lower than and/or equal to a threshold is preferentially discarded, where the threshold may be (pre)configured.

By way of example but not limitation, when data has a same remaining PDB, transmission on a carrier corresponding to a smaller SCS is preferentially discarded.

In another possible implementation, transmission with a smaller SCS is preferentially discarded.

Further, when an SCS of data is the same as that of an S-SSB, data transmission is preferentially discarded.

By way of example but not limitation, when an SCS of data is the same as that of an S-SSB, transmission with a lower priority is preferentially discarded.

By way of example but not limitation, when an SCS of data is the same as that of an S-SSB, transmission with a priority lower than and/or equal to a threshold is preferentially discarded, where the threshold may be (pre)configured.

By way of example but not limitation, when an SCS of data is the same as that of an S-SSB, transmission with a larger remaining PDB is preferentially discarded.

By way of example but not limitation, when an SCS of data is the same as that of an S-SSB, transmission with a remaining PDB greater than and/or equal to a threshold is preferentially discarded, where the threshold may be (pre) configured.

In another possible implementation, transmission of an S-SSB with a low priority is preferentially discarded until an S-SSB on one carrier is remained, and then transmission of data with a low priority is preferentially discarded based on a priority.

By way of example but not limitation, transmission of an S-SSB with a low priority is preferentially discarded until an S-SSB on one carrier is remained, and then transmission of data and/or an S-SSB with a low priority is preferentially discarded based on a priority.

Specifically, when a total concurrent transmit power of transmission of an S-SSB on one or more carriers and transmission of data on one or more carriers exceeds a limit of a maximum transmit power Pcmax of a terminal device, the UE backs off a transmit power or discards a transmission based on at least one of a priority, a remaining PDB, and an SCS.

According to the information transmission method 400 provided in this application, for a possible conflict between data on one or more CCs and an S-SSB on one or more CCs, a plurality of sequences and rules for discarding a transmission or backing off a transmit power are defined, so that sending or receiving of important transmission can be ensured as much as possible.

In a possible implementation, transmission with a low priority is preferentially discarded or a transmit power with a low priority is preferentially backed off.

Further, when a priority of data is the same as that of an S-SSB, data transmission is preferentially discarded or a transmit power of the data is preferentially backed off.

By way of example but not limitation, when a priority of data is the same as that of an S-SSB, transmission with a larger remaining PDB is preferentially discarded or a transmit power with a larger remaining PDB is preferentially backed off.

By way of example but not limitation, when a priority of data is the same as that of an S-SSB, transmission with a remaining PDB greater than and/or equal to a threshold is preferentially discarded, or a transmit power with a remaining PDB greater than and/or equal to a threshold is preferentially backed off, where the threshold may be (pre)configured.

By way of example but not limitation, when a priority of data is the same as that of an S-SSB, transmission on a carrier corresponding to a smaller SCS is preferentially discarded or a transmit power on a carrier corresponding to a smaller SCS is preferentially backed off.

In another possible implementation, transmission with a larger remaining PDB is preferentially discarded, or a transmit power with a larger remaining PDB is preferentially backed off.

By way of example but not limitation, when data has a same remaining PDB, transmission with a lower priority is preferentially discarded, or a transmit power with a lower priority is preferentially backed off.

By way of example but not limitation, when data has a same remaining PDB, transmission with a priority lower than and/or equal to a threshold is preferentially discarded, or a transmit power with a priority lower than and/or equal to a threshold is preferentially backed off, where the threshold may be (pre)configured.

By way of example but not limitation, when data has a same remaining PDB, transmission on a carrier corresponding to a smaller SCS is preferentially discarded or a transmit power on a carrier corresponding to a smaller SCS is preferentially backed off.

In another possible implementation, transmission with a smaller SCS is preferentially discarded, or a transmit power on a carrier corresponding to a smaller SCS is preferentially backed off.

Further, when an SCS of data is the same as that of an S-SSB, data transmission is preferentially discarded or a transmit power of the data is preferentially backed off.

By way of example but not limitation, when an SCS of data is the same as that of an S-SSB, transmission with a lower priority is preferentially discarded or a transmit power with a lower priority is preferentially backed off.

By way of example but not limitation, when an SCS of data is the same as that of an S-SSB, transmission with a priority lower than and/or equal to a threshold is preferentially discarded, or a transmit power with a priority lower than and/or equal to a threshold is preferentially backed off, where the threshold may be (pre)configured.

By way of example but not limitation, when an SCS of data is the same as that of an S-SSB, transmission with a larger remaining PDB is preferentially discarded or a transmit power with a larger remaining PDB is preferentially backed off.

By way of example but not limitation, when an SCS of data is the same as that of an S-SSB, transmission with a remaining PDB greater than and/or equal to a threshold is preferentially discarded, where the threshold may be (pre) configured.

Specifically, when a sending-reception conflict occurs between an S-SSB on one or more carriers and data on one or more carriers, it is a sending-reception conflict caused by a half-duplex limitation of a UE.

In a possible implementation, all data is received, all S-SSBs are sent, or all data is sent, and all S-SSBs are received. In this case, a party with a lower priority is discarded based on a comparison between data with a highest priority and an S-SSB with a highest priority.

In a possible implementation, a received transmission and a sent transmission include both an S-SSB and data. In this case, a party with a lower priority is discarded based on a comparison between the received transmission with a highest priority and the sent transmission with a highest priority.

In another possible implementation, if a ratio of a carrier on which a data priority is higher than an S-SSB priority to all transmitting carriers is less than or equal to a threshold, data transmission is discarded; if the ratio is greater than or equal to the threshold, S-SSB transmission is discarded.

Specifically, when a sending-sending conflict occurs on data on one or more carriers, that is, a number of carriers that carry sent data exceeds a number of supported carriers limited by a sending capability of a terminal device, a transmission is discarded based on at least one of a priority, a remaining packet delay budget remaining PDB, and an SCS.

In a possible implementation, transmission with a low priority is preferentially discarded.

Further, when data has a same priority, transmission with a larger remaining PDB is preferentially discarded.

By way of example but not limitation, when data has a same priority, transmission with a remaining PDB greater than and/or equal to a threshold is preferentially discarded, where the threshold may be configured.

By way of example but not limitation, when data is the same, data transmission on a carrier corresponding to a smaller SCS is preferentially discarded.

Optionally, discarding the transmission may be discarding transmission starting from the 1st symbol that overlaps

in time domain, or discarding transmission in an entire slot.

In another possible implementation, transmission with a larger remaining PDB is preferentially discarded.

By way of example but not limitation, when data has a same remaining PDB, transmission with a lower priority is preferentially discarded.

By way of example but not limitation, when data has a same remaining PDB, transmission with a priority lower than and/or equal to a threshold is preferentially discarded, where the threshold may be (pre)configured.

By way of example but not limitation, when data has a same remaining PDB, transmission on a carrier corresponding to a smaller SCS is preferentially discarded.

In another possible implementation, transmission with a smaller SCS is preferentially discarded.

By way of example but not limitation, when data has a same SCS, transmission with a lower priority is preferentially discarded.

By way of example but not limitation, when data has a same SCS, transmission with a priority lower than and/or equal to a threshold is preferentially discarded, where the threshold may be (pre)configured.

By way of example but not limitation, when data has a same SCS, transmission with a larger remaining PDB is preferentially discarded.

By way of example but not limitation, when data has a same SCS, transmission whose remaining PDB is greater than and/or equal to a threshold is preferentially discarded, where the threshold may be (pre)configured.

Specifically, when a sending-reception conflict occurs on S-SSBs on a plurality of carriers, it is a sending-reception conflict caused by a half-duplex limitation of a UE.

In a possible implementation, when an S-SSB resource is configured, the UE selects different S-SSB resources for S-SSB sending and receiving.

In another possible implementation, a party with a lower priority is discarded based on a comparison between S-SSB sending with a highest priority and S-SSB receiving with a highest priority.

In another possible implementation, S-SSB sending is preferentially discarded.

According to the implementations of the foregoing embodiment of this application, sending or receiving of important transmission can be ensured.

In sidelink transmission, a granularity of resource allocation is based on a sub-channel in frequency domain, and one sub-channel has two definitions: sub-channel across RB sets and sub-channel within an RB set. The former indicates that a sub-channel is determined in a manner similar to an interlace across a plurality of RB sets. The latter indicates that a sub-channel is defined in one RB set. If resources of a plurality of RB sets need to be indicated, a used sub-channel needs to be indicated in each RB set.

S710: A first terminal device determines a first resource pool.

The resource pool may be a resource for sidelink control information and data transmission.

S720: The first terminal device determines a sub-channel index that corresponds to each of at least two contiguous RB sets and that is for transmitting a first message.

S730: The first terminal device determines an eleventh resource used by each RB set to transmit the first message.

The first terminal device may determine the eleventh resource based on the sub-channel index and/or a guard band and/or the guard band being an RB resource set located between the RB sets.

S740: The first terminal device determines a twelfth resource.

The twelfth resource is a set of first resources that correspond to each RB set and that are for transmitting the first message.

S750: The first terminal device transmits the first message on the twelfth resource.

In a possible implementation, the first terminal device determines the first resource pool; the first terminal device determines, from the first resource pool, at least two contiguous resource sets RB sets for transmitting the first message; the first terminal device determines the sub-channel index that corresponds to each of the at least two contiguous RB sets and that is for transmitting the first message; the first terminal device determines, based on the sub-channel index and/or the guard band, the eleventh resource for transmitting the first message in each RB set, where the guard band is an RB resource set located between the RB sets; the first terminal device determines the twelfth resource, where the twelfth resource is a set of first resources that are for transmitting the first message and that correspond to each RB set; and the first terminal device transmits the first message on the twelfth resource.

The resource pool may be a resource for sidelink control information and data transmission.

Optionally, a resource in the resource pool includes at least one of a time domain resource, a frequency domain resource, and a time-frequency domain resource.

Optionally, resource pools corresponding to all carriers may be different.

For example, the resource may include a resource block RB.

For another example, on a sidelink, a resource may include a sub-channel including a plurality of contiguous RBs, where the sub-channel may be a minimum unit for scheduling/data transmission on the sidelink.

Optionally, the at least two contiguous RB sets include a first RB set and a second RB set, and the eleventh resource corresponding to the first RB set includes an RB included in a sub-channel that is in the first RB set and that is for transmitting the first message, an interlace (interlace) corresponding to the sub-channel that is in the first RB set and that is for transmitting the first message, and an RB included in an intersection set that is in a guard band between the first RB set and the second RB set and that belongs to RBs of the first RB set.

In a possible embodiment, RBs in the guard band between the first RB set and the second RB set are equally divided into a first part and a second part based on a number, and one RB that is of the first part or the second part and that is adjacent to the first RB set in frequency domain belongs to the first RB set.

Specifically, the RBs in the guard band are equally divided according to the number, and belong to RB sets adjacent in frequency domain. When a number of RBs in the guard band is an odd number, an RB in the center is not used, belongs to an RB set with a lower frequency, or belongs to an RB set with a higher frequency.

In a possible embodiment, RBs in the guard band between the first RB set and the second RB set are divided into a third part and a fourth part based on a first fixed bandwidth, the first fixed bandwidth is a configurable frequency range, and one RB that is of the third part or the fourth part and that is adjacent to the first RB set in frequency domain belongs to the first RB set.

Specifically, division is performed based on an absolute bandwidth. If a division point is located in the middle of an RB, the RB is not used, belongs to an RB set with a lower frequency, or belongs to an RB set with a higher frequency.

By way of example but not limitation, the absolute bandwidth may be 20 MHz.

In a possible embodiment, RBs in the guard band between the first RB set and the second RB set are divided into a fifth part and a sixth part based on configuration information, where the configuration information is an absolute index of a resource block at a division point or a relative index of a resource block in the guard band.

Specifically, the RBs in the guard band are divided into different RB sets based on a configuration. A configured parameter may be an RB absolute index of a division point or a relative index in the guard band.

By way of example but not limitation, all RBs in the guard band may be classified into an RB set with a lower frequency or an RB set with a higher frequency.

In a possible embodiment, all RBs in the guard band between the first RB set and the second RB set belong to the first RB set and the second RB set.

Specifically, the RBs in the guard band are not divided, and it is considered that the RBs in the guard band belong to two adjacent RB sets. In other words, all the RBs in the guard band can be used.

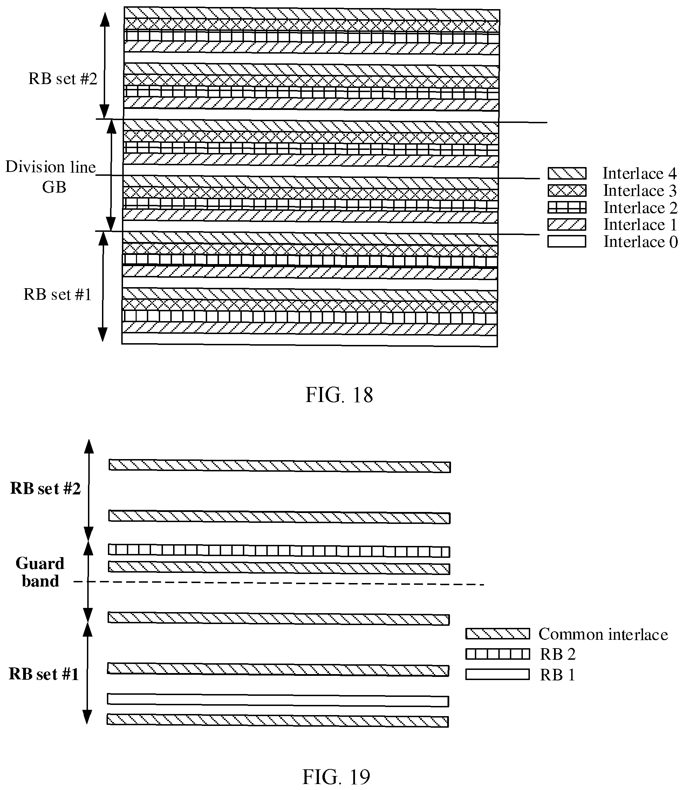

In a possible embodiment, as shown in FIG. 18, RB set #1 is configured with interlace 0 as a sub-channel, and RB set #2 is configured with interlace 3 as a sub-channel.

It should be understood that although an interlace is an RB including RB sets, a sub-channel is limited in each RB set. Therefore, a same interlace belongs to different sub-channels in different RB sets.

It should be understood that, if the guard band is divided according to any one of the RB number, the absolute bandwidth, and the configuration information, the UE may perform transmission by using an intersection set of RBs included in an interlace corresponding to a sub-channel determined to be used for transmission in an RB set and "a union set of RBs included in the RB set and RBs that are in a guard band between the RB set and another adjacent RB set and that are classified into the RB set", and a union set of the intersection set and RBs determined according to the foregoing same method from other RB set(s) that are determined to be used for transmission.

Specifically, in this embodiment of this application, RB set #1 is configured with sub-channel 0, and RB set #2 is configured with sub-channel 3. In this case, although an interlace is performed across a plurality of RB sets, a sub-channel is limited to each RB set. Therefore, for a same interlace, different RB sets belong to different sub-channels. As shown in FIG. 18, the guard band is divided according to any one of the number, the absolute bandwidth, and the configuration information. Therefore, the UE may use three RBs included in interlace 0 below a division line, or use three RBs included in interlace 3 above the division line.

It should be understood that, if the RBs in the guard band are not divided, the UE may perform transmission by using an intersection set of RBs included in an interlace corresponding to a sub-channel determined to be used for transmission in an RB set and "a union set of all RBs in the guard band between the RBs included in the RB set and the RB sets", and a union set of the intersection set and RBs determined according to the foregoing same method from other RB set(s) that are determined to be used for transmission.

Specifically, in this embodiment of this application, RB set #1 is configured with sub-channel 0, and RB set #2 is configured with sub-channel 3. In this case, although an interlace is performed across a plurality of RB sets, a sub-channel is limited to each RB set. Therefore, for a same interlace, different RB sets belong to different sub-channels. As shown in FIG. 18, if the guard band is not divided, the UE may use four RBs included in RB set #1 and interlace 0 in the GB, or use four RBs included in RB set #2 and interlace 3 in the GB.

According to the method provided in this embodiment of this application, the first terminal device may perform transmission by using different sub-channels or interlaces in different RB sets. In addition, resource utilization flexibility is improved.

For transmission of a PSFCH on a sidelink unlicensed spectrum multi-channel, an OCB requirement needs to be met.

S810: A first terminal device determines at least one RB set.

The at least one RB set is all RB sets in a resource pool, at least one RB set for transmitting a PSSCH corresponding to a first physical sidelink feedback channel PSFCH, or at least one (pre)configured RB set.

S820: The first terminal device determines a thirteenth resource in the at least one RB set.

Optionally, the thirteenth resource includes a first interlace (interlace).

Optionally, the thirteenth resource includes a second interlace and a first resource block RB.

Optionally, the thirteenth resource includes a fourteenth resource and a second resource block RB, where the fourteenth resource includes at least two RBs.

The second interlace and/or the fourteenth resource are/is determined based on a predefinition or a configuration.

S820: The first terminal device sends the first PSFCH on the thirteenth resource.

In a possible implementation, the first terminal device determines the at least one RB set, where the at least one RB set is all the RB sets in the resource pool, the at least one RB set for transmitting the PSSCH corresponding to the first physical sidelink feedback channel PSFCH, or the at least one (pre)configured RB set. The first terminal device determines the thirteenth resource in the at least one RB set, where the thirteenth resource is for carrying the first PSFCH. The first terminal device sends the first PSFCH on the thirteenth resource.

Optionally, the method includes: The thirteenth resource includes the first interlace (interlace).

Optionally, the method further includes: The thirteenth resource includes the second interlace and the first resource block RB.

Optionally, the method further includes: The thirteenth resource includes the fourteenth resource and the second resource block RB, where the fourteenth resource includes the at least two RBs.

The second interlace and/or the fourteenth resource are/is determined based on a predefinition or a configuration.

In a possible implementation, the first terminal device determines the at least one RB set, where the at least one RB set is all the RB sets in the resource pool. The first terminal device determines the thirteenth resource in the at least one RB set, where the thirteenth resource includes the first interlace (interlace), the second interlace and the first resource block RB, or the fourteenth resource and the second resource block RB, where the fourteenth resource includes the at least two RBs.

Optionally, the first interlace is located in all RB sets in the at least one RB set.

Optionally, the second interlace is located in all RB sets in the at least one RB set, and the first resource block RB is determined from RBs other than the first interlace in the at least one RB set.

Optionally, the second resource block is located in all RB sets in the at least one RB set, and the second resource block RB is determined from RBs other than the second resource in the at least one RB set.

In another possible implementation, the first terminal device determines the at least one RB set, where the at least one RB set is the at least one RB set for transmitting the PSSCH corresponding to the first physical sidelink feedback channel PSFCH. The first terminal device determines the thirteenth resource in the at least one RB set, where the thirteenth resource includes the first interlace (interlace), the second interlace and the first resource block RB, or the fourteenth resource and the second resource block RB, where the fourteenth resource includes the at least two RBs.

Optionally, the first interlace is located in all RB sets in the at least one RB set.

Optionally, the second interlace is located in all RB sets in the at least one RB set, and the first resource block RB is determined from RBs in a first RB set in the at least one RB set.

Optionally, the fourteenth resource is located in all RB sets in the at least one RB set, and the second resource block RB is determined from the RBs in the first RB set in the at least one RB set.

In another possible implementation, the first terminal device determines the at least one RB set, where the at least one RB set is the at least one (pre)configured RB set. The first terminal device determines the thirteenth resource in the at least one RB set, where the thirteenth resource includes the first interlace (interlace), the second interlace and the first resource block RB, or the fourteenth resource and the second resource block RB, where the fourteenth resource includes the at least two RBs.

Optionally, the first interlace is located in a first RB set in the at least one RB set.

Optionally, the second interlace is located in a first RB set in the at least one RB set, and the first resource block RB is determined from RBs in the first RB set.

Optionally, the fourteenth resource is located in a first RB set in the at least one RB set, and the second resource block RB is determined from RBs in the first RB set.

In a possible implementation, the first RB set is determined based on at least one of an ID pair (a source ID (source ID) and/or a destination (ID destination ID)), a UE ID, a zone ID, a service priority, a channel access priority CAPC, or a time domain resource and/or a frequency domain resource carrying data corresponding to the first PSFCH.

Therefore, according to the solution of this application, a capacity of a PSFCH on a same time-frequency domain resource can be increased, and it is ensured that a PSFCH is transmitted on each RB set, thereby avoiding COT interruption.

Specifically, for each PSFCH, a resource is determined in all RB sets, and an OCB is met on an entire RB set bandwidth.

In a possible embodiment, the PSFCH occupies the second interlace crossing a plurality of RB sets, and occupies one first resource block RB, where the RB is determined on a PSFCH resource in a range of the plurality of RB sets.

By way of example but not limitation, the plurality of RB sets may be all the RB sets in the entire resource pool, or refer to only RB sets occupied by the PSSCH.

By way of example but not limitation, the PSFCH resources in the range of the plurality of RB sets do not include an RB in the second interlace, and may include or not include an RB in the guard band.

Specifically, as shown in FIG. 19, a common interlace crosses a plurality of RB sets, RB 1 and RB 2 may be first resource blocks determined in the plurality of RB sets. The first terminal device may send the PSFCH on the second interlace and RB 1, or send the PSFCH on the second interlace and RB 2.

In a possible embodiment, the PSFCH occupies common PRBs on a plurality of RB sets, where the common PRBs are fourteenth resources and may meet an OCB; and occupies one second resource block RB, where the RB is determined on PSFCH a resource in a range of the plurality of RB sets.

By way of example but not limitation, the plurality of RB sets may be all the RB sets in the entire resource pool, or refer to only RB sets occupied by the PSSCH.

By way of example but not limitation, the PSFCH resources in the range of the plurality of RB sets do not include the fourteenth resource, and may include or not include an RB in the guard band.

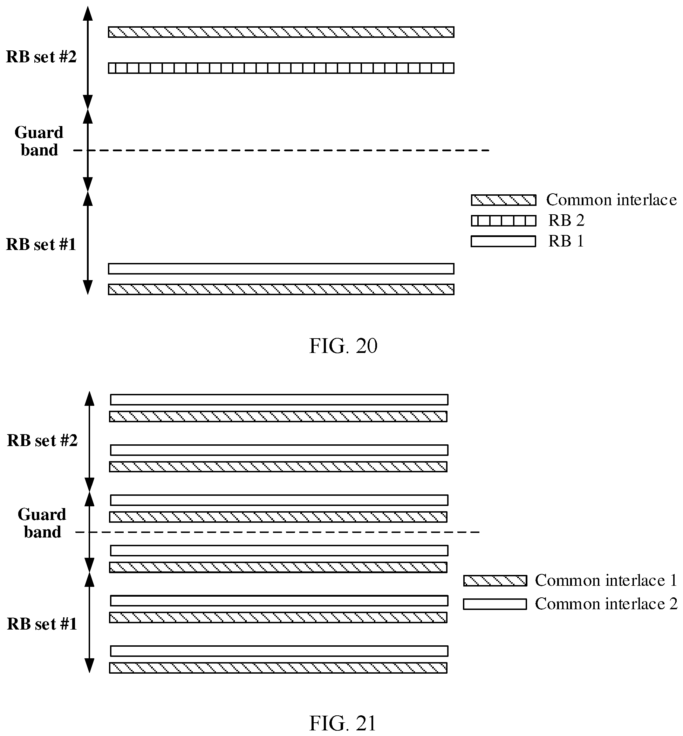

Specifically, as shown in FIG. 20, the common PRBs cross a plurality of RB sets, a span of the common PRBs may meet an OCB requirement, and second resource blocks RB 1 and RB 2 may be resources determined in the plurality of RB sets. The first terminal device may send the PSFCH on the fourteenth resource and RB 1 or send the PSFCH on the common interlace and RB 2.

In a possible embodiment, the PSFCH is transmitted by occupying an interlace across the plurality of RB sets.

Specifically, as shown in FIG. 21, common interlace 1 and common interlace 2 cross a plurality of RB sets, and the first terminal device may send the PSFCH on common interlace 1 or send the PSFCH on common interlace 2.

Specifically, for each PSFCH, a resource is determined in one RB set, and an OCB is met on an entire RB set bandwidth.

In a possible embodiment, the PSFCH occupies the second interlace crossing a plurality of RB sets, and occupies one first resource block RB, where the RB is determined on a PSFCH resource in a range of a specific RB set.

By way of example but not limitation, the plurality of RB sets may be all the RB sets in the entire resource pool, or refer to only RB sets occupied by the PSSCH.

By way of example but not limitation, a PSFCH resource in a range of a specific RB set does not include an RB in the second interlace, and may include or not include an RB in the guard band.

Specifically, as shown in FIG. 19, the second interlace crosses a plurality of RB sets, RB 1 is a resource determined in RB set 1, and RB 2 is a resource determined in RB set 2. The first terminal device may send the PSFCH on the second interlace and RB 1, or send the PSFCH on the second interlace and RB 2.

In a possible embodiment, the PSFCH occupies common PRBs on a plurality of RB sets, where the common PRBs may meet an OCB; and occupies one RB, where the RB is determined on a PSFCH resource in a range of a specific RB set.

By way of example but not limitation, the plurality of RB sets may be all the RB sets in the entire resource pool, or refer to only RB sets occupied by the PSSCH.

By way of example but not limitation, a PSFCH resource in a range of a specific RB set does not include common PRBs, and may include or not include an RB in the guard band, where the specific RB set is determined according to a protection rule in this embodiment.

Specifically, as shown in FIG. 20, the common PRBs cross a plurality of RB sets, a span of the common PRBs may meet an OCB requirement, RB 1 is a resource determined in RB set 1, and RB 2 is a resource determined in RB set 2. The UE may send the PSFCH on the common PRBs and RB 1 or send the PSFCH on the common PRBs and RB 2.

In a possible embodiment, the PSFCH occupies an interlace of a specific RB set.

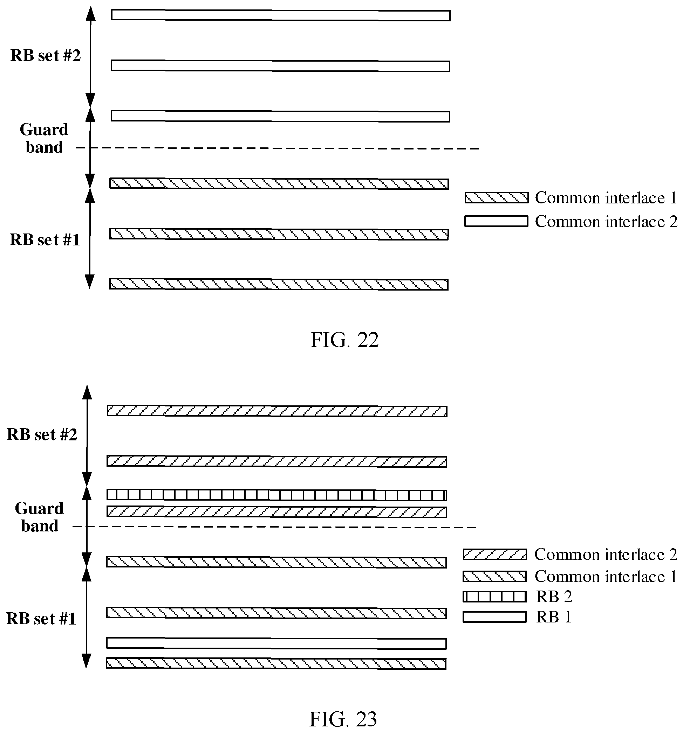

Specifically, as shown in FIG. 22, first interlace 1 is an interlace in RB set 1, and first interlace 2 is an interlace in RB set 2. The first terminal device may send the PSFCH on first interlace 1 or send the PSFCH on first interlace 2.

Specifically, for each PSFCH, a resource is determined in one RB set, and an OCB is met on an RB set on which the resource is located.

In a possible embodiment, the PSFCH occupies one second interlace of a specific RB set, and occupies one RB, where the RB is determined on a PSFCH resource in a range of the RB set.

By way of example but not limitation, a PSFCH resource in a range of a specific RB set does not include an RB in the second interlace, and may include or not include an RB in the guard band.

Specifically, as shown in FIG. 23, first interlace 1 and RB 1 are resources determined in RB set 1, and first interlace 2 and RB 2 are resources determined in RB set 2. The first terminal device may send the PSFCH on first interlace 1 and RB 1, or send the PSFCH on first interlace 2 and RB 2.

In a possible embodiment, the PSFCH occupies common PRBs on a plurality of RB sets, where the common PRBs may meet an OCB; and occupies one RB, where the RB is determined on PSFCH resources in a range of a specific RB set.

By way of example but not limitation, the plurality of RB sets may be all the RB sets in the entire resource pool, or refer to only RB sets occupied by the PSSCH.

By way of example but not limitation, a PSFCH resource in a range of a specific RB set does not include common PRBs, and may include or not include an RB in the guard band, where the specific RB set is determined according to a protection rule in this embodiment.

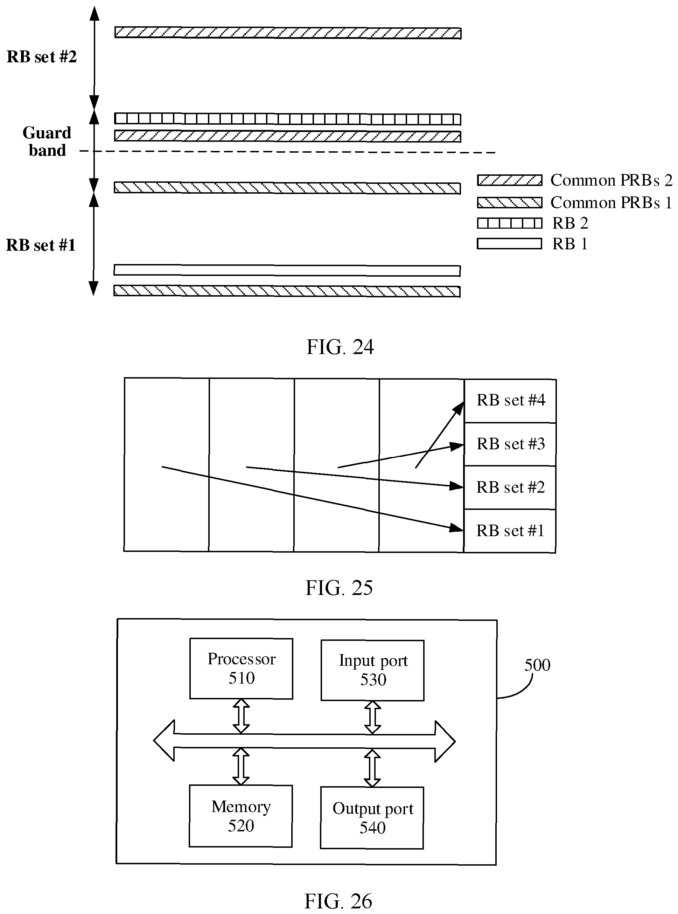

Specifically, as shown in FIG. 24, common PRBs 1 and RB 1 are resources determined in RB set 1, common PRBs 2 and RB 2 are resources determined in RB set 2, and a span between common PRBs 1 and common PRBs 2 may meet an OCB requirement. The first terminal device may send the PSFCH on common PRBs 1 and RB 1, or send the PSFCH on common PRBs 2 and RB 2.

In a possible embodiment, the PSFCH occupies an interlace of a specific RB set.

Specifically, as shown in FIG. 22, first interlace 1 is an interlace in RB set 1, and first interlace 2 is an interlace in RB set 2. The first terminal device may send the PSFCH on first interlace 1 or send the PSFCH on first interlace 2.

For multi-channel transmission, PSFCH transmission is limited to one RB set, and a number of PSFCHs that can be transmitted in a same frequency domain resource can be increased, that is, a capacity is increased.

In a possible embodiment, as shown in FIG. 25, the first RB set is determined based on at least one of an ID pair (a source ID (source ID) and/or a destination ID (destination ID)), a UE ID, a zone ID, a service priority, a channel access priority CAPC, or a time domain resource and/or a frequency domain resource carrying data corresponding to the first PSFCH.

By way of example but not limitation, the RB set for sending the PSFCH is associated with and corresponds to different slots and/or sub-channels in a feedback period, and a correspondence may be configured.

When there are a plurality of sub-channels, a sub-channel with a smallest sub-channel index is used.

When sub-channels are within an RB set, different sub-channels are used in different RB sets. In this case, an RB set with a smallest index and a sub-channel with a smallest index are used.

In a possible embodiment, there are X RB sets that can be for PSFCH transmission.

By way of example but not limitation, when an ID, a priority, or a number of time domain and/or frequency domain resources for data transmission is greater than or equal to X, the first RB set for transmitting the first PSFCH is determined based on "ID, priority value, or data time-frequency resource index mod X".

By way of example but not limitation, when an ID, a priority, a number of time domain and/or frequency domain resources for data transmission, or the like is less than X, the first RB set for transmitting the first PSFCH is determined based on "ID, priority value, or data time-frequency resource index mod X", and on an extra RB set, the first PSFCH is repeatedly transmitted, redundant information is sent, or the fourteenth resource or the second interlace is occupied. The second interlace may be configured for each RB set, or may be configured for each resource pool.

The ID is at least one of the ID pair (the source ID (source ID) and/or the destination ID (destination ID)), the UE ID, or the zone ID described above.

The priority is at least one of a service priority or a CAPC.

According to a transmission and mapping method in which a PSFCH meets an OCB requirement in a multi-channel scenario provided in this application, a method and a rule for associating different RB set mapping resources for different UEs, services, and transmission resources are introduced, to improve a PSFCH capacity in a same time-frequency domain resource, and ensure that a PSFCH is transmitted in each RB set, thereby avoiding COT interruption.

In a possible case, an S-SSB slot is a configured common resource, that is, all UEs send S-SSBs on a same resource. In addition, a slot in which an S-SSB is located is not included in a resource pool. In other words, transmission of a PSSCH/PSCCH/PSFCH is not performed on a resource in the slot in which the S-SSB is located.

However, in SL-U, because an S-SSB may not be successfully sent due to a possible LBT failure, more S-SSB resources are introduced. These S-SSB resources may not be included in the resource, or may be included in the resource pool. On resource 1/2/3 of a synchronization resource, the UE may send or receive an S-SSB, or may not send or receive an S-SSB. When an S-SSB occasion is located in a COT initialized by a UE, the COT may be interrupted in some cases, for example, the initialization UE does not perform receiving/sending or a UE that does not meet a COT sharing condition performs transmission.

Therefore, for the following different S-SSB resource configuration methods, an S-SSB resource and data sending of a terminal are configured, thereby avoiding a problem of COT interruption and ensuring that transmission of an S-SSB and data is not interrupted.

S910: A first terminal device determines a first resource pool and a fifteenth resource.

The fifteenth resource is for sending and/or receiving a sidelink synchronization signal block S-SSB.

S920: The first terminal device selects at least one resource in the first resource pool to send data.

Optionally, a plurality of resources contiguous in time domain are selected to send data, where the plurality of resources contiguous in time domain do not overlap the fifteenth resource in time domain.

Optionally, that the first terminal device selects at least one resource in the first resource pool to send data may be sending data and/or a control channel, to be specific, a PSSCH and/or a PSCCH.

Optionally, in addition to resource selection performed by the first terminal device, the at least one resource may also be determined through scheduling by a base station.

S930: The first terminal device creates a channel occupancy time COT based on the at least one selected resource.

In a possible implementation, the first terminal device determines the first resource pool and the fifteenth resource, where the fifteenth resource is for sending and/or receiving a sidelink synchronization signal block S-SSB; the first terminal device selects the at least one resource in the first resource pool to send data; and the first terminal device creates the channel occupancy time COT based on the at least one selected resource.

The creation may alternatively be at least one action of initialization or initiation.

In a possible implementation, the first terminal device selects a plurality of resources contiguous in time domain to send data, where the plurality of resources contiguous in time domain do not overlap the fifteenth resource in time domain, or the COT does not overlap the fifteenth resource in time domain, and the first resource pool includes a slot in which the fifteenth resource is located.

Optionally, the plurality of resources contiguous in time domain or the COT does not overlap the fifteenth resource in time domain, and the first resource pool does not include a slot in which the fifteenth resource is located.

Optionally, the at least one resource does not overlap the fifteenth resource in time domain.

Optionally, the at least one resource does not overlap the fifteenth resource in time domain and frequency domain.

In another possible implementation, the first terminal device performs at least one of sending or receiving an S-SSB or sending or receiving data on the fifteenth resource.

Optionally, the first terminal device uses 1 bit in at least one of first-stage SCI, second-stage SCI, or a MAC-CE to indicate whether another terminal device is allowed to transmit an S-SSB in the COT.

In a possible implementation, the first terminal device sends an S-SSB on a first channel and/or at least one second channel on a first transmission occasion, where the first channel is determined based on a preconfigured frequency, the at least one second channel includes a channel in a first COT and/or a channel in a second COT, and the second COT is created by a second terminal device, or the at least one second channel includes a channel other than the first channel in the first resource pool.

Optionally, the channel in the first COT and/or the channel in the second COT may be a channel included in the first COT and/or a channel included in the second COT.

Optionally, that the first channel is determined based on a preconfigured frequency may be determining based on a frequency preconfigured or indicated by an absolute radio frequency channel number ARFCN.

Optionally, (pre)configuration or preconfiguration may be any one or more of a predefinition, an RRC configuration, a DCI indication, an SCI indication, and a MAC CE indication.

It should be understood that the first channel and the at least one second channel may include a same RB set. Therefore, the first channel and the at least one second channel need to be a union set of RB sets included in the first channel and the at least one second channel.

Optionally, the at least one second channel may alternatively be a channel other than the first channel in a BWP. It should be understood that the BWP is a BWP for sidelink transmission.

It should be understood that the COT may be determined based on a maximum length allowed by channel occupancy, or may be determined based on a duration of a resource actually occupied after COT initialization. Optionally, that the COT is determined based on a duration of a resource actually occupied after COT initialization includes a duration of a resource used by the terminal that performs the COT initialization, for transmission and/or duration of a resource shared with another terminal for transmission. It should be understood that the duration refers to a span or a time length in time domain.

It should be understood that, to avoid COT interruption and ensure COT continuity, on an S-SSB occasion, the first terminal device sends an S-SSB on at least one of the following: an RB set (namely, the first channel) determined based on an ARFCN, one or more channel RB set(s) in which a COT initialized by the first terminal device is located or included, one or more channel RB set(s) in which a COT initialized by another terminal device is located or included, and all RB sets (namely, the second channel) included in the resource pool or the BWP.

Optionally, the first channel RB set may be an RB set in which a frequency indicated by the ARFCN is located.

The S-SSB occasion is located in a COT (that is, the first COT) initialized by the first terminal device, and/or the S-SSB occasion is located in a COT (that is, the second COT) initialized by the another terminal device. In this case, the first terminal device needs to additionally send an S-SSB on an RB set included in the COT, to ensure COT continuity.

Optionally, the S-SSB occasion is not a last slot in the COT. In other words, the S-SSB occasion is located in another slot except the last slot in the COT. This is because when the S-SSB is the last slot in the COT, the first terminal device may no longer need to additionally send an S-SSB to maintain COT continuity. Optionally, the S-SSB occasion is not the 1st slot in the COT.

According to the solution of this application, the RB set for sending the S-SSB is determined. This can ensure continuity of a COT initialized by a UE and/or a COT initialized by another UE, avoid COT interruption, and improve communication stability.

In a possible implementation, the fifteenth resource includes at least one of a first sub-resource, a second sub-resource, and a third sub-resource. In other words, the first terminal device sends an S-SSB on at least one of the first sub-resource, the second sub-resource, and the third sub-resource. The first sub-resource is determined based on the preconfigured frequency, the second sub-resource is a resource that is other than the first sub-resource on the first channel determined based on the frequency indicated by the ARFCN and that is for S-SSB transmission, the third sub-resource is a resource that is on the second channel and that is for S-SSB transmission, the second channel includes at least one channel in the first COT and the second COT, and the second COT is created by the second terminal device.

It should be understood that the second sub-resource may be at least one second sub-resource, and/or the third sub-resource may be at least one third sub-resource.

Optionally, that the first channel is determined based on a preconfigured frequency may be determining based on a frequency preconfigured or indicated by an absolute radio frequency channel number ARFCN.

Specifically, the first sub-resource includes 11 PRBs, and subcarrier 66 of the first sub-resource is determined based on an indication/configuration of the ARFCN. In other words, the resource is 11 contiguous PRBs determined by using a frequency determined based on the indication/configuration of the ARFCN as a location of subcarrier 66.

The first sub-resource is determined, on the first channel RB set, based on the indication of the ARFCN, and/or the at least one second sub-resource is determined based on at least one of the ARFCN, a frequency-domain repetition number, and an interval.

For example, the at least one second sub-resource is determined based on the ARFCN, the frequency-domain repetition number, and the interval. Specifically, the first sub-resource is determined based on the ARFCN, and the at least one second sub-resource is determined based on the first sub-resource, an interval between the first sub-resource and a second sub-resource adjacent in frequency domain and/or an interval between second sub-resources adjacent in frequency domain, and a number of S-SSB frequency-domain repetitions in the first channel RB set. Optionally, the second sub-resource is determined at a higher frequency and/or a lower frequency by using the first sub-resource as a reference.

For another example, the at least one second sub-resource is determined based on the ARFCN and the interval. Specifically, the first sub-resource is determined based on the ARFCN, and the at least one second sub-resource is determined based on the first sub-resource, and an interval between the first sub-resource and a second sub-resource adjacent in frequency domain, and/or an interval between second sub-resources adjacent in frequency domain. Optionally, the second sub-resource is determined at a higher frequency and/or a lower frequency by using the first sub-resource as a reference. Optionally, if a part or all of the determined second sub-resource is located in a guard band between RB sets, S-SSB transmission on the second sub-resource is discarded, or a part that is of the S-SSB transmission on the second sub-resource and that is located in the guard band is discarded. Optionally, if a part or all of the determined second sub-resource exceeds a frequency domain range of the RB set, the resource pool, or the BWP, S-SSB transmission on the second sub-resource is discarded, or a part that is of the S-SSB transmission on the second sub-resource and that exceeds the frequency domain range of the RB set, the resource pool, or the BWP is discarded.

It should be understood that the interval between the first sub-resource and the second sub-resource adjacent in frequency domain and the interval between the second sub-resources adjacent in frequency domain may be determined based on different (pre)configured parameters, or may be determined based on a same (pre)configured parameter.

It should be noted that any parameter mentioned in this application may be determined in a (pre)configuration manner. Details are not described below.

The at least one third sub-resource is determined on the at least one second channel RB set based on at least one of the ARFCN, the frequency-domain repetition number, and the interval; or at least one third sub-resource is determined based on at least one of the frequency-domain resource index, the frequency-domain repetition number, and the interval.

For example, the at least one third sub-resource is determined based on at least one of the ARFCN, the frequency-domain repetition number, and the interval. Specifically, the at least one third sub-resource is determined based on a resource index of the first sub-resource and/or the at least one second sub-resource in the first channel RB set. In other words, a resource index of the at least one third sub-resource in the second channel RB set is the same as a resource index of the first sub-resource and/or a resource index of the at least one second sub-resource in the first channel RB set.

For another example, the at least one third sub-resource is determined based on at least one of the ARFCN, the frequency-domain repetition number, and the interval. Specifically, the at least one third sub-resource is determined based on the first sub-resource, and an interval between the first sub-resource and the second sub-resource adjacent in frequency domain, an interval between second sub-resources adjacent in frequency domain, an interval between the first sub-resource and a third sub-resource adjacent in frequency domain, an interval between a second sub-resource and a third sub-resource adjacent in frequency domain, and/or an interval between third sub-resources adjacent in frequency domain. Optionally, the third sub-resource is determined at a higher frequency and/or a lower frequency by using the first sub-resource and/or the second sub-resource as a reference. It should be understood that, the second sub-resource and/or the third sub-resource are/is determined at the higher frequency and/or the lower frequency by using the first sub-resource as a reference. A sub-resource located in the first channel RB set is a second sub-resource, and a sub-resource located in the second channel RB set is a third sub-resource. Optionally, if a part or all of the determined third sub-resource is located in a guard band between RB sets, S-SSB transmission on the third sub-resource is discarded, or a part that is of the S-SSB transmission on the third sub-resource and that is located in the guard band is discarded. Optionally, if a part or all of the determined third sub-resource exceeds a frequency domain range of the RB set, the resource pool, or the BWP, S-SSB transmission on the third sub-resource is discarded, or a part that is of the S-SSB transmission on the third sub-resource and that exceeds the frequency domain range of the RB set, the resource pool, or the BWP is discarded. It should be understood that the interval between the first sub-resource and the second sub-resource adjacent in frequency domain, the interval between the second sub-resources adjacent in frequency domain, the interval between the first sub-resource and the third sub-resource adjacent in frequency domain, the interval between the second sub-resource and the third sub-resource adjacent in frequency domain, and the interval between the third sub-resources adjacent in frequency domain may be determined based on different (pre)configured parameters or a same (pre)configured parameter.

It should be understood that the determined first sub-resource, second sub-resource, and/or third sub-resource may be distributed in a frequency domain range of the entire BWP or resource pool. Optionally, an S-SSB is sent only on an RB set on which the S-SSB needs to be sent. The RB set, namely, the first channel RB set and/or the second channel RB set, on which the S-SSB needs to be sent is determined according to the foregoing method.

Optionally, before sending an S-SSB, the first terminal device needs to perform LBT on each RB set, and the first terminal device sends an S-SSB only on an RB set on which LBT succeeds.

According to the solution of this application, a manner of determining an S-SSB sending resource in the first RB set and/or the at least one second RB set is provided, to ensure that information transmission meets an OCB requirement of regulations.

It should be understood that a method for determining, by the first terminal, at least one of the first sub-resource, the second resource, and the third sub-resource on the first channel RB set and/or the at least one second channel RB set may be independently implemented, and does not depend on determining and transmission of data and/or control resources.

In a possible implementation, a power for sending an S-SSB by a terminal device is determined by using the following formula:

$$P_{\text{S-SSB}}(i) = min\big(P_{\text{CMAX}}, P_{\text{O,S-SSB}} + 10\,log_{10}\big(2^{\mu} \cdot M_{\text{RB}}^{\text{S-SSB}}\big) + \alpha_{\text{S-SSB}} \cdot PL\big)[\text{dBm}] \qquad (1)$$

$P_{\text{CMAX}}$ is a maximum transmit power of the terminal device. If a parameter dl-P0-PSBCH is provided, a value of $P_{\text{O,S-SSB}}$ is a value provided by dl-P0-PSBCH; otherwise, $P_{\text{O,S-SSB}}(i) = P_{\text{CMAX}}$. If dl-Alpha-PSBCH is provided, $\alpha_{\text{S-SSB}}$ is a value provided by dl-Alpha-PSBCH; otherwise, $\alpha_{\text{S-SSB}} = 1$. In the formula, $PL$ represents a transmission loss estimated by the UE based on a reference signal, and $M_{\text{RB}}^{\text{S-SSB}}$ represents a number of RBs allocated to S-SSB transmission in transmission occasion i. In NR R16/R17 SL, $M_{\text{RB}}^{\text{S-SSB}} = 11$.

It should be understood that, if an S-SSB needs to be transmitted only at a frequency domain location indicated by the ARFCN, if the BWP or the resource pool of the SL-U includes a plurality of RB sets, and the S-SSB is transmitted only on one RB set, no transmission is performed on another RB set on the S-SSB occasion. This may lead to successful access of another device and may cause COT interruption. In this case, the UE needs to send the S-SSB on a plurality of RB sets. However, because a plurality of S-SSBs need to be repeatedly sent in frequency domain on a same S-SSB occasion, a power is split, coverage cannot be ensured, and a peak-to-average power ratio (peak to average power ratio, PAPR) increases (a plurality of same signals are sent on a same time domain resource, and waveform superposition causes a PAPR increase, affecting demodulation performance). Therefore, a power and coverage of the S-SSB indicated by the absolute radio frequency channel number ARFCN or the S-SSB on the RB set indicated by the ARFCN need to be ensured through design.

All S-SSBs in frequency domain are repeatedly received, and combination is performed based on different sidelink synchronization signal identities SLSS IDs, which is complex and has a higher requirement on a processing capability of a terminal. Different terminals have different capabilities, and not all terminals have the capability. Therefore, it needs to be assumed that the terminal can receive only the S-SSB indicated by the ARFCN or the S-SSB on the RB set indicated by the ARFCN. To ensure the power and the coverage of the S-SSB indicated by the ARFCN or the S-SSB on the RB set indicated by the ARFCN, and reduce impact of the PAPR, to meet a synchronization requirement, a transmit power of the S-SSB may be determined by using the following method.

Method 1

The first terminal device sends N S-SSBs on an S-SSB occasion, where the N S-SSBs are sent by using a first power or a second power, the first power is a maximum transmit power of the first terminal device, that is, $P_{CMAX}$, and the second power is determined based on a number of resource blocks RBs used for the N S-SSBs, that is,

$$P_{\mathrm{O,S-SSB}} + 10\, log_{10}\big(2^{\mu} \cdot M_{\mathrm{RB}}^{\mathrm{S-SSB'}}\big) + \alpha_{\mathrm{S-SSB}} \cdot PL.$$

Optionally, a total power of the N S-SSBs is determined based on a smaller one of the first power and the second power.

For example, calculation may be performed by using the following formula:

$$P_{\mathrm{S\text{-}SSB}} = min\big(P_{\mathrm{CMAX}}, P_{\mathrm{O,S-SSB}} + 10\, log_{10}\big(2^{\mu} \cdot M_{\mathrm{RB}}^{\mathrm{S-SSB'}}\big) + \alpha_{\mathrm{S-SSB}} \cdot PL\big)[\mathrm{dBm}] \qquad (2)$$

It should be understood that the foregoing power may be the total power of the N S-SSBs in frequency domain on the S-SSB occasion. Optionally, $M_{\mathrm{RB}}^{\mathrm{S-SSB'}} = $ Number of RBs of each S-SSB * N, where the number of RBs of each S-SSB is 11. Optionally, N is a total number of S-SSBs sent by the first terminal device on the S-SSB occasion or a total number of repetitions, and N is a positive integer.

Optionally, N may be a preconfigured value.

According to the solution of the method in this application, it can be ensured that a total concurrent transmit power does not exceed a maximum power of a terminal. This helps ensure stability of a power of an S-SSB for an ARFCN frequency or of an S-SSB on an RB set in which the ARFCN frequency is located, thereby avoiding a problem that when powers of S-SSBs of a same sending UE caused by different numbers of RB sets or different numbers of repetitions for sending the S-SSBs on different S-SSB occasions are unstable, a receiving UE frequently switches a synchronization source due to fluctuation of received signal strength of an S-SSB.

Method 2

The first terminal device sends N S-SSBs on an S-SSB occasion, where an S-SSB on each of the first channel and/or the at least one second channel is sent by using a third power or a fourth power. The third power is determined based on a maximum transmit power of the first terminal device, the third power is determined based on a maximum transmit power of the first terminal device and a first offset value, or the third power is determined based on a maximum transmit power of the first terminal device and Y, where Y is a sum of a channel number of the first channel and/or a channel number of the at least one second channel, and the fourth power is determined based on a number of RBs used for each S-SSB.

Optionally, a total power of S-SSBs on each RB set is determined based on a smaller value of the third power and the fourth power.

For example, calculation may be performed by using any one of the following formulas:

$$P_{\mathrm{S\text{-}SSB}}(\mathrm{RB\ set}) = min\big(P_{\mathrm{CMAX}}, P_{\mathrm{O,S-SSB}} + 10\, log_{10}\big(2^{\mu} \cdot M_{\mathrm{RB}}^{\mathrm{S-SSB'}}\big) + \alpha_{\mathrm{S-SSB}} \cdot PL\big) \quad [\mathrm{dBm}]$$

$$(3\text{-}1)$$

$$P_{\mathrm{S\text{-}SSB}}(\mathrm{RB\ set}) = min\big(P_{\mathrm{CMAX}} - \Delta_1, P_{\mathrm{O,S-SSB}} + 10\, log_{10}\big(2^{\mu} \cdot M_{\mathrm{RB}}^{\mathrm{S-SSB'}}\big) + \alpha_{\mathrm{S-SSB}} \cdot PL\big)[\mathrm{dBm}]$$

$$(3\text{-}2)$$

$$P_{\text{S-SSB}}(\text{RB set}) = min\left(P_{\text{CMAX}} - 10\lg(Y), P_{\text{O,S-SSB}} + 10\,log_{10}\left(2^{\mu} \cdot M_{\text{RB}}^{\text{S-SSB}\prime}\right) + \alpha_{\text{S-SSB}} \cdot$$

$$PL\right)[\text{dBm}] \hspace{6cm} (3\text{-}3)$$

It should be understood that the foregoing power may be a total power of S-SSBs on each RB set calculated based on the RB set, that is, $P_{\text{S-SSB}}(\text{RB set})$ in the formulas is the total power of the S-SSBs on the RB set. Optionally, Y is the sum of the channel number of the first channel and/or the channel number of the at least one second channel, and Y is a positive integer. Optionally, $M_{\text{RB}}^{\text{S-SSB}\prime} = \text{Number of RBs}$ of each S-SSB * N1, where the number of RBs of each S-SSB is 11. Optionally, N1 is a total number of S-SSBs sent by the first terminal device on the RB set on the S-SSB occasion or a total number of repetitions. Optionally, $\Delta_1$ is determined based on a (pre)configuration.

Optionally, Y may alternatively be a preconfigured value.

According to the solution of the method in this application, it can be ensured that a total concurrent transmit power does not exceed a maximum power, and a power on each RB set or of each S-SSB is stable. This helps ensure stability of a power of an S-SSB for an ARFCN frequency or of an S-SSB on an RB set in which the ARFCN frequency is located, thereby avoiding a problem that when powers of S-SSBs of a same sending UE caused by different numbers of RB sets or different numbers of repetitions for sending the S-SSBs on different S-SSB occasions are unstable, a receiving UE frequently switches a synchronization source due to fluctuation of received signal strength of an S-SSB.

Method 3

The first terminal device sends N S-SSBs on an S-SSB occasion, where each of the N S-SSBs is sent by using a fifth power or a fourth power, the fifth power is determined based on a maximum transmit power of the first terminal device and N, and the fourth power is determined based on a number of RBs used for each S-SSB.

Optionally, each of the N S-SSBs is determined based on a smaller one of the fifth power and the fourth power.

It should be understood that, a power of each S-SSB on the S-SSB occasion is calculated: $M_{\text{RB}}^{\text{S-SSB}}$ is still a number of RBs of the S-SSB, and a maximum power limit is changed to $P_{\text{CMAX}}$ - $10log_{10}N$. In other words, calculation is performed by using the following formula:

$$P_{\text{S-SSB}}(i) = min\left(P_{\text{CMAX}} - 10log_{10}N, P_{\text{O,S-SSB}} + 10\,log_{10}\left(2^{\mu} \cdot M_{\text{RB}}^{\text{S-SSB}}\right) + \alpha_{\text{S-SSB}} \cdot$$

$$PL\right)[\text{dBm}] \hspace{6cm} (4)$$

In the formula, the fifth power is $P_{\text{CMAX}}$ - $10log_{10}N$, and is determined based on the maximum transmit power and N; and the fourth power is $P_{\text{O,S-SSB}} + 10\,log_{10}\left(2^{\mu} \cdot M_{\text{RB}}^{\text{S-SSB}}\right) + \alpha_{\text{S-SSB}} \cdot PL$, and is determined based on the number of resource blocks RBs used for each S-SSB. Optionally, N is a total number of S-SSBs sent by the first terminal device on the S-SSB occasion or a total number of repetitions.

According to the solution of the method in this application, from a perspective of each S-SSB, it can be ensured that a total concurrent transmit power does not exceed a maximum power. This helps ensure stability of a power of an S-SSB for an ARFCN frequency or of an S-SSB on an RB set in which the ARFCN frequency is located, thereby avoiding a problem that when powers of S-SSBs of a same sending UE caused by different numbers of RB sets or different numbers of repetitions for sending the S-SSBs on different S-SSB occasions are unstable, a receiving UE frequently switches a synchronization source due to fluctuation of received signal strength of an S-SSB.

Method 4

In a possible implementation, the first terminal device sends an S-SSB on the first sub-resource by using a first power or a sixth power, where the first power is a maximum transmit power of the first terminal device, and the sixth power is determined based on a number of RBs used for each S-SSB and a second offset value.

That is, a power $Pi$ of each S-SSB on the S-SSB occasion is determined. For the S-SSB on the first sub-resource, a power $Pi$ is calculated by adding, subtracting, multiplying, or dividing $\left(P_{\text{O,S-SSB}} + 10\,log_{10}\left(2^{\mu} \cdot M_{\text{RB}}^{\text{S-SSB}}\right) + \alpha_{\text{S-SSB}} \cdot PL\right)$ by the second offset value $\Delta_2$ in the formula (1), and $P_{\text{CMAX}}$ is limited to be unchanged.

Optionally, if $\Delta_2$ is added, a value range of $\Delta_2$ is 101g(A), where a range of A is [1, +∞). For example:

$$P_{\text{S-SSB}} = min\left(P_{\text{CMAX}}, P_{\text{O,S-SSB}} + 10\,log_{10}\left(2^{\mu} \cdot M_{\text{RB}}^{\text{S-SSB}\prime}\right) + \alpha_{\text{S-SSB}} \cdot PL + \Delta_2\right)[\text{dBm}].$$

Optionally, if $\Delta_2$ is subtracted, a value range of $\Delta_2$ is 10lg(A), where a range of A is [0, 1], [0, 1), (0, 1], or (0, 1). For example:

$$P_{\text{S-SSB}} = min\left(P_{\text{CMAX}}, P_{\text{O,S-SSB}} + 10\,log_{10}\left(2^{\mu} \cdot M_{\text{RB}}^{\text{S-SSB}\prime}\right) + \alpha_{\text{S-SSB}} \cdot PL - \Delta_2\right)[\text{dBm}].$$

Optionally, if $\Delta_2$ is multiplied, a value range of $\Delta_2$ is [1, +∞). It should be understood that a unit of $\left(P_{\text{O,S-SSB}} + 10\,log_{10}\left(2^{\mu} \cdot M_{\text{RB}}^{\text{S-SSB}}\right) + \alpha_{\text{S-SSB}} \cdot PL\right)$ needs to be converted into W or mW, and then an operation is performed by using $\Delta_2$.

Optionally, if $\Delta_2$ is a divisor, a value range of $\Delta_2$ is [0, 1], [0, 1), (0, 1], or (0, 1). It should be understood that a unit of $\left(P_{\text{O,S-SSB}} + 10\,log_{10}\left(2^{\mu} \cdot M_{\text{RB}}^{\text{S-SSB}}\right) + \alpha_{\text{S-SSB}} \cdot PL\right)$ needs to be converted into W or mW, and then an operation is performed by using $\Delta_2$.

In a possible implementation, the first terminal device sends an S-SSB on the second sub-resource and the third sub-resource by using the first power or a seventh power, where the seventh power is determined based on a number of RBs used for each S-SSB and a third offset value.

That is, a power Pi of each S-SSB on the S-SSB occasion is determined. For the S-SSB on the second sub-resource and the third sub-resource, a power Pi is calculated by adding, subtracting, multiplying, or dividing $\left(P_{\text{O,S-SSB}} + 10\,log_{10}\left(2^{\mu} \cdot M_{\text{RB}}^{\text{S-SSB}}\right) + \alpha_{\text{S-SSB}} \cdot PL\right)$ by the third offset value $\Delta_3$ in the formula, and $P_{\text{CMAX}}$ is limited to be unchanged.

Optionally, if $\Delta_3$ is added, a value range of $\Delta_3$ is 10lg(B), where a range of B is [0, 1], [0, 1), (0, 1], or (0, 1). For example:

$$P_{\text{S-SSB}} = min\left(P_{\text{CMAX}}, P_{\text{O,S-SSB}} + 10\,log_{10}\left(2^{\mu} \cdot M_{\text{RB}}^{\text{S-SSB}\prime}\right) + \alpha_{\text{S-SSB}} \cdot PL + \Delta_3\right)[\text{dBm}].$$

Optionally, if $\Delta_3$ is subtracted, a value range of $\Delta_3$ is 10lg(B), where a range of B is [1, +∞). For example:

$$P_{\text{S-SSB}} = min\left(P_{\text{CMAX}}, P_{\text{O,S-SSB}} + 10\,log_{10}\left(2^{\mu} \cdot M_{\text{RB}}^{\text{S-SSB}\prime}\right) + \alpha_{\text{S-SSB}} \cdot PL - \Delta_3\right)[\text{dBm}].$$

Optionally, if $\Delta_3$ is multiplied, a value range of $\Delta_3$ is [0, 1], [0, 1), (0, 1], or (0, 1). It should be understood that a unit of $\left(P_{\text{O,S-SSB}} + 10\,log_{10}\left(2^{\mu} \cdot M_{\text{RB}}^{\text{S-SSB}}\right) + \alpha_{\text{S-SSB}} \cdot PL\right)$ needs to be converted into W or mW, and then an operation is performed by using $\Delta_3$.

Optionally, if $\Delta_3$ is a divisor, a value range of $\Delta_3$ is [1, +∞). It should be understood that a unit of $\left(P_{\text{O,S-SSB}} + 10\,log_{10}\left(2^{\mu} \cdot M_{\text{RB}}^{\text{S-SSB}}\right) + \alpha_{\text{S-SSB}} \cdot PL\right.$ needs to be converted into W or mW, and then an operation is performed by using $\Delta_3$.

In another possible implementation, the first terminal device sends an S-SSB on the second sub-resource and the third sub-resource by using an eighth power, where the eighth power is determined based on an energy detection threshold EDT and/or a fourth offset value, or is configured, or preconfigured, or predefined by the network device.

That is, the power Pi of each S-SSB on the S-SSB occasion is determined. For the S-SSB on the second sub-resource and the third sub-resource, the power of each S-SSB is determined according to a (pre)configured value, or is determined according to an energy detection threshold (Energy detection threshold, EDT), or is determined according to a (pre)configured value and an offset value, or is determined according to an EDT and an offset value.

Optionally, the power of each S-SSB is equal to a (pre)configured value, or is equal to the EDT.

It should be understood that the second offset value is configured, preconfigured, or predefined by a network device, and the third offset value is determined based on the second offset value; the third offset value is configured, preconfigured, or predefined by a network device, and the second offset value is determined based on the third offset value; or the second offset value is configured, preconfigured, or predefined by a network device, and the third offset value is configured, preconfigured, or predefined by the network device.

Optionally, the offset value may be (pre)configured. For example, the offset value is 0 or 1.

Optionally, $\Delta_2$ is (pre)configured, or $\Delta_3$ is (pre)configured.

Optionally, $\Delta_2$ may be determined based on $\Delta_3$, or $\Delta_3$ may be determined based on $\Delta_2$.

For example, $\Delta_2 + \Delta_3 = 0$ dB, $\Delta_2 + 10\lg X + \Delta_3 + 10\lg Y1 = 0$ dB, $\Delta_2 + 10\lg X + \Delta_3 = 0$ dB, or $\Delta_2 + \Delta_3 + 10\lg Y1 = 0$ dB

Optionally, X=1, or X is a number of S-SSB(s) on an RB set in which an S-SSB indicated by an ARFCN is located on an S-SSB occasion. Optionally, X may alternatively be a preconfigured value.

Optionally, Y1 is a number of S-SSBs other than the S-SSBs indicated by the ARFCN on the S-SSB occasion, or a number of S-SSBs on an RB set(s) other than the RB set in which the S-SSB indicated by the ARFCN is located. Optionally, Y1 may alternatively be a preconfigured value.

Alternatively, the first terminal device sends an S-SSB on the first sub-resource and the second sub-resource by using a first power or a sixth power, where the first power is a maximum transmit power of the first terminal device, and the sixth power is determined based on a number of resource blocks RBs used for each S-SSB and a second offset value $\Delta_2$.

In a possible implementation, the first terminal device sends an S-SSB on the third sub-resource by using the first power or a seventh power, where the seventh power is determined based on a number of resource blocks RBs used for each S-SSB and a third offset value $\Delta_3$.

In another possible implementation, the first terminal device sends an S-SSB on the third sub-resource by using an eighth power, where the eighth power is determined based on an energy detection threshold EDT and/or a fourth offset value, or is configured, or preconfigured, or predefined by the network device.

For a specific calculation manner, refer to the foregoing method. Details are not described herein again.

It should be noted that one or both of the second offset value and the third offset value may be applied, or neither of the second offset value and the third offset value is applied.

It should be understood that a scaling factor is not applied, or the scaling factor is 0 dB, which may be understood as: The parameter exists in the formula, but a value of the parameter is 0 (for example, based on a preconfiguration), or the parameter does not exist in the formula.

For example, the second offset value may be applied to only the S-SSB on the first sub-resource, and the original formula is used for the S-SSB on the second/third sub-resource, that is, there is no parameter of the third offset value (in other words, the parameter of the third offset value exists but a value is 0 dB, but forms are different). Alternatively, on the contrary, the third offset value is applied to only the S-SSB on the second/third sub-resource. Alternatively, both the second offset value and the third offset value are applied, to determine the S-SSB powers on the first sub-resource, the second sub-resource, and the third sub-resource. Alternatively, neither of the second offset value and the third offset value is applied. This is not limited in this application.

Therefore, in a possible implementation, the first terminal device sends an S-SSB on the first sub-resource by using the first power or a sixth power, where the first power is the maximum transmit power of the first terminal device, and the sixth power is determined based on the number of RBs used for each S-SSB, or the sixth power is determined based on the number of RBs used for each S-SSB and the second offset value. The first terminal device sends an S-SSB on the second sub-resource and the third sub-resource by using the first power or the seventh power, where the seventh power is determined based on the number of RBs used for each S-SSB, or the seventh power is determined based on the number of RBs used for each S-SSB and the third offset value.

In another possible implementation, the first terminal device sends an S-SSB on the first sub-resource by using the first power or a sixth power, where the first power is the maximum transmit power of the first terminal device, and the sixth power is determined based on the number of RBs used for each S-SSB, or the sixth power is determined based on the number of RBs used for each S-SSB and the second offset value. The first terminal device sends an S-SSB on the second sub-resource and the third sub-resource by using an eighth power.

In another possible implementation, the first terminal device sends an S-SSB on the first sub-resource and the second sub-resource by using the first power or the fifth power, where the first power is the maximum transmit power of the first terminal device, and the fifth power is determined based on the number of RBs used for each S-SSB, or the fifth power is determined based on the number of RBs used for each S-SSB and the second offset value. The first terminal device sends an S-SSB on the third sub-resource by using the first power or the sixth power, where the sixth power is determined based on the number of RBs used for each S-SSB, or the sixth power is determined based on the number of RBs used for each S-SSB and the third offset value.

In another possible implementation, the first terminal device sends an S-SSB on the first sub-resource and the second sub-resource by using the first power or the fifth power, where the first power is the maximum transmit power of the first terminal device, and the fifth power is determined based on the number of RBs used for each S-SSB, or the fifth power is determined based on the number of RBs used for each S-SSB and the second offset value. The first terminal device sends an S-SSB on the third sub-resource by using the eighth power.

It should be understood that the offset value in this application may also be referred to as a scaling factor, an adjustment value, a scale factor, or the like. This is not limited in this application.

According to the solution of the method in this application, a non-negative offset value is for adjusting a power for an S-SSB at an ARFCN frequency or an S-SSB of an RB set in which the ARFCN frequency is located, and/or a non-positive offset value is for adjusting a power for another S-SSB, to preferentially ensure a power of an S-SSB at an important ARFCN frequency or an S-SSB of an RB set in which the ARFCN frequency is located. This ensures that even if a receiving UE receives only the S-SSB at the ARFCN frequency or the S-SSB of the RB set in which the ARFCN frequency is located, sufficient coverage of the S-SSB can still be implemented. This helps ensure stability of a power of an S-SSB for an ARFCN frequency or of an S-SSB on an RB set in which the ARFCN frequency is located, thereby avoiding a problem that when powers of S-SSBs of a same sending UE caused by different numbers of RB sets or different numbers of repetitions for sending the S-SSBs on different S-SSB occasions are unstable, a receiving UE frequently switches a synchronization source due to fluctuation of received signal strength of an S-SSB.

Method 5

In a possible implementation, the first terminal device sends an S-SSB on the first sub-resource by using a ninth power or a fourth power, where the ninth power is determined based on a maximum transmit power of the first terminal device and a fifth offset value $\Delta_5$, and the fourth power is determined based on a number of RBs used for each S-SSB. The first terminal device sends an S-SSB on the second sub-resource and the third sub-resource by using a tenth power or the fourth power, where the tenth power is determined based on the maximum transmit power of the first terminal device and a sixth offset value $\Delta_6$.

For example, a power Pi of each S-SSB on the S-SSB occasion is determined. For the S-SSB on the first sub-resource, the following formula is used for calculation:

$$P_{\text{S-SSB}}(i) = min\big(P_{\text{CMAX}} + \Delta_5, P_{\text{O,S-SSB}} + 10\,log_{10}\big(2^{\mu} \cdot M_{\text{RB}}^{\text{S-SSB}}\big) + \alpha_{\text{S-SSB}} \cdot PL\big)[\text{dBm}].$$

For the S-SSBs on the second sub-resource and the third sub-resource, the following formula is used for calculation:

$$P_{\text{S-SSB}}(i) = min\big(P_{\text{CMAX}} + \Delta_6, P_{\text{O,S-SSB}} + 10\,log_{10}\big(2^{\mu} \cdot M_{\text{RB}}^{\text{S-SSB}}\big) + \alpha_{\text{S-SSB}} \cdot PL\big)[\text{dBm}].$$

In another possible implementation, the first terminal device sends an S-SSB on the first sub-resource and the second sub-resource by using a ninth power or a fourth power, where the ninth power is determined based on a maximum transmit power of the first terminal device and a fifth offset value $\Delta_5$, and the fourth power is determined based on a number of RBs used for each S-SSB. The first terminal device sends an S-SSB on the third sub-resource by using a tenth power or the fourth power, where the tenth power is determined based on the maximum transmit power of the first terminal device and a sixth offset value $\Delta_6$.

For example, a power *Pi* of each S-SSB on the S-SSB occasion is determined. For the S-SSB on the first sub-resource and the second sub-resource, the following formula is used for calculation:

$$P_{\text{S-SSB}}(i) = min\big(P_{\text{CMAX}} + \Delta_5, P_{\text{O,S-SSB}} + 10\,log_{10}\big(2^{\mu} \cdot M_{\text{RB}}^{\text{S-SSB}}\big) + \alpha_{\text{S-SSB}} \cdot PL\big)[\text{dBm}].$$

For the S-SSBs on the third sub-resource, the following formula is used for calculation:

$$P_{\text{S-SSB}}(i) = min\big(P_{\text{CMAX}} + \Delta_6, P_{\text{O,S-SSB}} + 10\,log_{10}\big(2^{\mu} \cdot M_{\text{RB}}^{\text{S-SSB}}\big) + \alpha_{\text{S-SSB}} \cdot PL\big)[\text{dBm}].$$

In another possible implementation, the first terminal device sends an S-SSB on the first sub-resource by using a ninth power or a fourth power, where the ninth power is determined based on a maximum transmit power of the first terminal device and a fifth offset value $\Delta_5$. The first terminal device sends an S-SSB on the second sub-resource and the third sub-resource by using an eleventh power, where the eleventh power is determined based on an energy detection threshold EDT and/or a seventh offset value, or is configured, or preconfigured, or predefined by the network device.

That is, the power Pi of each S-SSB on the S-SSB occasion is determined. For the S-SSB on the second sub-resource and the third sub-resource, the power of each S-SSB is determined according to a (pre)configured value, or is determined according to an energy detection threshold (Energy detection threshold, EDT), or is determined according to a (pre)configured value and an offset value, or is determined according to an EDT and an offset value.

Optionally, the power of each S-SSB is equal to a (pre)configured value, or is equal to the EDT.

It should be understood that the fifth offset value is configured, preconfigured, or predefined by a network device, and the sixth offset value is determined based on the fifth offset value; the sixth offset value is configured, preconfigured, or predefined by a network device, and the fifth offset value is determined based on the sixth offset value; or the fifth offset value is configured, preconfigured, or predefined by a network device, and the sixth offset value is configured, preconfigured, or predefined by the network device.

Optionally, $\Delta_5$ is (pre)configured, or $\Delta_6$ is (pre)configured.

Optionally, $\Delta_5$ may be determined based on $\Delta_6$, or $\Delta_6$ may be determined based on $\Delta_5$.

For example, $\Delta_5 + \Delta_6 = 0$ dB, $\Delta_5 + 10\lg X + \Delta_6 + 100 g Y1 = 0$ dB, $\Delta_5 + 10\lg X + \Delta_6 = 0$ dB, or $\Delta_5 + \Delta_6 + 10\lg Y1 = 0$ dB

Optionally, X=1, or X is a number of S-SSB(s) on an RB set in which an S-SSB indicated by an ARFCN is located on an S-SSB occasion. Optionally, X may alternatively be a preconfigured value.

Optionally, Y1 is a number of S-SSBs other than the S-SSBs indicated by the ARFCN on the S-SSB occasion, or a number of S-SSBs on an RB set(s) other than the RB set in which the S-SSB indicated by the ARFCN is located. Optionally, Y1 may alternatively be a preconfigured value.

Alternatively, the first terminal device sends an S-SSB on the first sub-resource and the second sub-resource by using a ninth power or a fourth power, where the ninth power is determined based on a maximum transmit power of the first terminal device and a fifth offset value $\Delta_5$, and the fourth power is determined based on a number of resource blocks RBs used for each S-SSB.

In a possible implementation, the first terminal device sends an S-SSB on the third sub-resource by using a tenth power or the fourth power, where the tenth power is determined based on the maximum transmit power of the first terminal device and a sixth offset value $\Delta_6$.

In another possible implementation, the first terminal device sends an S-SSB on the third sub-resource by using an eleventh power, where the eleventh power is determined based on an energy detection threshold EDT and/or a fourth offset value, or is configured, or preconfigured, or predefined by the network device.

For a specific calculation manner, refer to the foregoing method. Details are not described herein again.

It should be noted that one or both of the fifth offset value and the sixth offset value may be applied, or neither of the second offset value and the third offset value is applied.

It should be understood that an offset value is not applied, or the offset value is 0 dB, which may be understood as: The parameter exists in the formula, but a value of the parameter is 0 (for example, based on a preconfiguration), or the parameter does not exist in the formula.

For example, the fifth offset value may be applied to only the S-SSB on the first sub-resource, and the original formula is used for the S-SSB on the second/third sub-resource, that is, there is no parameter of the fifth offset value (in other words, the parameter of the fifth offset value exists but a value is 0 dB, but forms are different). Alternatively, on the contrary, the sixth offset value is applied to only the S-SSB on the second/third sub-resource. Alternatively, both the fifth offset value and the sixth offset value are applied, to determine the S-SSB powers on the first sub-resource, the second sub-resource, and the third sub-resource. Alternatively, neither of the fifth offset value and the sixth offset value is applied. This is not limited in this application.

Therefore, in a possible implementation, the first terminal device sends an S-SSB on the first sub-resource by using a ninth power or a fourth power, where the ninth power is determined based on a maximum transmit power of the first terminal device and a fifth offset value, or the ninth power is the maximum transmit power of the first terminal device, and the fourth power is determined based on a number of RBs used for each S-SSB. The first terminal device sends an S-SSB on the second sub-resource and the third sub-resource by using a tenth power or the fourth power, where the tenth power is determined based on the maximum transmit power of the first terminal device and a sixth offset value, or the tenth power is a maximum transmit power of the first terminal device.

In another possible implementation, the first terminal device sends an S-SSB on the first sub-resource by using a ninth power or a fourth power, where the ninth power is determined based on a maximum transmit power of the first terminal device and a fifth offset value, or the ninth power is the maximum transmit power of the first terminal device, and the fourth power is determined based on a number of RBs used for each S-SSB. The first terminal device sends an S-SSB on the second sub-resource and the third sub-resource by using an eleventh power.

In another possible implementation, the first terminal device sends an S-SSB on the first sub-resource and the second sub-resource by using a ninth power or a fourth power, where the ninth power is determined based on a maximum transmit power of the first terminal device and a fifth offset value, or the ninth power is the maximum transmit power of the first terminal device, and the fourth power is determined based on a number of RBs used for each S-SSB. The first terminal device sends an S-SSB on the third sub-resource by using a tenth power or the fourth power, where the tenth power is determined based on the maximum transmit power of the first terminal device and a sixth offset value, or the tenth power is a maximum transmit power of the first terminal device.

In another possible implementation, the first terminal device sends an S-SSB on the first sub-resource and the second sub-resource by using a ninth power or a fourth power, where the ninth power is determined based on a maximum transmit power of the first terminal device and a fifth offset value, or the ninth power is the maximum transmit power of the first terminal device, and the fourth power is determined based on a number of RBs used for each S-SSB. The first terminal device sends an S-SSB on the third sub-resource by using an eleventh power.

Optionally, N is a number of frequency-domain repetitions of an S-SSB in an RB set, or is a number of frequency-domain repetitions of all S-SSBs included in all RB sets on which an S-SSB occasion needs to be sent on an S-SSB occasion.

A beneficial effect of the method 5 is similar to that of the method 4. Details are not described herein again.

Optionally, if on the S-SSB occasion, the total concurrent transmit power of the N S-SSBs calculated according to method 1 to method 5 does not exceed $P_{CMAX}$, for example, $P_i + 10log_{10}N \leq P_{CMAX}$ or $\Sigma P_i \leq P_{CMAX}$, that is, the total transmit power of the N S-SSBs is less than or equal to $P_{CMAX}$, the transmit power of the S-SSB is a value determined according to method 1 to method 5.

In a possible implementation, when a total transmit power of the N S-SSBs is greater than a first power $P_{CMAX}$, a power of each S-SSB in the N S-SSBs is adjusted to $P_{CMAX} - 10log_{10}N$; or a total power of S-SSBs in each RB set in Y RB sets is adjusted to $P_{CMAX} - 10log_{10}Y$.

In another possible implementation, when a total transmit power of the N S-SSBs is greater than a first power $P_{CMAX}$, a transmit power is allocated in descending order of the following priorities, so that the total transmit power is not greater than the first power, where the first power is the maximum transmit power of the first terminal device: an S-SSB located on the first sub-resource, and an S-SSB located on the second sub-resource and/or the third sub-resource. In other words, the transmit power of the S-SSB at the ARFCN frequency is preferentially ensured.

It should be understood that the transmit power may alternatively be reallocated in descending order of the following priorities: an S-SSB located on the first sub-resource and/or an S-SSB on the second sub-resource, and an S-SSB on the third sub-resource. That is, the transmit powers of the S-SSB on the first sub-resource and the second sub-resource are preferentially ensured. In other words, the transmit power of the S-SSB on the RB set on which the ARFCN frequency is located is preferentially ensured.

It should be understood that a transmit power is reallocated in descending order of priorities. To be specific, a power is preferentially allocated for a first rank or a higher priority, then for a second rank, and so on. That a priority sequence is the S-SSB located on the first sub-resource and the S-SSB located on the second sub-resource and/or the third sub-resource is used as an example. A power requirement of the S-SSB located on the first sub-resource needs to be first met, and powers of the S-SSBs located on the second sub-resource and/or the third sub-resource need to be reduced, so that a total power does not exceed $P_{CMAX}$. If the powers of the S-SSBs of the second sub-resource and/or the third sub-resource are reduced to 0, and the total power is still greater than $P_{CMAX}$, the power of the S-SSB located on the first sub-resource is reduced, so that the total power does not exceed $P_{CMAX}$.

Optionally, a transmit power may alternatively be allocated in descending order of the following priorities:

(1) each S-SSB, including the S-SSBs located on the first sub-resource, the second sub-resource, and/or the third sub-resource, where priorities are the same;
(2) the S-SSB indicated by the ARFCN (that is, an S-SSB located at a raster), S-SSBs at two ends of the RB set, and another S-SSB, that is, the S-SSB located on the first sub-resource, the S-SSBs located at two ends of the RB set, and the another S-SSB; or
(3) the S-SSB indicated by the ARFCN, another S-SSB(s) on an RB set on which the S-SSB indicated by the ARFCN is located, and an S-SSB on another RB set(s), that is, the S-SSB located on the first sub-resource, the S-SSB located on the second sub-resource, and the S-SSB located on the third sub-resource.

It should be understood that, the reallocation of the transmit power in descending order may also be understood as backing off a transmit power of at least one S-SSB in the N S-SSBs. Optionally, a power of an S-SSB that is ranked at the bottom in the priority sequence, that is, the power of the S-SSB with a low priority, is first backed off or reduced.

It should be understood that, because the first terminal sends an S-SSB on at least one of the first sub-resource, the second sub-resource, or the third sub-resource, in the foregoing priority sequence, an S-SSB type included in each priority sequence is not required to exist. For example, when the first terminal sends an S-SSB only on the first sub-resource and the second sub-resource, a priority sequence is a sequence obtained by excluding the S-SSB on the third sub-resource from any one of the foregoing priority sequences. (3) is used as an example. If the first terminal sends an S-SSB only on the first sub-resource and the second sub-resource, a priority sequence is: the S-SSB indicated by the ARFCN, and another S-SSB(s) on an RB set on which the S-SSB indicated by the ARFCN is located, that is, the S-SSB located on the first sub-resource and the S-SSB located on the second sub-resource.

It should be understood that, for priority relationship 1, all S-SSBs are considered to have a same priority. If the total transmit power is greater than the maximum power limit, all S-SSBs are evenly backed off. For priority relationship 2, the transmit power of the S-SSB indicated by the ARFCN, that is, the S-SSB on the first sub-resource, is preferentially ensured, and then the transmit powers of the S-SSBs located at two ends of the channel are ensured, to ensure that the OCB requirement is met. For priority relationship 3, the S-SSB on the first sub-resource is preferentially ensured, the S-SSB on the second sub-resource is then ensured, and the S-SSB on the third sub-resource is finally ensured.

It should be understood that, during power back-off or reduction, powers of S-SSBs with a same priority are reduced evenly at the same time, or a reduction manner depends on terminal implementation.

According to the solution of this application, when the concurrent transmit power exceeds the maximum power, a method for power allocation based on a specific priority sequence is used to ensure that a power of an S-SSB at an ARFCN frequency or an S-SSB of an RB set on which the ARFCN frequency is located is preferentially allocated. In this way, even if a receiving UE receives only the S-SSB at the ARFCN frequency or the S-SSB of the RB set in which the ARFCN frequency is located, sufficient coverage of the S-SSB can still be implemented. This helps ensure stability of a power of an S-SSB for an ARFCN frequency or of an S-SSB on an RB set in which the ARFCN frequency is located, thereby avoiding a problem that when powers of S-SSBs of a same sending UE caused by different numbers of RB sets or different numbers of repetitions for sending the S-SSBs on different S-SSB occasions are unstable, a receiving UE frequently switches a synchronization source due to fluctuation of received signal strength of an S-SSB.

Optionally, the first terminal device sends N S-SSBs on the first channel and/or the second channel on the first transmission occasion, where the transmit power of each of the N S-SSBs is not less than a minimum power value, and the minimum power value is the EDT, is determined based on the EDT, or is configured, preconfigured, or predefined by the network device.

It should be understood that, for the S-SSB power calculated according to method 1 to method 5 (for example, the power obtained through calculation based on $\Delta_2$ or $\Delta_3$, or the power obtained through power back-off or allocation or back-off based on a priority sequence), it needs to ensure that the power of the S-SSB on each RB set is not lower than the EDT, is not lower than the power determined based on the EDT, or is not lower than the (pre)configured power. In this way, it can be ensured that the power is not lower than the channel occupancy threshold, and a channel loss and COT interruption can be avoided.

Optionally, the first terminal device sends N S-SSBs on the first channel and/or the second channel on the first transmission occasion, where the transmit power of each of the N S-SSBs is not greater than a maximum power value, and the maximum power value is determined based on a regulatory power or power spectral density, or is configured, preconfigured, or predefined by the network device.

It should be understood that the power of the S-SSB on each RB set, the power of each S-SSB, or a power on each 1 MHz is not higher than the maximum power value.

It should be understood that, for the S-SSB power calculated according to method 1 to method 5 (for example, the power obtained through calculation based on $\Delta_2$ or $\Delta_3$), it needs to ensure that the power of the S-SSB on each RB set, the power of each S-SSB, or the power on each 1 MHz does not exceed a power upper limit determined based on a regulatory power and a PSD constraint, or does not exceed a (pre)configured power. In this way, the power can be prevented from exceeding a regulatory constraint after boosting.

Optionally, the first terminal device selects a plurality of contiguous resources in time domain to send data and/or a control channel. The first terminal device uses a gap GAP symbol of a resource other than a last resource in time domain in the plurality of resources for sidelink transmission. The sidelink transmission includes one or more of the following: a PSSCH, a PSCCH, an S-SSB, or a PSBCH.

Optionally, the gap symbol is also referred to as a GP symbol, that is, a guard period (guard period).

Optionally, during contiguous transmission of the PSSCH and/or the PSCCH, a gap symbol during the contiguous transmission may be cancelled.

Optionally, when the first terminal continuously transmits the PSSCH and/or the PSCCH (that is, transmission in contiguous slots in time domain), a sidelink gap symbol at the end of each slot except a last slot is canceled. Optionally, transmission in the 1st slot, all slots, or at least one slot in the contiguous transmission occupies an entire RB set in frequency domain . Optionally, that a corresponding gap symbol is canceled may be understood as that the first terminal performs sidelink transmission on the gap symbol.

Optionally, whether the cancellation is allowed is determined based on a (pre)configuration. It should be understood that, when (pre)configuration is that cancellation is allowed and the foregoing conditions are met, the corresponding gap symbol may be canceled; and when (pre)configuration is that cancellation is not allowed, the corresponding gap symbol is not allowed to be canceled in any case.

In a possible implementation, the first terminal device transmits the PSSCH on the GAP symbol in a rate matching manner, the first terminal device transmits, on the GAP symbol, a transmission copy of a previous sideline symbol or a next sideline symbol, or the first terminal device transmits a cyclic prefix extension CPE on the GAP symbol.

CPE: cyclic prefix extension (extension), which refers to redundant transmission performed before actual useful channel/signal transmission. The CPE is usually a duplication of some redundant information or useful channels/signals. In unlicensed spectrum transmission, for example, NR-U or SL-U, usually, because an LBT end moment of a channel access process is not always adjacent to an actual useful transmission resource in time domain, a channel loss or a regulatory risk may exist. Therefore, the CPE is sent at a corresponding gap to ensure time adjacentness. The CPE is usually configured or indicated based on signaling. There are two main application scenarios. One is that during COT initialization, the CPE is sent before transmission of Type 1 LBT. The other is that in a COT, when a gap between transmissions of a COT initialization device or between a transmission of a COT initialization device and a transmission of another sharing UE does not meet a requirement of LBT Type 2A, 2B, and 2C on a gap between two transmissions, a CPE of a specific length needs to be sent before actual useful transmission to meet the gap requirement.

It should be understood that the method for canceling the gap symbol is: performing rate matching on the gap symbol for transmitting the PSSCH; or transmitting, on the gap symbol, a copy/duplicate of the sidelink transmission (any one or more of the PSSCH, the PSCCH, the S-SSB, or the PSBCH) on a previous symbol or a next symbol.

It should be understood that using contiguous slots in time domain for transmission is using contiguous physical slots (not logical slots) in time domain for transmission.

For example, if a PSSCH and/or a PSCCH that are/is transmitted by using contiguous logical slots cross/crosses a non-sidelink slot and/or an S-SSB slot, transmission of the PSSCH and/or the PSCCH before and after the non-sidelink slot and/or the S-SSB slot is no longer considered as contiguous transmission.

Optionally, the first terminal device indicates, in first-stage sidelink control information SCI, second-stage SCI, or a medium access control-control element MAC CE in sidelink transmission on each of the at least one resource, whether a GAP symbol of the resource is used for sidelink transmission, or indicates whether a gap symbol of the slot is canceled. Optionally, 1 bit or a specific state value of a new field, or 1 bit or a specific state value of an existing field is used for indication.

It should be understood that a related method for canceling the gap symbol may be independently implemented, and does not depend on determining and transmission of the S-SSB and initialization and sharing of the COT.

According to the solution of this application, because a gap symbol does not need to be used for reception-transmission switching or transmission-reception switching during contiguous transmission, canceling the gap can avoid COT interruption, and use more resources for transmitting a useful signal, thereby improving coverage and a throughput. In addition, during transmission, whether a gap is canceled in a current slot is indicated, which helps a receiving UE learn about the information, and determine how to receive and process the gap symbol based on the information, thereby improving communication stability.

In another possible implementation, the first terminal device determines a first resource pool; the first terminal device determines a sixteenth resource in the first resource pool; and the first terminal device sends a sidelink synchronization signal block S-SSB on the sixteenth resource.

In another possible implementation, the first terminal device sends an S-SSB on each RB set.

Optionally, the S-SSB meets an OCB requirement on each RB set.

Optionally, the S-SSB meets an OCB on RB sets on which the PSSCH/PSCCH needs to be sent.

Optionally, different terminal devices send S-SSBs on different RB sets, and each terminal device determines, based on a UE ID, an RB set to be selected.

Optionally, the S-SSB has a higher channel access priority CAPC (for example, CAPC=1), a longer CPE, and/or a higher service priority.

In another possible implementation, the first terminal device sends second indication information, where the second indication information includes reservation information of the sixteenth resource, and/or includes indication information of a resource used for S-SSB transmission.

The second indication information is carried on at least one of the first-stage SCI, the second-stage SCI, or the MAC CE.

The indication information may be 1 bit to indicate whether a reserved resource is for sending the S-SSB.

Optionally, after the first terminal device successfully performs listen before talk LBT before the sixteenth resource, the first terminal device sends a sidelink synchronization signal block S-SSB on the sixteenth resource.

Optionally, the first terminal device determines at least one of a number of times of sending an S-SSB in a synchronization period, a maximum time domain gap between sending two adjacent S-SSBs in the synchronization period, and a minimum time domain gap between sending two adjacent S-SSBs in the synchronization period.

Optionally, the number of times of sending an S-SSB in the synchronization period, the maximum time domain gap between sending two adjacent S-SSBs in the synchronization period, and/or the minimum time domain gap between sending two adjacent S-SSBs in the synchronization period are/is (pre)configured; and/or the number of times of sending an S-SSB in the synchronization period, the maximum time domain gap between sending two adjacent S-SSBs in the synchronization period, and/or the minimum time domain gap between sending two adjacent S-SSBs in the synchronization period are/is determined based on a subcarrier spacing.

In another possible implementation, the first terminal device determines a seventeenth resource after successfully performing listen before talk LBT, where the seventeenth resource is a resource in the 1st slot after the listen before talk succeeds; and the first terminal device sends a sidelink synchronization signal block S-SSB on the seventeenth resource.

Therefore, according to the solution of this application, a problem of COT interruption in S-SSB transmission can be avoided, S-SSB transmission is ensured, and data transmission is not interrupted.

According to the foregoing method, FIG. 26 is a diagram of a wireless communication apparatus 500 according to an embodiment of this application.

The apparatus 500 may be a first terminal device, or may be a chip or a circuit, for example, a chip or a circuit that may be disposed in the first device.

The apparatus 500 may include a processing unit 510 (namely, an example of a processing unit), and optionally, may further include a storage unit 520. The storage unit 520 is configured to store instructions.

In a possible implementation, the processing unit 510 is configured to execute the instructions stored in the storage unit 520, so that the apparatus 400 implements the steps performed by the terminal device in the foregoing methods.

Further, the apparatus 500 may further include an input port 530 (that is, an example of a receiving unit) and an output port 540 (that is, an example of a sending unit). Further, the processing unit 510, the storage unit 520, the input port 530, and the output port 540 may communicate with each other through an internal connection path, to transmit a control signal and/or a data signal. The storage unit 520 is configured to store a computer program. The processing unit 510 may be configured to invoke the computer program from the storage unit 520 and run the computer program, to complete the steps performed by the terminal device in the foregoing method. The storage unit 520 may be integrated into the processing unit 510, or may be disposed separately from the processing unit 510.

Optionally, in a possible implementation, the input port 530 may be a receiver, and the output port 540 is a transmitter. The receiver and the transmitter may be a same physical entity or different physical entities. When the receiver and the transmitter are a same physical entity, the receiver and the transmitter may be collectively referred to as a transceiver.

Optionally, in a possible implementation, the input port 530 is an input interface, and the output port 540 is an output interface.

In an implementation, it may be considered that functions of the input port 530 and the output port 540 are implemented by using a transceiver circuit or a dedicated transceiver chip. It may be considered that the processing unit 510 is implemented by using a dedicated processing chip, a processing circuit, a processing unit, or a general-purpose chip.

In another implementation, it may be considered that the communication device (for example, the first terminal device) provided in this embodiment of this application may be implemented by using a general-purpose computer. To be specific, program code for implementing functions of the processing unit 510, the input port 530, and the output port 540 is stored in the storage unit 520, and a general-purpose processing unit executes the code in the storage unit 520 to implement functions of the processing unit 510, the input port 530, and the output port 540.

For concepts, explanations, detailed descriptions, and other steps of the apparatus 500 that are related to the technical solutions provided in embodiments of this application, refer to the descriptions of the content in the foregoing methods or other embodiments. Details are not described herein again.

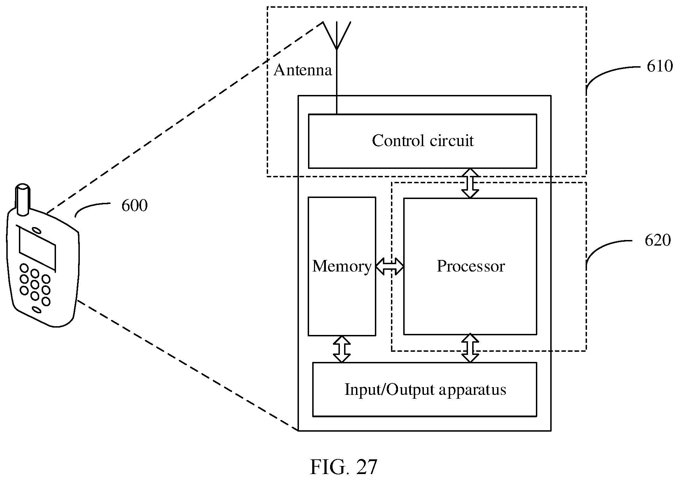

FIG. 27 is a diagram of a structure of a terminal device 600 according to this application. The apparatus 500 may be configured in the terminal device 600, or the apparatus 500 may be the terminal device 600. In other words, the terminal device 600 may perform an action performed by the terminal device in the foregoing methods.

For ease of description, FIG. 27 shows only main components of the terminal device. As shown in FIG. 27, the terminal device 600 includes a processor, a memory, a control circuit, an antenna, and an input/output apparatus.

The processor is mainly configured to process a communication protocol and communication data, control the entire terminal device, execute a software program, and process data of the software program, for example, is configured to support the terminal device in performing the actions described in the foregoing embodiments of the indication method for transmitting a precoding matrix. The memory is mainly configured to store the software program and the data, for example, store a codebook described in the foregoing embodiments. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, such as a touchscreen, a display, or a keyboard, is mainly configured to: receive data input by a user and output data to the user.

After the terminal device is powered on, the processor may read the software program in the storage unit, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, by using the antenna, a radio frequency signal in an electromagnetic wave form. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 27 shows only one memory and one processor. In an actual terminal device, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal device, execute the software program, and process the data of the software program. The processor in FIG. 27 integrates functions of the baseband processor and the central processing unit. A person skilled in the art may understand that the baseband processor and the central processing unit may be independent processors, and are connected to each other by using technologies such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna that has sending and receiving functions and the control circuit may be considered as a transceiver unit 610 of the terminal device 600, and the processor that has a processing function may be considered as a processing unit 620 of the terminal device 600. As shown in FIG. 27, the terminal device 600 includes the transceiver unit 610 and the processing unit 620. The transceiver unit may also be referred to as a transceiver, a transceiver machine, a transceiver apparatus, or the like. Optionally, a component that is in the transceiver unit 610 and that is configured to implement a receiving function may be considered as a receiving unit, and a component that is in the transceiver unit 610 and that is configured to implement a sending function may be considered as a sending unit. **In** other words, the transceiver unit includes the receiving unit and the sending unit. For example, the receiving unit may also be referred to as a receiver, a receive machine, or a receiving circuit, and the sending unit may also be referred to as a transmitter, a transmit machine, or a transmitting circuit.

It should be understood that, the processor in embodiments of this application may be a central processing unit (central processing unit, CPU), or may be another general purpose processor, a digital signal processor (digital signal processor, DSP), an application-specific integrated circuit (application specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. **In** addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for convenient and brief description, for a detailed working process of the foregoing system, apparatus, and units, refer to a corresponding process in the foregoing method embodiments, and details are not described herein again. **In** the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. **In** addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. **In** addition, functional units in embodiments of this application may be integrated into one processing unit, each of the units may exist alone physically, or two or more units are integrated into one unit. When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A sidelink information transmission method, wherein the method comprises:

    determining, by a first terminal device, a resource pool corresponding to each of at least two carriers in a first carrier set, wherein a sidelink synchronization signal block S-SSB resource is configured on each carrier in the first carrier set, the S-SSB resource is for sending and/or receiving an S-SSB, and any resource in a resource pool corresponding to any carrier in the first carrier set does not overlap, in time domain, an S-SSB resource on any carrier in a second carrier set, wherein the second carrier set comprises at least one carrier in the first carrier set, or a resource pool corresponding to any carrier in the first carrier set does not comprise an S-SSB resource on the carrier; and
    selecting, by the first terminal device, at least one first resource from the resource pool to send data.

2. The method according to claim 1, wherein

    the second carrier set comprises all carriers in the first carrier set;
    the second carrier set comprises at least one carrier whose subcarrier spacing SCS is a first SCS in the first carrier set; or
    the second carrier set comprises at least one carrier with a smallest SCS in the first carrier set.

3. The method according to claim 1 or 2, wherein the second carrier set comprises the at least one carrier whose SCS is the first SCS in the first carrier set; and
the method further comprises:
sending and/or receiving, by the first terminal device, an S-SSB only on a carrier in the second carrier set.

4. The method according to any one of claims 1 to 3, wherein the second carrier set comprises the at least one carrier with the smallest SCS in the first carrier set; and
a start location and an end location of an S-SSB resource on each carrier in the first carrier set in time domain are within a first range, wherein the first range is a time domain range corresponding to an S-SSB resource on the at least one carrier with the smallest SCS in the first carrier set.

5. The method according to any one of claims 1 to 4, wherein the second carrier set comprises the at least one carrier with the smallest SCS in the first carrier set; and

start locations of S-SSB resources on all carriers in the first carrier set are aligned in time domain; or
end locations of S-SSB resources on all carriers in the first carrier set are aligned in time domain.

6. The method according to any one of claims 1 to 5, wherein

the first resource and a second resource do not overlap in time domain, wherein the second resource comprises a resource on which the first terminal device receives an S-SSB; and/or
the first resource and a third resource do not overlap in time domain, wherein a sum of a number of carriers corresponding to the third resource and a number of carriers for simultaneously sending data and an S-SSB is greater than a maximum number of concurrently-transmitting carriers supported by the first terminal device.

7. The method according to any one of claims 1 to 6, wherein the method comprises:

determining, by the first terminal device, a fourth resource and/or a fifth resource based on first indication information, wherein the fourth resource is a resource used by a second terminal to send data and/or an S-SSB, the fifth resource is a resource used by the second terminal device to receive data and/or an S-SSB, and a sum of a number of carriers corresponding to the fifth resource and a number of carriers used by the second terminal device to simultaneously receive data and an S-SSB is greater than a maximum number of concurrently-receiving carriers of the second terminal device, wherein
the first resource and the fourth resource do not overlap in time domain; and/or
the first resource and the fifth resource do not overlap in time domain.

8. A sidelink information transmission method, wherein the method comprises:

determining, by a first terminal device, a resource pool corresponding to each of at least two carriers in a first carrier set, wherein a sidelink synchronization signal block S-SSB resource is configured on each carrier in the first carrier set, the S-SSB resource is for sending and/or receiving an S-SSB, and any resource in a resource pool corresponding to any carrier in the first carrier set does not overlap, in time domain, an S-SSB resource on any carrier in a second carrier set, wherein the second carrier set comprises at least one carrier in the first carrier set, or a resource pool corresponding to any carrier in the first carrier set does not comprise an S-SSB resource on the carrier; and
selecting, by the first terminal device, at least one first resource from the resource pool to send data.

9. The method according to claim 8, wherein

the second carrier set comprises all carriers in the first carrier set;
the second carrier set comprises at least one carrier whose subcarrier spacing SCS is a first SCS in the first carrier set; or
the second carrier set comprises at least one carrier with a smallest SCS in the first carrier set.

10. The method according to claim 8 or 9, wherein the second carrier set comprises the at least one carrier whose SCS is the first SCS in the first carrier set; and
the method further comprises:
sending and/or receiving, by the first terminal device, an S-SSB only on a carrier in the second carrier set.

11. The method according to any one of claims 8 to 10, wherein the second carrier set comprises the at least one carrier with the smallest SCS in the first carrier set; and

a start location and an end location of an S-SSB resource on each carrier in the first carrier set in time domain are within a first range, wherein the first range is a time domain range corresponding to an S-SSB resource on the at least one carrier with the smallest SCS in the first carrier set.

12. The method according to any one of claims 8 to 11, wherein the second carrier set comprises the at least one carrier with the smallest SCS in the first carrier set; and

start locations of S-SSB resources on all carriers in the first carrier set are aligned in time domain; or
end locations of S-SSB resources on all carriers in the first carrier set are aligned in time domain.

13. The method according to any one of claims 8 to 12, wherein

the first resource and a second resource do not overlap in time domain, wherein the second resource comprises a resource on which the first terminal device receives an S-SSB; and/or
the first resource and a third resource do not overlap in time domain, wherein a sum of a number of carriers corresponding to the third resource and a number of carriers for simultaneously sending data and an S-SSB is greater than a maximum number of concurrently-transmitting carriers supported by the first terminal device.

14. The method according to any one of claims 8 to 13, wherein the method comprises:
sending, by the first terminal device, first reservation information, wherein the first reservation information indicates a location of a sixth resource, and the sixth resource is a resource that is reserved by the first terminal device for sending data to a second terminal device.

15. The method according to any one of claims 8 to 14, wherein the method comprises:

re-selecting, by the first terminal device, at least one first resource from the resource pool based on conflict indication information, wherein the sixth resource and the first resource do not overlap in time domain; and
sending, by the first terminal device, data on the at least one re-selected first resource.

16. A wireless communication apparatus, comprising:

a processing unit, configured to determine a resource pool corresponding to each of at least two carriers in a first carrier set, wherein a sidelink synchronization signal block S-SSB resource is configured on each carrier in the first carrier set, and any resource in a resource pool corresponding to any carrier in the first carrier set does not overlap, in time domain, an S-SSB resource on any carrier in a second carrier set, wherein the second carrier set comprises at least one carrier in the first carrier set, or a resource pool corresponding to any carrier in the first carrier set does not comprise an S-SSB resource on the carrier, wherein
the processing unit is further configured to select at least one first resource from the resource pool;
a receiving unit, configured to receive first indication information, wherein the first indication information indicates locations/a location of a fourth resource and/or a fifth resource, wherein the fourth resource is a resource used by a second terminal to send data and/or an S-SSB, the fifth resource is a resource used by the second terminal device to receive data and/or an S-SSB, and a sum of a number of carriers corresponding to the fifth resource and a number of carriers used by the second terminal device to simultaneously receive data and an S-SSB is greater than a maximum number of concurrently-receiving carriers of the second terminal device; and
a sending unit, configured to send data on the at least one first resource.

17. The apparatus according to claim 16, wherein the second carrier set comprises all carriers in the first carrier set;

the second carrier set comprises at least one carrier whose subcarrier spacing SCS is a first SCS in the first carrier set; or
the second carrier set comprises at least one carrier with a smallest SCS in the first carrier set.

18. The apparatus according to claim 16 or 17, wherein the second carrier set comprises the at least one carrier whose SCS is the first SCS in the first carrier set; and further comprises sending and/or receiving an S-SSB only on a carrier in the second carrier set.

19. The apparatus according to any one of claims 16 to 18, wherein the second carrier set comprises the at least one carrier with the smallest SCS in the first carrier set; and

a start location and an end location of an S-SSB resource on each carrier in the first carrier set in time domain are within a first range, wherein the first range is a time domain range corresponding to an S-SSB resource on the at least one carrier with the smallest SCS in the first carrier set.

20. The apparatus according to any one of claims 16 to 19, wherein the second carrier set comprises the at least one carrier with the smallest SCS in the first carrier set; and

start locations of S-SSB resources on all carriers in the first carrier set are aligned in time domain; or
end locations of S-SSB resources on all carriers in the first carrier set are aligned in time domain.

21. The apparatus according to any one of claims 16 to 20, wherein the first resource and a second resource do not overlap in time domain, wherein the second resource comprises a resource on which the first terminal device receives an S-SSB; and/or

the first resource and a third resource do not overlap in time domain, wherein a sum of a number of carriers corresponding to the third resource and a number of carriers for simultaneously sending data and an S-SSB is greater than a maximum number of concurrently-transmitting carriers supported by the first terminal device.

22. The apparatus according to any one of claims 16 to 21, wherein the processing unit selects the first resource based on the first indication information, wherein the first resource and the fourth resource do not overlap in time domain; and/or the first resource and the fifth resource do not overlap in time domain.

23. A sidelink information transmission method, comprising: determining, by a first terminal device, a first resource pool and a fifteenth resource, wherein the fifteenth resource is for sending and/or receiving a sidelink synchronization signal block S-SSB;

selecting, by the first terminal device, at least one resource in the first resource pool to send data; and
creating, by the first terminal device, a first channel occupancy time COT based on the at least one selected resource.

24. The method according to claim 23, wherein the method further comprises: sending, by the first terminal device, an S-SSB on a first channel and/or at least one second channel on a first transmission occasion, wherein the first channel is determined based on a preconfigured frequency, and the at least one second channel comprises a channel in the first COT and/or a channel in a second COT, wherein the second COT is created by a second terminal device, or the at least one second channel comprises a channel other than the first channel in the first resource pool.

25. The method according to claim 23 or 24, wherein the method further comprises: sending, by the first terminal device, an S-SSB on at least one of a first sub-resource, a second sub-resource, and a third sub-resource, wherein

the first sub-resource is determined based on the preconfigured frequency, the second sub-resource is a resource that is other than the first sub-resource on the first channel determined based on the preconfigured frequency and that is for S-SSB transmission, the third sub-resource is a resource that is on the second channel and that is for S-SSB transmission, the second channel comprises at least one channel in the first COT and the second COT, and the second COT is created by the second terminal device.

26. The method according to claim 25, wherein the first terminal device sends an S-SSB on the first sub-resource by using a ninth power or a fourth power, wherein the ninth power is determined based on a maximum transmit power of the first terminal device and a fifth offset value, and the fourth power is determined based on a number of RBs used for each S-SSB; and

the first terminal device sends an S-SSB on the second sub-resource and the third sub-resource by using a tenth power or the fourth power, wherein the tenth power is determined based on the maximum transmit power of the first terminal device and a sixth offset value; or
the first terminal device sends an S-SSB on the first sub-resource and the second sub-resource by using a ninth power or a fourth power, wherein the ninth power is determined based on a maximum transmit power of the first terminal device and a fifth offset value, and the fourth power is determined based on a number of RBs used for each S-SSB; and
the first terminal device sends an S-SSB on the third sub-resource by using a tenth power or the fourth power, wherein the tenth power is determined based on the maximum transmit power of the first terminal device and a sixth offset value.

27. The method according to claim 25 or 26, wherein the first terminal device sends N S-SSBs; and when a total transmit power of the N S-SSBs is greater than a first power, allocates a transmit power in descending order of the following priorities, so that the total transmit power is not greater than the first power, wherein the first power is the maximum transmit power of the first terminal device:

an S-SSB located on the first sub-resource; and
an S-SSB located on the second sub-resource and/or the third sub-resource.

28. A sidelink information transmission method, comprising: receiving, by a third terminal device, data on at least one resource in a first resource pool; and/or
receiving and/or sending a sidelink synchronization signal block S-SSB on a fifteenth resource, wherein the first resource pool and the fifteenth resource are determined by a first terminal device.

29. The method according to claim 28, wherein the method further comprises: receiving, by the third terminal device, an S-SSB on a first channel and/or at least one second channel on a first transmission occasion, wherein the first channel is determined based on a preconfigured frequency, and the at least one second channel comprises a channel in a first channel occupancy time COT and/or a channel in a second COT, wherein the first COT is created by the first terminal device based on at least one selected resource, and the second COT is created by a second terminal device, or the at least one second channel comprises a channel other than the first channel in the first resource pool.

30. The method according to claim 28 or 29, wherein the method further comprises: receiving, by the third terminal device, an S-SSB on at least one of a first sub-resource, a second sub-resource, and a third sub-resource, wherein the first sub-resource is determined based on the preconfigured frequency, the second sub-resource is a resource that is other than the first sub-resource on the first channel determined based on the preconfigured frequency and that is for S-SSB transmission, the third sub-resource is a resource that is on the second channel and that is for S-SSB transmission, the second channel comprises at least one channel in the first COT and the second COT, the first COT is created by the first terminal device based on the at least one selected resource, and the second COT is created by the second terminal device.

31. An information transmission apparatus, comprising:

a processing unit, configured to determine a first resource pool and a fifteenth resource, wherein the fifteenth resource is for sending and/or receiving a sidelink synchronization signal block S-SSB, wherein the processing unit is further configured to: select at least one resource from the first resource pool, and create a first channel occupancy time COT based on the at least one selected resource; and
a sending unit, configured to send data on the at least one resource.

32. The apparatus according to claim 31, wherein the sending unit is further configured to send an S-SSB on a first channel and/or at least one second channel on a first transmission occasion, wherein the first channel is determined based on a preconfigured frequency, and the at least one second channel comprises a channel in the first COT and/or a channel in a second COT, wherein the second COT is created by a second terminal device, or the at least one second channel comprises a channel other than the first channel in the first resource pool.

33. The apparatus according to claim 31 or 32, wherein the sending unit is further configured to send an S-SSB on at least one of a first sub-resource, a second sub-resource, and a third sub-resource, wherein the first sub-resource is determined based on the preconfigured frequency, the second sub-resource is a resource that is other than the first sub-resource on the first channel determined based on the preconfigured frequency and that is for S-SSB transmission, the third sub-resource is a resource that is on the second channel and that is for S-SSB transmission, the second channel comprises at least one channel in the first COT and the second COT, and the second COT is created by the second terminal device.

34. The apparatus according to claim 33, wherein the sending unit is configured to: send an S-SSB on the first sub-resource by using a ninth power or a fourth power, wherein the ninth power is determined based on a maximum transmit power of the apparatus and a fifth offset value, and the fourth power is determined based on a number of RBs used for each S-SSB; and

send an S-SSB on the second sub-resource and the third sub-resource by using a tenth power or the fourth power, wherein the tenth power is determined based on the maximum transmit power of the apparatus and a sixth offset value; or

send an S-SSB on the first sub-resource and the second sub-resource by using a ninth power or a fourth power, wherein the ninth power is determined based on a maximum transmit power of the apparatus and a fifth offset value, and the fourth power is determined based on a number of RBs used for each S-SSB; and

send an S-SSB on the third sub-resource by using a tenth power or the fourth power, wherein the tenth power is determined based on the maximum transmit power of the apparatus and a sixth offset value.

35. The apparatus according to claim 33 or 34, wherein the sending unit is configured to send N S-SSBs; and the processing unit is configured to: when a total transmit power of the N S-SSBs is greater than a first power, allocate a transmit power in descending order of the following priorities, so that the total transmit power is not greater than the first power, wherein the first power is the maximum transmit power of the apparatus:

an S-SSB located on the first sub-resource; and
an S-SSB located on the second sub-resource and/or the third sub-resource.

36. An information transmission apparatus, comprising:

a receiving unit, configured to: receive data on at least one resource in a first resource pool; and receive a sidelink synchronization signal block S-SSB on a fifteenth resource; and
a sending unit, configured to receive and send an S-SSB on a fifteenth resource, wherein the first resource pool and the fifteenth resource are determined by a first terminal device.

37. The apparatus according to claim 36, wherein the receiving unit is configured to receive an S-SSB on a first channel and/or at least one second channel on a first transmission occasion, wherein the first channel is determined based on a preconfigured frequency, and the at least one second channel comprises a channel in a first channel occupancy time COT and/or a channel in a second COT, wherein the first COT is created by the apparatus based on at least one selected resource, and the second COT is created by a second apparatus, or the at least one second channel comprises a channel other than the first channel in the first resource pool.

38. The apparatus according to claim 36 or 37, wherein the receiving unit is configured to receive an S-SSB on at least one of a first sub-resource, a second sub-resource, and a third sub-resource, wherein the first sub-resource is determined based on the preconfigured frequency, the second sub-resource is a resource that is other than the first sub-resource on the first channel determined based on the preconfigured frequency and that is for S-SSB transmission, the third sub-resource is a resource that is on the second channel and that is for S-SSB transmission, the second channel comprises at least one channel in the first COT and the second COT, the first COT is created by the apparatus based on the at least one selected resource, and the second COT is created by the second apparatus, or the at least one second channel comprises the channel other than the first channel in the first resource pool.

39. A computer-readable storage medium, wherein the computer-readable storage medium stores a computer program; and when the computer program is run,

an apparatus is enabled to perform the method according to any one of claims 1 to 7;
an apparatus is enabled to perform the method according to any one of claims 8 to 15;
an apparatus is enabled to perform the method according to any one of claims 23 to 27; or
an apparatus is enabled to perform the method according to any one of claims 28 to 30.

40. A chip system, comprising a processor, configured to invoke a computer program from a memory and run the computer program,

to enable a communication apparatus on which the chip system is installed to perform the method according to any one of claims 1 to 7;
to enable a communication apparatus on which the chip system is installed to perform the method according to any one of claims 8 to 15;
to enable a communication apparatus on which the chip system is installed to perform the method according to any one of claims 23 to 27; or

to enable a communication apparatus on which the chip system is installed to perform the method according to any one of claims 28 to 30.

FIG. 1

FIG. 2

Sidelink

HUAWEI

FIG. 3

EP 4 572 499 A1

| | | | | | | | | | | | | | | | |
|---|---|---|---|---|---|---|---|---|---|---|---|---|---|---|---|
| 3 REs | | | | | | | | | | | | | | | |
| 11 RBs | 127 REs | PSBCH | SPSS | SPSS | SSSS | SSSS | PSBCH | PSBCH | PSBCH | PSBCH | PSBCH | PSBCH | PSBCH | PSBCH | GAP |
| 2 REs | | | | | | | | | | | | | | | |

FIG. 4

| | |
|---|---|
| ⊠ Interlace 4 | Interlace 4 |
| ⊠ Interlace 3 | Interlace 3 |
| ⊞ Interlace 2 | Interlace 2 |
| ⊘ Interlace 1 | Interlace 1 |
| ☐ Interlace 0 | Interlace 0 |

FIG. 5

RB set #4

Guard band #3

RB set #3

Guard band #2

RB set #2

Guard band #1

RB set #1

FIG. 6

<u>100</u>

S110: A first terminal device determines a resource pool corresponding to each of at least two carriers in a first carrier set

S120: The first terminal device selects a first resource from the first resource pool

S130: The first terminal device sends data on the first resource

FIG. 7

200

```
┌──────────────┐                                      ┌──────────────┐
│ First terminal│                                     │Second terminal│
│    device     │                                     │    device     │
└──────┬───────┘                                      └──────┬───────┘
       │                                                     │
┌──────┴─────────────────────────────┐                       │
│ S210: Determine a resource pool     │                      │
│ corresponding to each of at least two│                     │
│ carriers in a first carrier set     │                       │
└──────┬─────────────────────────────┘                       │
       │           S220: Send first indication information    │
       │ ◄───────────────────────────────────────────────────│
┌──────┴──────────────────────────────────────────┐          │
│ S230: Select a first resource from the resource pool│       │
└──────┬──────────────────────────────────────────┘          │
       │                                                     │
┌──────┴──────────────────────────────┐                      │
│ S240: Send data on the first resource│                      │
└─────────────────────────────────────┘                      │
```

FIG. 8

300

```
┌──────────────┐                                      ┌──────────────┐
│ First terminal│                                     │Second terminal│
│    device     │                                     │    device     │
└──────┬───────┘                                      └──────┬───────┘
       │                                                     │
┌──────┴─────────────────────────┐                          │
│ S310: Determine a resource pool │                         │
│ corresponding to each of at least│                        │
│ two carriers in a first carrier set│                      │
└──────┬─────────────────────────┘                          │
┌──────┴─────────────────────────┐                          │
│ S320: Select a sixth resource from the resource│           │
│       pool for reservation      │                         │
└──────┬─────────────────────────┘                          │
       │    S330: Send first reservation information         │
       │ ───────────────────────────────────────────────────►
       │                               ┌─────────────────────┴────────────┐
       │                               │ S340: Determine whether a conflict occurs│
       │                               └─────────────────────┬────────────┘
       │      S350: Send conflict indication information      │
       │ ◄───────────────────────────────────────────────────│
┌──────┴───────────────────────────┐                         │
│ S360: Re-select a first resource  │                        │
└──────┬───────────────────────────┘                         │
┌──────┴───────────────────────────┐                         │
│ S370: Send data on the first resource│                      │
└───────────────────────────────────┘                        │
```

FIG. 9

| Carrier A | | | | S-SSB | ////// | ////// | | |
| Carrier B | | | ////////// | ////////// | S-SSB | | | |

Time

FIG. 10

| Carrier A | | | S-SSB | | | | | |
| Carrier B | | | S-SSB | | | | | |
| Carrier C | | | S-SSB | | | | | |

Time

FIG. 11

| Carrier A | | | S-SSB | | | | | |
| Carrier B | | | | S-SSB | | | | |
| Carrier C | | | | S-SSB | | | |

Time

FIG. 12

| Carrier A | | | S-SSB | | | | | |
| Carrier B | | | | S-SSB | | | | |
| Carrier C | | | | S-SSB | | | | |

Time

FIG. 13

| Carrier A | | S-SSB | S-SSB | | | | | |
| Carrier B | | S-SSB | S-SSB | | | | | |
| Carrier C | | S-SSB | | | | | |

Time

FIG. 14

| Carrier A | | | S-SSB | | | | | |
| Carrier B | | | S-SSB | | | | | |
| Carrier C | | | S-SSB | | | |

Time

FIG. 15

| Carrier A | | | | S-SSB | | | | |
| Carrier B | | | | S-SSB | | | | |
| Carrier C | | | S-SSB | | | |

Time

FIG. 16

400

| S410: A first terminal device determines a resource pool corresponding to each of at least two carriers in a first carrier set |

| S420: The first terminal device selects a resource from the resource pool |

| S430: The first terminal device sends or receives data and an S-SSB |

| S440: Back off a transmit power or discard a transmission |

FIG. 17

RB set #2

Division line
GB

RB set #1

Interlace 4
Interlace 3
Interlace 2
Interlace 1
Interlace 0

FIG. 18

RB set #2

Guard
band

RB set #1

Common interlace
RB 2
RB 1

FIG. 19

EP 4 572 499 A1

FIG. 20

FIG. 21

75

RB set #2

Guard
band

RB set #1

Common interlace 1
Common interlace 2

FIG. 22

RB set #2

Guard
band

RB set #1

Common interlace 2
Common interlace 1
RB 2
RB 1

FIG. 23

FIG. 24

FIG. 25

FIG. 26

FIG. 27

## INTERNATIONAL SEARCH REPORT

| International application No. |
| --- |
| **PCT/CN2023/117292** |

**A.    CLASSIFICATION OF SUBJECT MATTER**

H04W 72/40(2023.01)i

According to International Patent Classification (IPC) or to both national classification and IPC

**B.    FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, VEN, EPTXT, USTXT, WOTXT, CNKI, 3GPP: 重叠, 冲突, 侧行, 侧链, 旁链, 同步信号快, 创建, 对应, 载波, 资源, 资源池, collide, collision, overlap, SSB, sidelink, SL, resource, pool, carrier

**C.    DOCUMENTS CONSIDERED TO BE RELEVANT**

| Category* | Citation of document, with indication, where appropriate, of the relevant passages | Relevant to claim No. |
| --- | --- | --- |
| X | CN 112997551 A (OPPO GUANGDONG MOBILE TELECOMMUNICATIONS CO., LTD.) 18 June 2021 (2021-06-18) description, paragraphs [0029]-[0150] | 23-40 |
| Y | CN 112997551 A (OPPO GUANGDONG MOBILE TELECOMMUNICATIONS CO., LTD.) 18 June 2021 (2021-06-18) description, paragraphs [0029]-[0150] | 1-22, 39-40 |
| X | CN 112564865 A (KT CORP.) 26 March 2021 (2021-03-26) description, paragraphs [0033]-[0340] | 23-40 |
| Y | CN 112564865 A (KT CORP.) 26 March 2021 (2021-03-26) description, paragraphs [0033]-[0340] | 1-22, 39-40 |
| Y | CN 112188633 A (OPPO GUANGDONG MOBILE TELECOMMUNICATIONS CO., LTD.) 05 January 2021 (2021-01-05) description, paragraphs [0044]-[0498] | 1-22, 39-40 |
| Y | CN 109391972 A (JRD COMMUNICATION (SHENZHEN) INC.) 26 February 2019 (2019-02-26) description, paragraphs [0029]-[0176] | 1-22, 39-40 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 November 2023** | **18 November 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/117292**

| Patent document cited in search report | | | Publication date (day/month/year) | Patent family member(s) | | | Publication date (day/month/year) |
|---|---|---|---|---|---|---|---|
| CN | 112997551 | A | 18 June 2021 | WO | 2020191769 | A1 | 01 October 2020 |
| CN | 112564865 | A | 26 March 2021 | US | 2021099994 | A1 | 01 April 2021 |
| | | | | US | 11589349 | B2 | 21 February 2023 |
| CN | 112188633 | A | 05 January 2021 | SG | 11202011076 | TA | 30 December 2020 |
| | | | | WO | 2019214301 | A1 | 14 November 2019 |
| | | | | AU | 2019267579 | A1 | 03 December 2020 |
| | | | | WO | 2019214135 | A1 | 14 November 2019 |
| | | | | US | 2021051675 | A1 | 18 February 2021 |
| | | | | JP | 2021523615 | A | 02 September 2021 |
| | | | | WO | 2019214184 | A1 | 14 November 2019 |
| | | | | EP | 3793296 | A1 | 17 March 2021 |
| | | | | EP | 3793296 | A4 | 07 July 2021 |
| | | | | EP | 3793296 | B1 | 05 July 2023 |
| | | | | KR | 20210008357 | A | 21 January 2021 |
| | | | | BR | 112020022641 | A2 | 02 February 2021 |
| CN | 109391972 | A | 26 February 2019 | WO | 2019033609 | A1 | 21 February 2019 |
| | | | | EP | 3665988 | A1 | 17 June 2020 |
| | | | | EP | 3665988 | A4 | 05 May 2021 |
| | | | | US | 2020187162 | A1 | 11 June 2020 |
| | | | | US | 11363568 | B2 | 14 June 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211214201
- CN 202310540923